# EUROPEAN PATENT APPLICATION

(11) **EP 4 534 577 A1**
(43) Date of publication of application: **09.04.2025**
(21) Application number: 23201474.6
(22) Date of filing: 03.10.2023
(51) Int. Cl.: C08G 18/24, C08G 18/73, C08G 18/48

(54) **NON-TOXIC LATENT POLYMERIZATION CATALYSTS FOR POLYURETHANES BASED ON TIN (IV) CHELATE COMPLEXES**

(71) Applicant: Tech Synt Ltd, London EC1V 2NX (GB)
(72) Inventor: Nechaev, Mikhail, 115147 Moscow (RU)
(74) Representative: Keller Schneider Patent- und Markenanwälte AG

(57) **Abstract**

A tin catalyst for polyurethane synthesis has a structure according to the following formula (I):

SnX¹ₙ₁X²ₙ₂(L¹)ₙ₃(L²)ₙ₄ (I)

whereby:
each X¹ and each X² independently of each other stands for an anionic ligand, in particular a monovalent anionic ligand, especially selected from halides, hydroxides, oxygen, sulfur, alcoholates, thiolates and/or carboxylates, optionally with a saturated or unsaturated, cyclic or acyclic, branched or unbranched, substituted or unsubstituted hydrocarbon residue, whereby the hydrocarbon residues may be interrupted by heteroatoms;
n 1 and n2 independently of each other is 0, 1 or 2; especially the sum of n 1 and n2 is 0, 1 or 2;
each L¹ and each L² independently of each other stand for a polydentate chelating ligand having form 6-50 carbon atoms, and
at least one phenoxy group forming a covalent Sn-O bond, especially 2, 3 or 4 phenoxy groups each forming a covalent Sn-O bond;
at least one amine and/or imine group, in particular forming a coordination bond with Sn, especially 2 amine and/or imine group each forming a coordination bond with Sn;

n3 is 1 or 2 and n4 is 0, 1 or 2;
and whereby X¹, X², L¹ and L² are chemically different from each other.

## Description

### Technical field

The invention relates to tin catalysts for polyurethane synthesis. A further aspect of the invention is related to a method for producing a polyurethane product whereby at least one polyisocyanate and at least NCO-reactive compound, especially at least one polyol, is reacted in the presence of a tin catalyst. Also, the invention is concerned with composition comprising at least one Polyisocyanate, at least NCO-reactive compound and a tin catalyst as well as with the use of a tin catalyst as a catalyst in the synthesis of polyurethanes.

### Background art

Polyurethanes commonly are formed through the reaction between isocyanates and polyols, often in the presence of a catalyst. Polyurethanes are considered alternating copolymers because they consist of two types of monomers that polymerize sequentially. Both the isocyanates and polyols employed in the production of polyurethanes possess multiple functional groups, i.e. two or more functional groups, within each molecule.

The most common catalysts (by tonnage) for the synthesis of polyurethanes are tertiary amines and ammonium salts. These catalysts exhibit a unique characteristic wherein they not only accelerate the formation of urethane bonds but also promote the reaction between isocyanates and water, resulting in the generation of carbon dioxide and foam formation. However, these catalysts have some drawbacks, such as being volatile and environmentally unfriendly, having an inconsistent foaming performance, and featuring a lower activity when aliphatic isocyanates are utilized (Ana L. Silva & João C. Bordado (2004): Recent Developments in Polyurethane Catalysis: Catalytic Mechanisms Review, Catalysis Reviews: Science and Engineering, 46:1, 31-51).

Other very common catalysts for the synthesis of polyurethanes are organometallic compounds, primarily tin-organic substances that are alkyl or aryl complexes of halides, oxides, or tin (IV) alkoxides, or tin (II) carboxylates. In addition, mercury compounds are also quite active. A special feature of these catalysts is their increased tendency to gelation in the synthesis of polyurethane relative to amine catalysts. Also, one can use them to get non-foamed products. In addition, these compounds are extremely active in synthesis reactions with aliphatic isocyanates, which, in turn, are more resistant to ultraviolet radiation.

With the exception of low-toxic tin (II) carboxylates, the main disadvantage of such catalysts is their extreme toxicity, especially for marine organisms. Although toxicity is not an issue with low-toxic tin (II) carboxylates, these catalysts however are easily oxidized and hydrolyzed by moisture in the air (Ana L. Silva & João C. Bordado (2004): Recent Developments in Polyurethane Catalysis: Catalytic Mechanisms Review, Catalysis Reviews: Science and Engineering, 46:1, 31-51).

Of particular interest are not only catalysts that catalyse only one reaction in defined manner but catalysts that additionally become selectively active and catalyse reactions only under certain conditions. In such cases, one speaks of switchable catalysts. These switchable catalysts are, in turn, subdivided into thermally, photochemically or optically switchable catalysts. Generally in this connection one also speaks of latent catalysts, and, in the thermal case, of thermolatent catalysts. These catalysts are idle until the reaction mixture reaches a certain temperature. Above this temperature they are then active, preferably instantaneously active. These latent catalysts enable long pot lives and fast demoulding-times.

In this regard, WO 2009/132784 A1 (Bayer Materialscience AG) describes for example a process for preparing polyisocyanate polyaddition products wherein polyisocyanates (a) are converted with NCO-reactive compounds (b) in the presence of latent catalysts (c) and, optionally, additional catalysts and/or activators different from (c) with addition of, optionally, blowing agents, optionally fillers and/or fibrous materials and, optionally, auxiliary substances and/or additives. Thereby, the latent catalysts are based on tetravalent tin compounds with at least one ligand bonded via at least one oxygen atom or sulfur atom and containing at least one nitrogen atom. Specifically, the ligands proposed are alkoxy based or amino alcohol based compounds.

However, such kind of catalysts are highly susceptible to hydrolysis by moisture. Also, when aliphatic polyols are used in polyurethane synthesis, the aliphatic alcohols can lead to alcoholysis which in turn leads to a release of ligands from the tin compound. Therefore, the activity of the catalysts strongly depend on the reaction conditions, especially on humidity and temperature.

Thus, there is still a need to develop improved solutions, which at least partly overcome the disadvantages mentioned above.

### Summary of the invention

It is the object of the invention to provide improved catalysts for polyurethane synthesis. Especially, the catalysts should have thermolatent properties and be as stable as possible, especially under humid conditions. Further preferred, the catalysts should have an activity as constant as possible and be suitable for use with aliphatic polyols.

The solution of the invention is specified by the features of claim 1. Therefore, a core of the present invention is directed to a tin catalyst for polyurethane synthesis, the catalyst having a structure according to the following formula (I):

SnX¹ₙ₁X²ₙ₂(L¹)ₙ₃(L²)ₙ₄ (I)

whereby:
each X¹ and each X² independently of each other stands for an anionic ligand, in particular a monovalent anionic ligand, especially selected from halides, hydroxides, oxygen, sulfur, alcoholates, thiolates and/or carboxylates, optionally with a saturated or unsaturated, cyclic or acyclic, branched or unbranched, substituted or unsubstituted hydrocarbon residue, whereby the hydrocarbon residues may be interrupted by heteroatoms;
n 1 and n2 independently of each other is 0, 1 or 2; especially the sum of n 1 and n2 is 0, 1 or 2;
each L¹ and each L² independently of each other stand for a polydentate chelating ligand having form 6-50 carbon atoms, and
   at least one phenoxy group forming a covalent Sn-O bond, especially 2, 3 or 4 phenoxy groups each forming a covalent Sn-O bond;
   at least one amine and/or imine group, in particular forming a coordination bond with Sn, especially 2 amine and/or imine group each forming a coordination bond with Sn;
n3 is 1 or 2 and n4 is 0, 1 or 2;
and whereby X¹, X², L¹ and L² are chemically different from each other.

Surprisingly, it was found that tin catalysts according to the invention can be used as highly beneficial thermolatent catalysts for polyurethane synthesis, in particular for catalyzing the polyaddition reaction of polyisocyanates with NCO-reactive compounds, especially polyols. This in particular also with aliphatic polyols.

Especially, the catalysts according to the invention are very stable against moisture and show a rather constant activity in wide temperature ranges and under varying moisture contents. Especially, the catalysts according to the invention, even when used in air, are highly effective at low dosages.

Remarkably, the catalysts according to the invention are much more stable when compared with analogue catalysts not having phenoxy and/or amine/imine groups, such as e.g. catalysts only having alkoxy based or amino alcohol based ligands.

Without wishing to be bound by the theory, it is assumed that the better stability in air with respect to hydrolysis is due to the fact that phenols are stronger acids than aliphatic alcohols. Thus, tin-ligand bonds will be stronger and less polarized in case of phenoxy ligands. This leads to better stability towards hydrolysis due to less advantageous thermodynamics and kinetics of hydrolysis.

Furthermore, the ligands L¹ and L² presumably have a more rigid ligand back-bone, and therefore a better stability and higher latency of complexes is obtained. In particular, the higher rigidity of phenoxy-type ligands in comparison with aliphatic counterparts leads to higher energy barrier of any chemical reactions. Thus, there will be higher stability of the latent catalysts in the prepolymer, and higher temperature will be needed for thermal activation of the latent catalyst. This is especially important when complex parts are produced by pouring a prepolymer in a mold, which should be filled uniformly, with no bubbles and voids. Any polymerization prior to thermal activation is highly undesired. Thus, utilization of phenoxy-type ligands according to the invention is believed to be much more beneficial in terms of industrial applications.

Also, the phenoxy-type ligands according to the invention hardly are susceptible to alcoholysis when aliphatic alcohols are used as polyols in the polyurethane synthesis. Therefore, ligand release is much less an issue with the tin complexes according to the invention.

Especially, the catalysts according to the invention lead to:
a) a better defined structure of the catalytic center with defined electronic, steric, and topological properties;
b) a better controlled polymerization: repeated activity, reproducibility upon scale-up;
c) a better neutralization of the tin complex after completion of the reaction: After polymerization, the tin complex remains in the polymer. If the ligand is not attached to the tin, then the tin complex may later be active in the disposal of the resulting material, which will lead to depolymerization, discoloration, etc. Phenoxy-ligands according to the invention hardly are released from the tin complex due to the absence of alcoholysis effectively deactivate tin, which leads to an improvement in the characteristics of the resulting material.

Further aspects of the invention are the subject matter of other independent claims. Especially preferred embodiments of the invention are outlined throughout the description or the subject matter of the dependent claims.

In the present context, substance names beginning with "poly", such as e.g. polyol or polyisocyanate, designate substances which formally contain, per molecule, two or more of the functional groups occurring in their names. A polyol is e.g. a substance having two or more hydroxyl groups. A polyisocyanate is e.g. a substance having two or more NCO groups.

Likewise a "polydentate ligand" is a ligand capable or forming 2, 3 or more (coordination) bonds to a central atom, i.e. Sn in the present case. A "monodentate ligand" is a ligand that can only form one (coordination) bond with a central atom.

Especially, the tin catalyst is thermolatent catalyst, in particular being active in the temperature range of 60 to 120°C, preferably 80 to 100°C.

In particular, the tin catalyst is a tin(IV) complex, i.e. a complex with tin being present in oxidation state +IV. Thus, the ligands preferably are chosen accordingly to obtain tin in oxidation state +IV.

Especially, the tin catalyst is a mononuclear tin complex having one Sn center. In terms of activity and stability of the catalysts, mononuclear tin complexes have proven to be particularly advantageous.

The anionic ligand X¹ and/or X² in particular is/are selected from halides, hydroxides, oxygen, sulfur, alcoholates, thiolates and/or carboxylates, optionally with saturated or unsaturated, cyclic or acyclic, branched or unbranched, substituted or unsubstituted hydrocarbon residues, whereby the hydrocarbon residues may be interrupted and/or substituted by heteroatoms. Thereby, the number of carbon atoms of the hydrocarbon residues may be in the range of 1 - 50, especially 1 - 20, in particular 1 - 10 or 1 - 4. The heteroatoms in particular are selected from nitrogen, oxygen, phosphor, sulfur, or a group of these heteroatoms, e.g. -NO₂

Especially, X¹ and/or X² stand(s) for O-R or OOC-R with R = C, - C₁₀ alkyl group, in particular a C₁ - C₄ alkyl group, especially a tert-butyl group or a methyl group. In combination with the polydentate ligands L¹ and/or L², such anionic ligands turned out to be highly beneficial.

In particular, the chelating ligand L¹ and/or L² comprises:
- 3 phenoxy groups each forming a covalent Sn-O bond and 1 amine or imine group forming a N -> Sn coordination bond (also referred to as "3+1 ligand"); or
- 2 phenoxy groups each forming a covalent Sn-O bond and 2 similar amine or imine groups each forming an N -> Sn coordination bond (also referred to as "2+2 ligand"); or
- 2 phenoxy groups each forming a covalent Sn-O bond, 1 amine or imine group forming a N -> Sn coordination bond, and 1 alkoxy group or 1 different amine group forming an O → Sn or an additional N → Sn coordination bond (also referred to as "2+1+1 ligand"); or
- 2 phenoxy groups each forming a covalent Sn-O bond and 1 amine or imine group forming an N → Sn coordination bond (also referred to as "2+1 ligand"); or
- 1 phenoxy group forming a covalent Sn-O bond and 1 amine or imine group forming an N → Sn coordination bond (also referred to as "1+1 ligand").

With such ligands, the advantages of the invention come into play to a particular extent. However, e.g. for special applications, other configurations are possible as well.

In a special embodiment, n2 = n4 = 0. In this case, the tin catalyst comprises only one type of polydentate ligand L¹ and optionally one type of anionic ligand X¹. Thereby, there might be exactly one polydentate ligand L¹ or several polydentate ligands L¹ (if n3 > 1). Likewise, there might be exactly one anionic ligand X¹ or several anionic ligands X¹ (if n 1 > 1).

The at least one amine and/or imine group of the chelating ligand L¹ and/or L² in a beneficial embodiment is an amine group, in particular a secondary and/tertiary amine group.

In another preferred embodiment, the at least one amine and/or imine group of the chelating ligand L¹ and/or L² is an imine group, in particular a secondary imine, especially a secondary aldimine and/or a secondary ketamine.

An imine typically has a structure according to the following formula: (R^{u})(R^{v})C=N-R^{w}. R^{u}, R^{v}, and R^{w} may be different or identical organic radicals, including hydrogen atoms. In particular, with secondary imines, group R^{w} is different from a hydrogen atom. In an aldimine, one of R^{u} and R^{v} is a hydrogen atom, whereas in a ketimine none of R^{u} and R^{v} is a hydrogen atom.

In particular the least one amine and/or imine group is capable of forming a coordination bond with Sn, especially 2 amine and/or imine groups are present whereby each of the amine and/or imine groups is capable of forming a coordination bond with Sn.

Especially, the chelating L¹ and/or L² comprises a structure according to the formula O-Ph-Y whereby O-Ph and Ph-O stands for a substructure with the following formula (II): 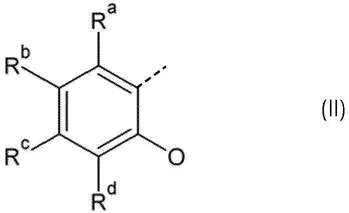 whereby
each R^{a}, R^{b}, R^{c} and R^{d} independently of each other stands for H, one or more heteroatoms, a C1 - C10 alkyl group, especially a C1 - C4 alkyl group, whereby the alkyl group may
optionally comprise one or more heteroatoms; the heteroatoms in particular are selected from nitrogen, oxygen, phosphor, sulfur, or a group of these heteroatoms, e.g. -NO₂;
Y stands for one of the following definitions:
   -N(Ph-O)₂ or -R1-N(Ph-O)₂
   -C(R2)=N-R3-N=C(R2)-Ph-O
   -C(R2)(R4)-N(R2)-R3-N(R2)-C(R2)(R4)-Ph-O

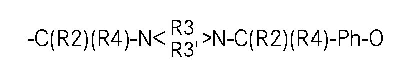

   -C(R2)(R4)-N(R5)-C(R2)(R4)-Ph-O
   -C(R2)(R4)-N(R2)-R1-O or-C(R2)=N-R1-O
   -C(R2)(R4)-N(R2)-C(R2)(R4)-Ph-O
   -N=C(R2)-Ph-O
   -C(R2)(R4)-N(R2)(R4)
   -C(R2)=N(R2)
   where R1 = C1 - C4 alkylene group;
   R2 independently of each other is H or C1 - C4 alkyl;
   R3, R3' = C2-C20 alkylene group, cycloalkylene group, arylene group or aralkylene group;
   R4 independently of each other is H or C1 - C4 alkyl;
   R5 = -B-D or picolydene, where D = -N(R2)₂ or -OR2.

In a highly preferred embodiment, two of R^{a}, R^{b}, R^{c} and R^{d} stand for H and the other two of R^{a}, R^{b}, R^{c} and R^{d} are not H, preferably methyl, t-butyl or-NO₂. Thereby, preferably, the other two of R^{a}, R^{b}, R^{c} and R^{d} that are not H, relative to each other, form a meta-substitution pattern.

This turned out to be a highly beneficial substitution pattern for the catalysts according to the invention.

According to a highly preferred embodiment, the chelating ligand L¹ and/or L² is a substituted or unsubstituted salen ligand; or a substituted or unsubstituted salalen ligand; or a substituted or unsubstituted salan ligand.

"Salen" stands for N,N'-ethylenebis(salicylimine) (CAS no. 129409-01-4). Salen is tetradentate C2-symmetric ligand based on salicylaldehyde (sal) and ethylenediamine (en). The salen ligand may be substituted with saturated or unsaturated, cyclic or acyclic, branched or unbranched, hydrocarbon residues, whereby the hydrocarbon residues may be interrupted and/or substituted by heteroatoms. Thereby, the number of carbon atoms of the hydrocarbon residues may be in the range of 1 - 50, especially 1 - 20, in particular 1 - 10 or 1 - 4. The heteroatoms in particular are selected from nitrogen, oxygen, phosphor, sulfur, or a group of these heteroatoms, e.g. -NO₂.

The "salan" and "salalen" ligands are similar in structure to salen ligands, but (i) instead of two imine groups they have one saturated C-N group and one imine group (salalene) or (ii) instead of two imine groups they have two saturated C-N groups (salan).

Such kind of ligands have shown to be highly advantageous when used as ligands in the present context. This might be due to the fact that these ligands have a rather stable backbone and well-defined structure for coordinating the Sn while maintaining a rather high activity with respect to the catalysis of polyurethane systems.

Especially, the catalyst has a structure according to the following formulas (III), (IV) (V), (VI), (VII), (VIII), (IX), (X), (XI), (XII), (XIII), and/or (XIV):

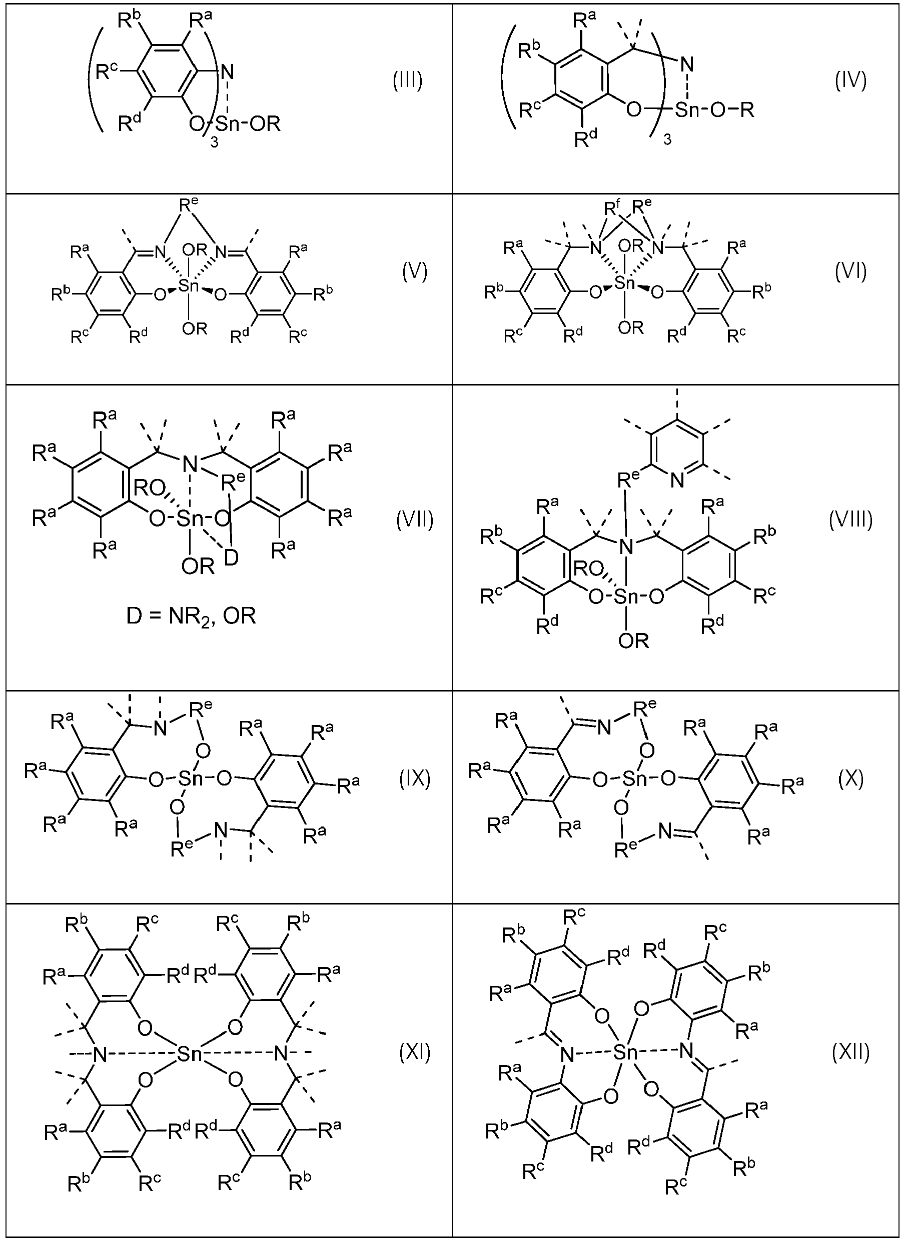

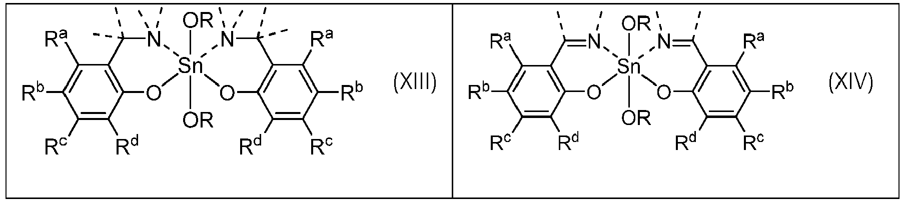

whereby
each R independently of each other stands for C, - C₁₀ alkyl group, in particular a C₁ - C₄ alkyl group, especially a tert-butyl group or a methyl group
each R^{a}, R^{b}, R^{c} and R^{d} independently of each other stands for H, one or more heteroatoms, a C1 - C10 alkyl group, especially a C1 - C4 alkyl group, whereby the alkyl may optionally comprise one or more heteroatoms; the heteroatoms in particular are selected from nitrogen, oxygen, phosphor, sulfur, or a group of these heteroatoms, e.g. -NO₂;
each R^{e} and R^{f} independently of each other stands for a C₁ - C₁₀ alkylene group, especially a C₁ - C₂alkylene group;
and each of the dashed bonds with free ends independently of each other stands for H, one or more heteroatoms, a C₁ - C₂₀ alkyl group, a C₆ - C₂₀ cycloalkyl group, a C₆ - C₂₀ alkaryl or aryl group, whereby the alkyl group, cycloalkyl group, aryl group and aralkyl group may optionally comprise one or more heteroatoms; the heteroatoms in particular are selected from nitrogen, oxygen, phosphor, sulfur, or a group of these heteroatoms, e.g. -NO₂.

In particular each of the dashed bonds with free ends, R^{a}, R^{b}, R^{c} and/or R^{d} independently of each other stands for H, a C₁ - C₄ alkyl group, a C₆ - C₁₀ alkaryl or aryl group.

Especially, each of the dashed bonds with free ends, R^{a}, R^{b}, R^{c} and/or R^{d} independently of each other stands for H, a methyl group, an isobutyl group, an aryl group, a cyclohexyl group and/or an alkyl substituted pyridine.

Especially, the catalyst has a structure according to the formulas listed in the following tables, especially formulas (IIIa), (IVa - f) (Va - s), (Via - p), (VIIa - I<), (Villa - c), (IXa - c), (Xa - c), (XIa - b), (XIIa - c), (XIIIa - b), and/or (XIVa - j):

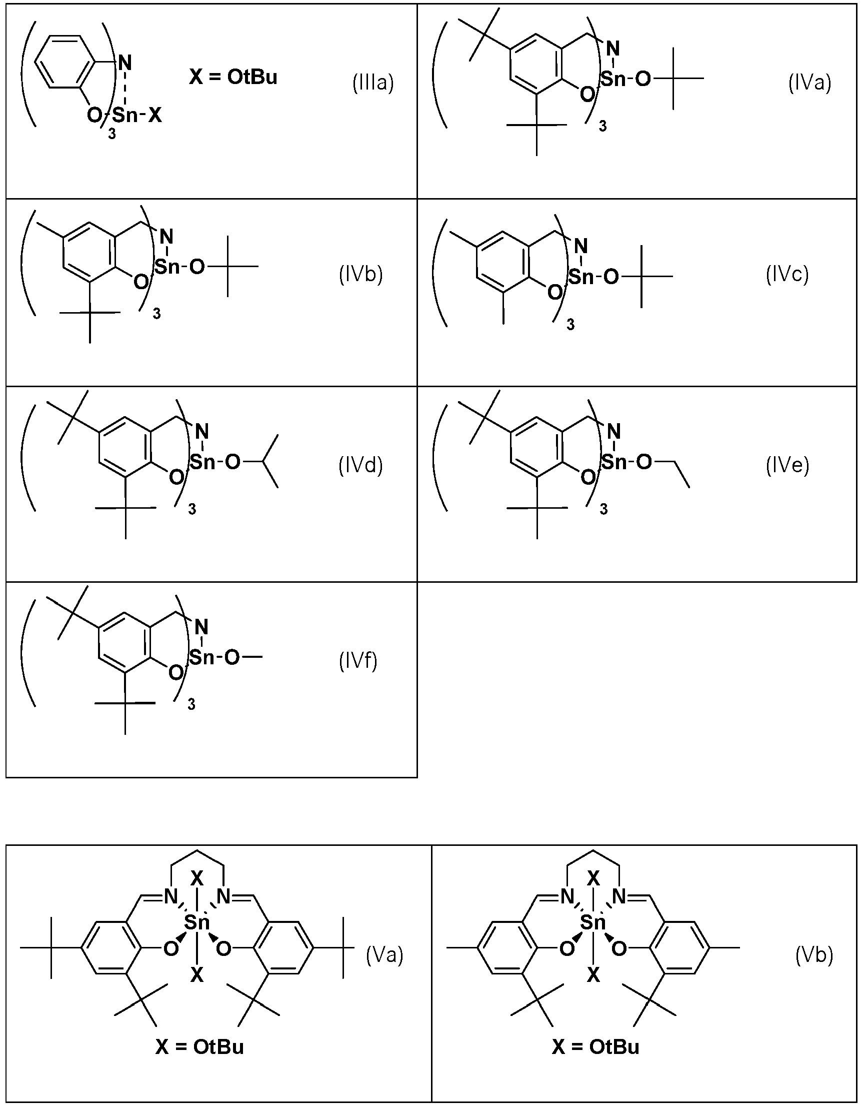

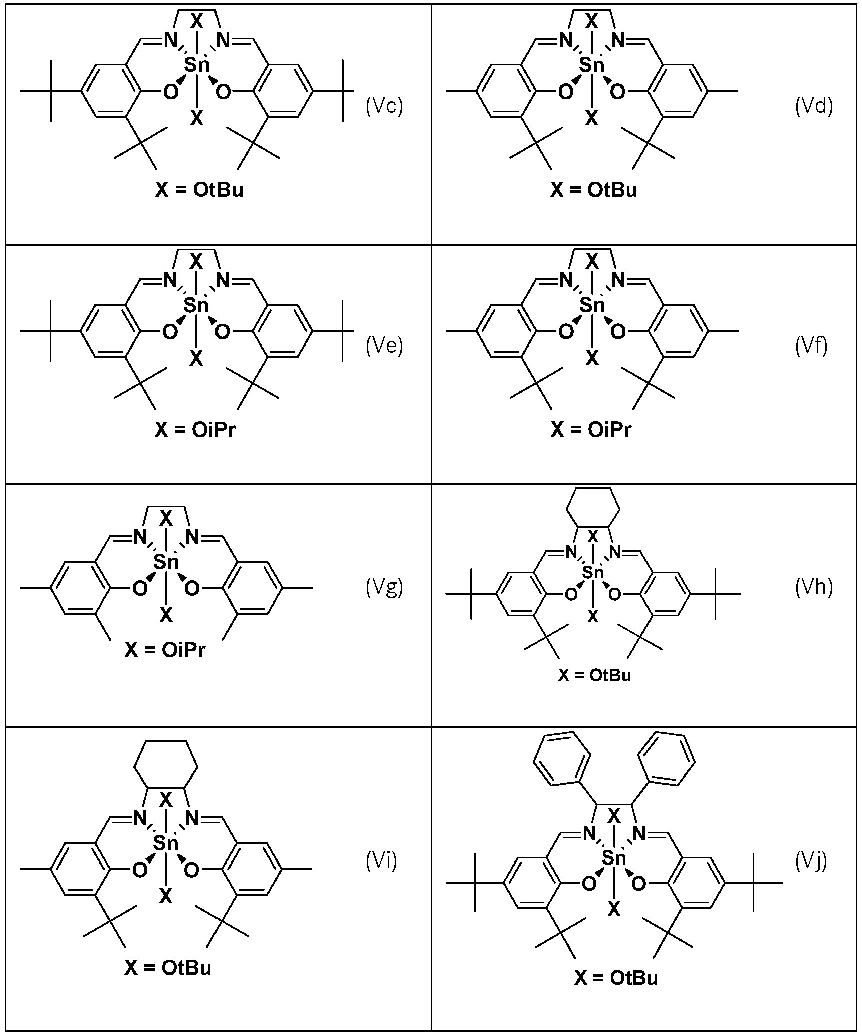

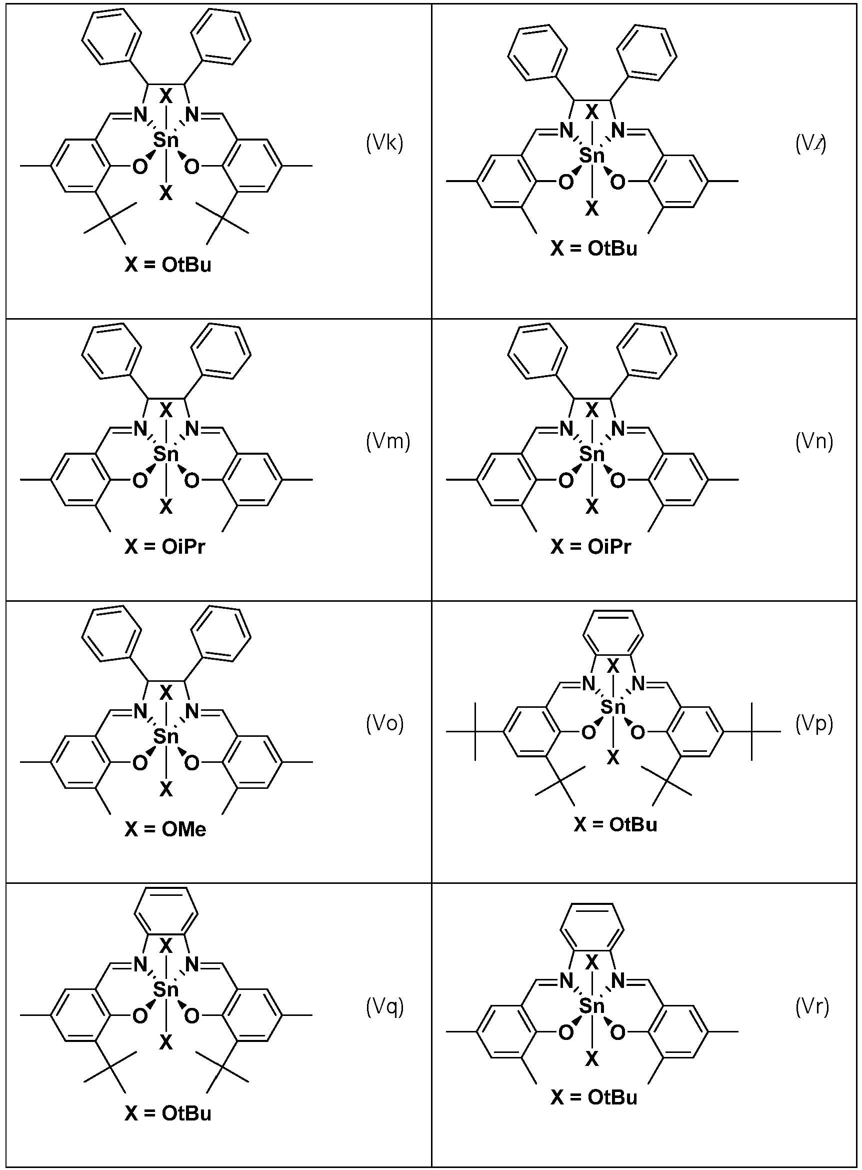

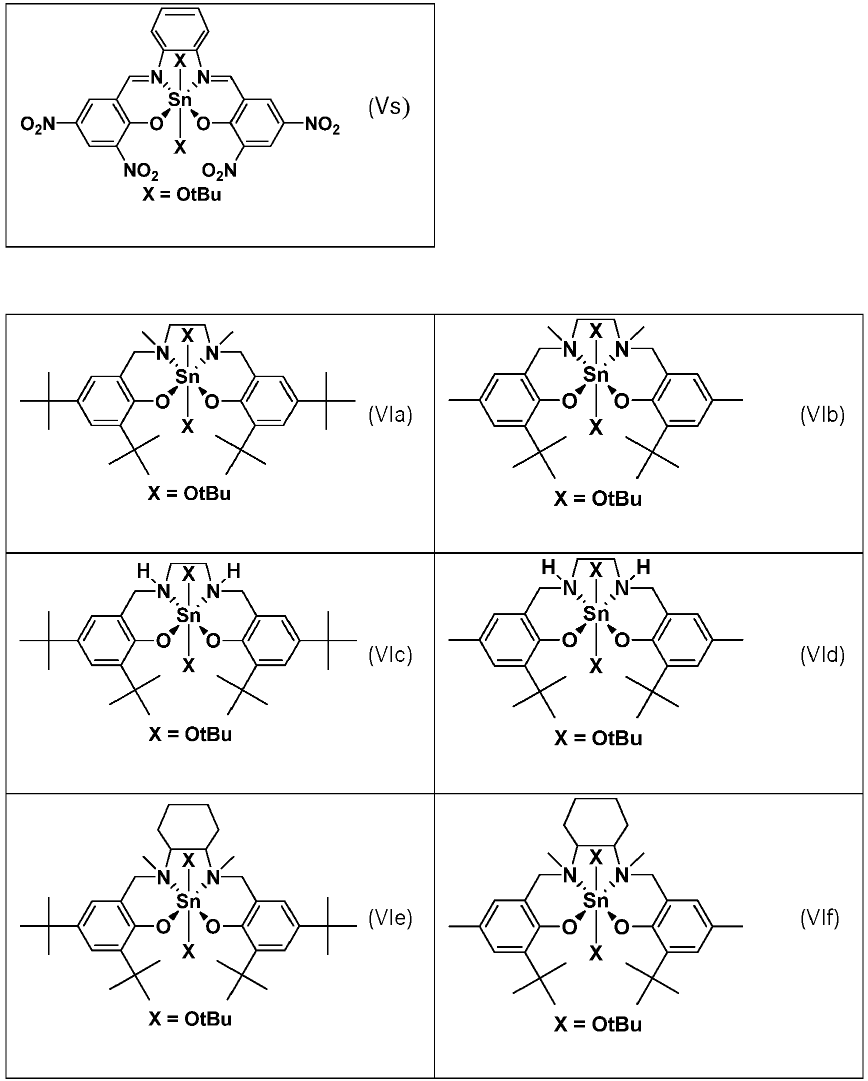

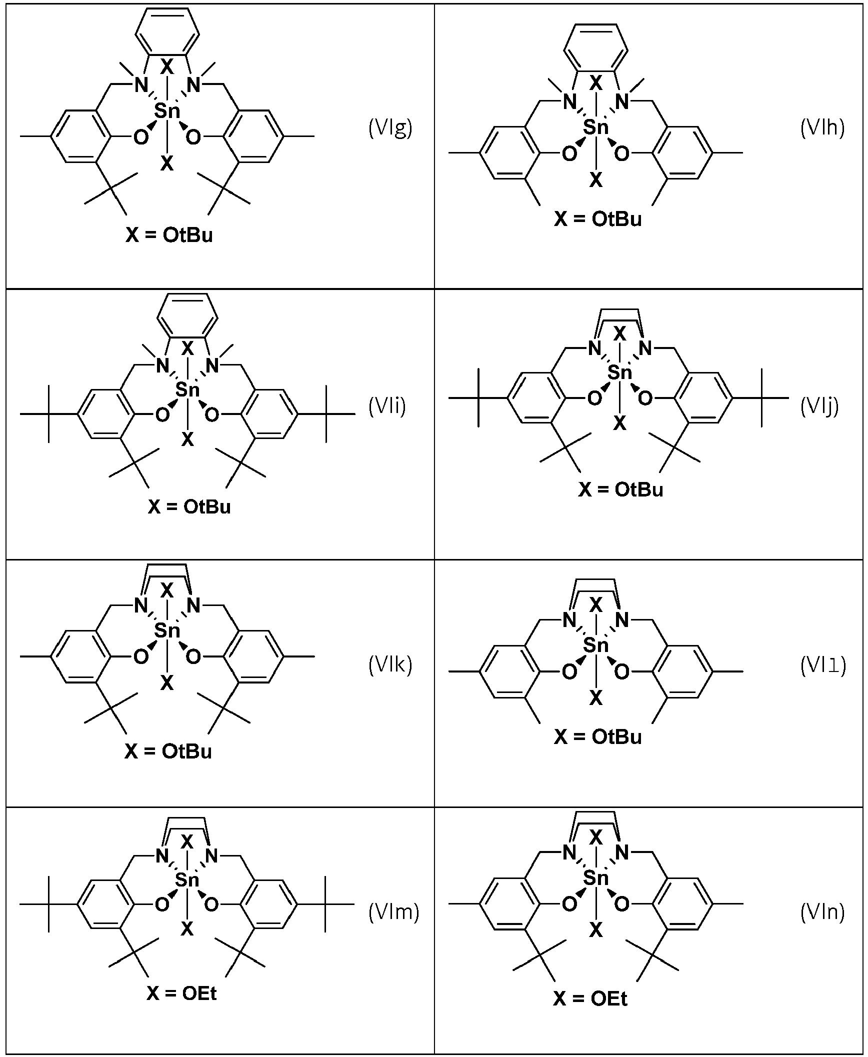

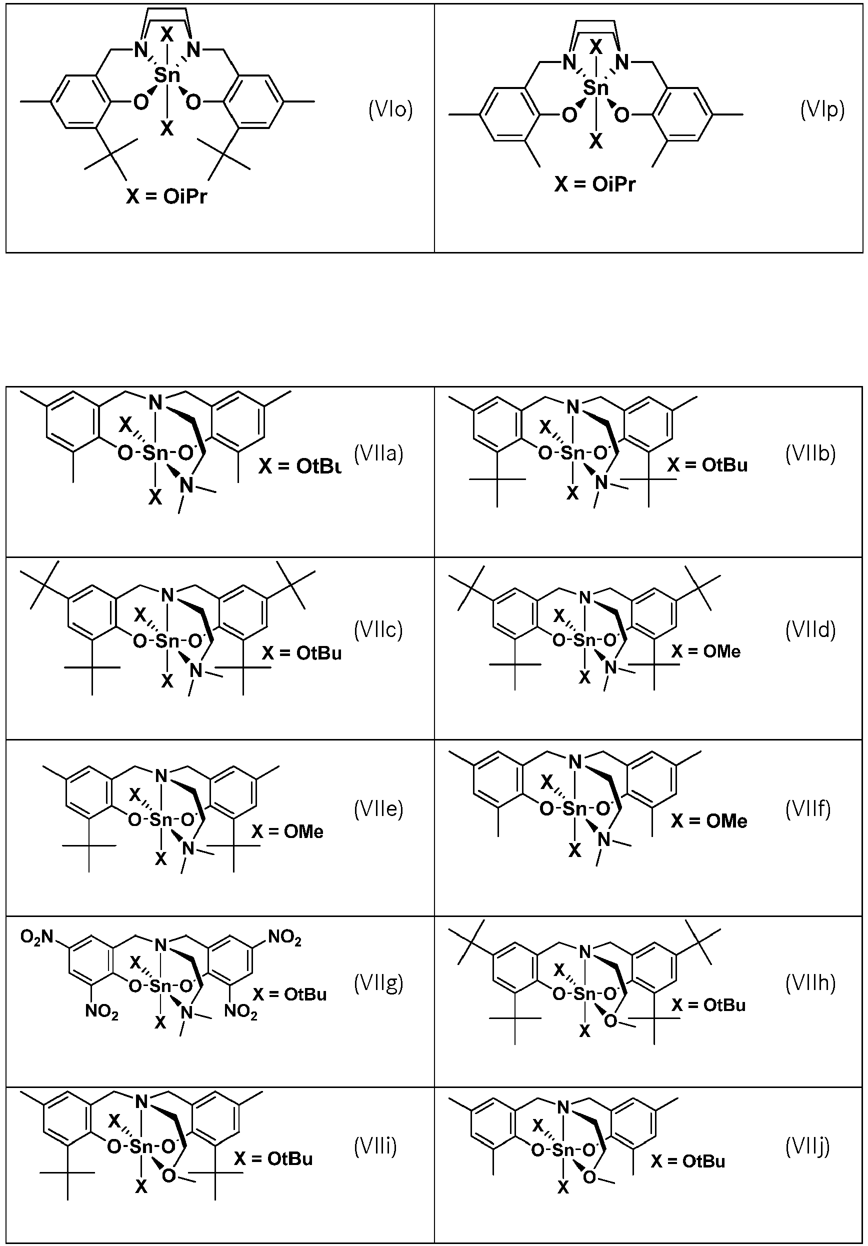

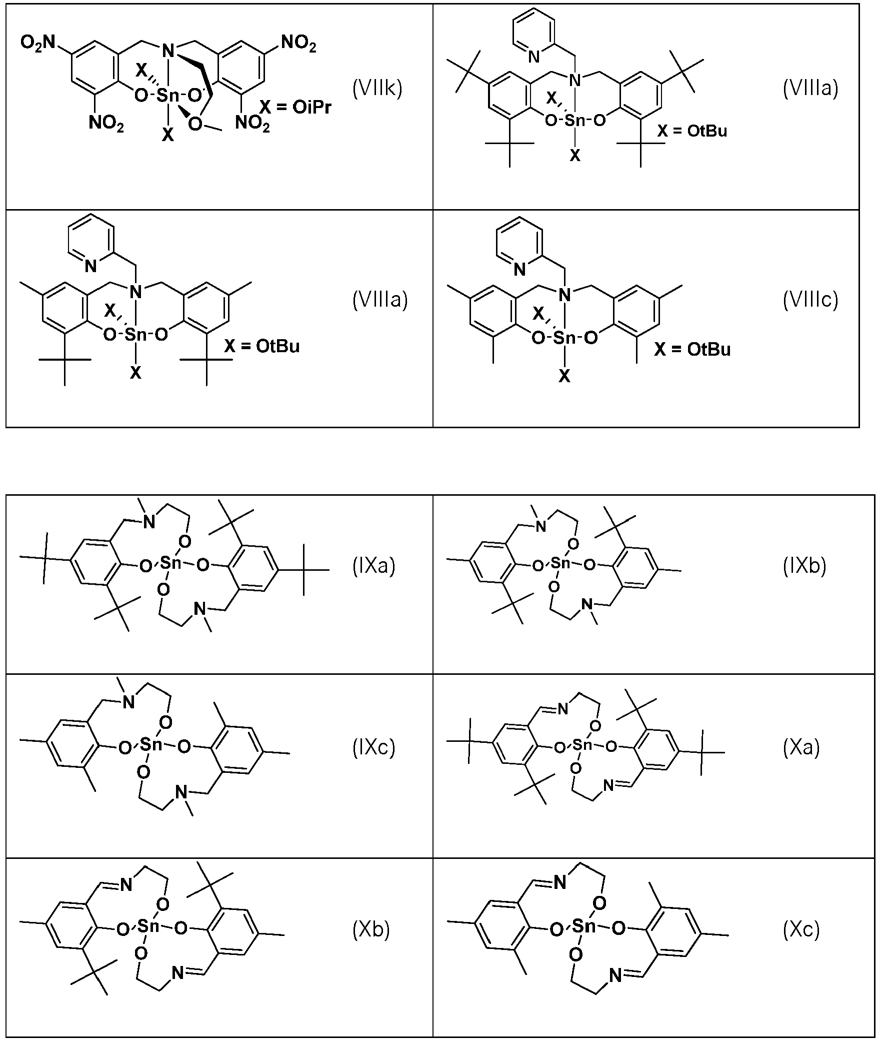

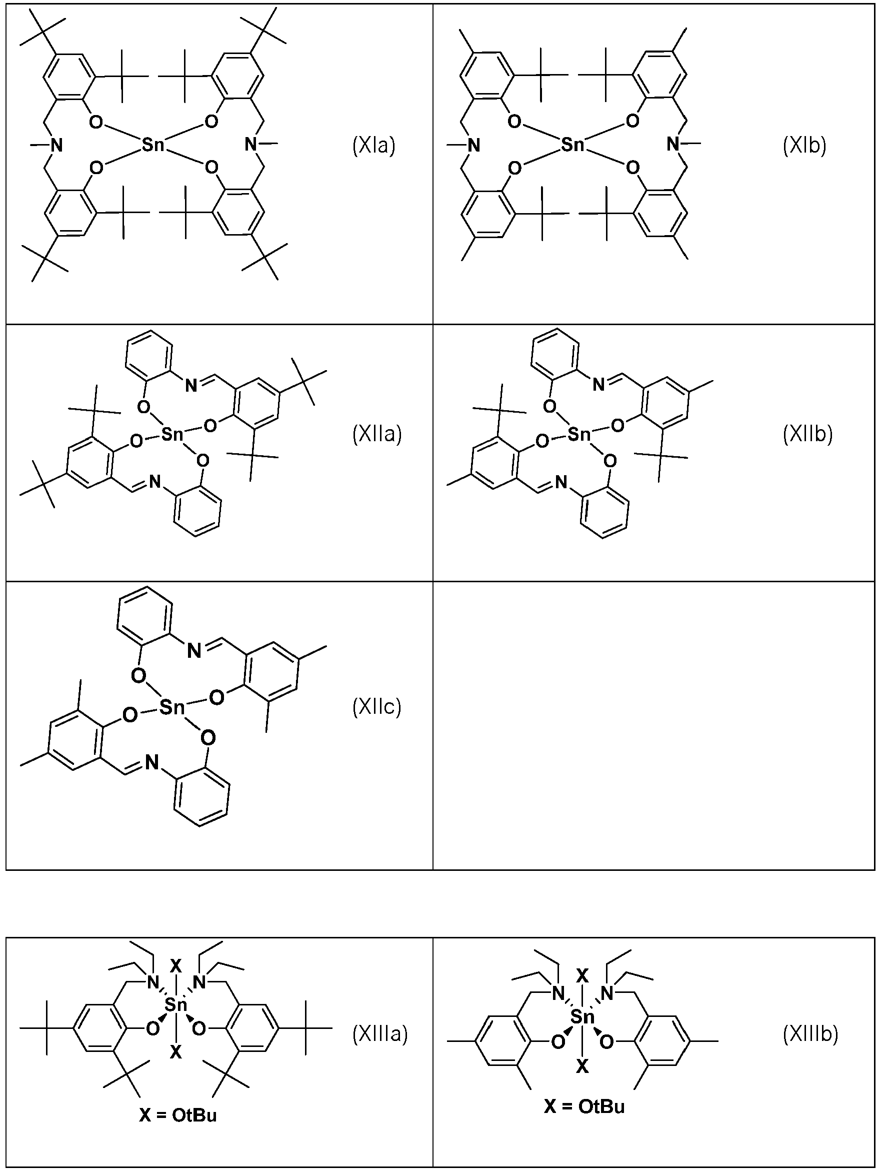

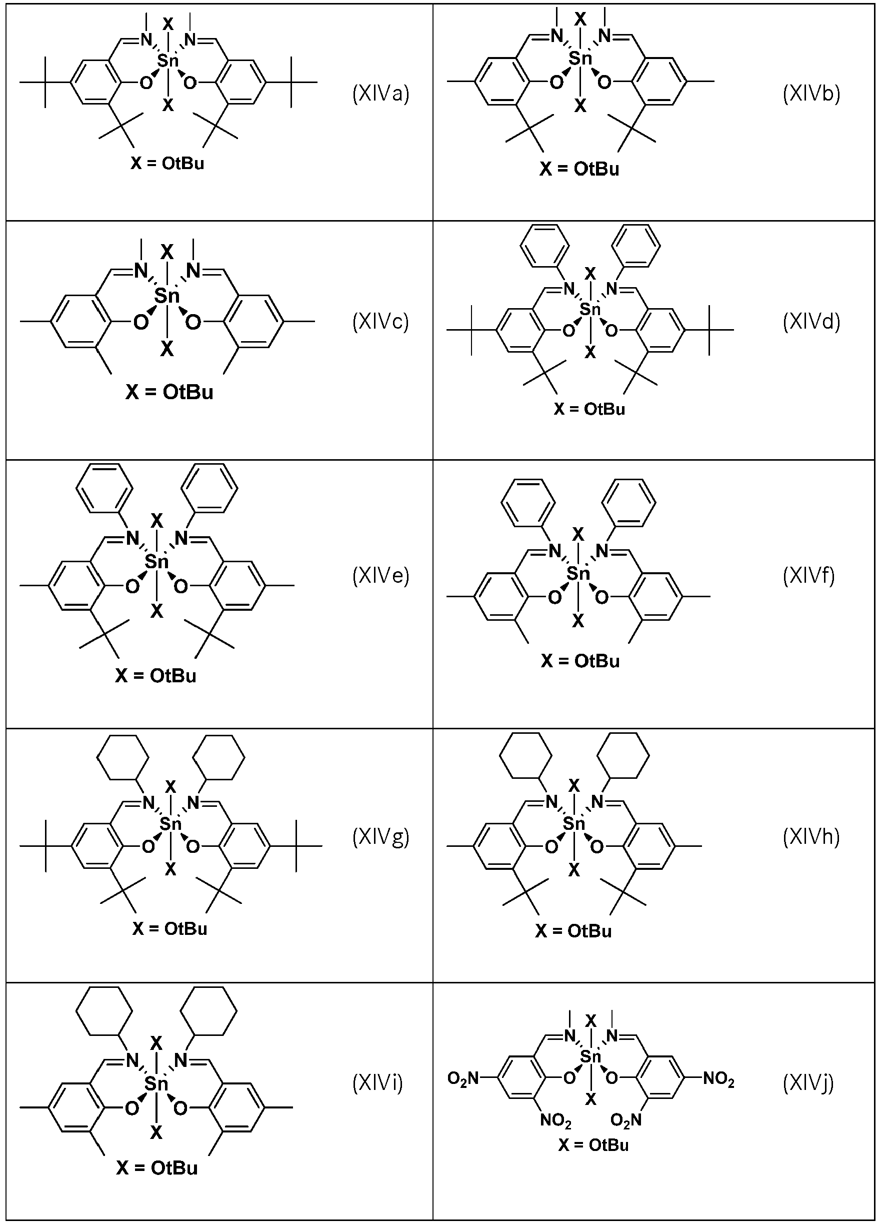

The catalysts according to the invention may be employed for the purpose of producing flexible and rigid foams, semi-rigid foams, integral foams, coatings, adhesives, sealants, spray elastomers and casting elastomers, reaction injection moldings, resins and binding agents in polyurethane chemistry, and also thermoplastic polyurethanes.

Likewise, the catalysts according to the invention may be used for the production of silicones and polyesters.

A further aspect of the present invention is directed to a method for producing a catalyst as described above via ligand substitution from Sn(IV) complexes. Ligand substitution, also referred to as redistribution, is a chemical reaction known to the skilled person per se.

Especially, Sn(OR)₄ with R=all<yl, especially a C₁ - C₁₀ alkyl, or Sn(Hal)₄ with Hal=CI, Br or I is for example converted with one or more of the ligands X¹, X², L¹ and/or L² as described above. Thereby, the ligands X¹, X², L¹ and/or L² may be present in neutralized form, e.g. neutralized with H⁺ or M⁺, where M⁺ signifies in particular sodium, lithium or potassium. Specifically, the synthesis of the catalysts is in particular based on ligand substitution starting with Sn(OtBu)₄ or Sn(OiPr)₄ or SnCl₄.

These starting materials can be mixed in a solvent with appropriate quantities of ligands. Reaction conditions and isolation of the products depend on the specific catalyst to be produced. All manipulations preferably are carried out under argon or nitrogen atmosphere using standard Schlenl< technique.

However, in principle, other techniques for producing the catalysts according to the invention can be used as well.

Another aspect of the present invention is directed to a composition comprising at least one polyisocyanate and at least NCO-reactive compound, especially at least one polyol, as well as a tin catalyst as described above.

A proportion of the tin catalyst, with respect to the total molar amount of the at least one polyisocyanate, in particular is in the range of 0.001 - 3 mol.%, especially 0.01 - 2 mol.%, preferably 0.05 - 1 mol.%, particularly 0.05 - 0.5 mol.% or 0.05 - 0.2 mol.%. However, other proportions can be used as well for special applications.

In particular, the composition is a multi-component composition, especially a two-component composition, in particular with a first component comprising the at least one polyisocynanate and a separate second component comprising the at least NCO-reactive compound. The tin catalyst in particular is part of the first and/or the second component, or it is comprised in a separate third component, e.g. dissolved in a solvent.

The at least one polyisocyanate preferably is selected from aliphatic, cycloaliphatic, aromatic and/or heterocyclic polyisocyanates with at least two isocyanate groups per molecule or mixtures thereof. Such polyisocyanates are known as such to a person skilled in the art.

Examples of suitable aliphatic and cycloaliphatic polyisocyanates are diisocyanates or triisocyanates, such as, for example, butane diisocyanate, pentane diisocyanate, hexane diisocyanate (hexamethylene diisocyanate, HDI), 4-isocyanatomethyl-1,8-octane diisocyanate (triisocyanatononane, TIN), and cyclic systems, such as, for example, 4,4'-methylene-bis(cyclohexyl isocyanate), 3,5,5-trimethyl-1-isocyanato-3-isocyanatomethylcyclohexane (isophorone diisocyanate, IPDI), and also ω,ω'-diisocyanato-1,3-dimethylcyclohexane (H₆XDI). By way of aromatic polyisocyanates, 1,5-naphthalene diisocyanate, diisocyanatodiphenylmethane (2,2'-, 2,4'- and 4,4'-MDI or mixtures thereof), diisocyanatomethylbenzene (2,4- and 2,6-toluylene diisocyanate, TDI) and technical mixtures of the two isomers as well as 1,3-bis(isocyanatomethyl)benzene (XDI) may, for example, be employed. Furthermore, TODI (3,3'-dimethyl-4,4'-biphenyl diisocyanate), PPDI (1,4-paraphenylene diisocyanate) and CHDI (cyclohexyl diisocyanate) can be used.

Besides these, secondary products of the aforementioned aliphatic, cycloaliphatic, aromatic or heterocyclic polyisocyanates with carbodiimide, uretoneimine, uretdione, allophanate, biuret and/or isocyanurate structure, as well as prepolymers that are obtained by conversion of the polyisocyanate with compounds with groups that are reactive towards isocyanate groups, can also be employed.

The polyisocyanate may be provided in a suitable solvent, especially the first component may comprise the polyisocyanate and a suitable solvent. Suitable solvents are those which exhibit a sufficient solubility of the polyisocyanate component and are free from groups that are reactive towards isocyanates. Examples of such solvents are acetone, methyl ethyl ketone, cyclohexanone, methyl isobutyl ketone, methyl isoamyl ketone, diisobutyl ketone, ethyl acetate, n-butyl acetate, ethylene glycol diacetate, butyrolactone, diethyl carbonate, propylene carbonate, ethylene carbonate, N,N-dimethyl formamide, N,N-dimethyl acetamide, N-methyl pyrrolidone, N-ethyl pyrrolidone, methylal, ethylal, butylal, 1,3-dioxolan, glycerol formal, benzene, toluene, n-hexane, cyclohexane, solvent naphtha, 2-methoxypropyl acetate (MPA).

The polyisocyanate may furthermore be combined with, or the first component may comprise, conventional auxiliary substances and additives, such as, for example, flow-improving agents (for example, ethylene carbonate, propylene carbonate, dibasic esters, citric acid esters), stabilisers (for example, Brønsted acids and Lewis acids, such as, for instance, hydrofluoric acid, phosphoric acid, benzoyl chloride, organomineral acids, such as dibutyl phosphate, moreover adipic acid, malic acid, succinic acid, racemic acid or citric acid), UV-screening agents (for example, 2,6-dibutyl-4-methylphenol), anti-hydrolysis agents (for example, sterically hindered carbodiimides), emulsifiers and also catalysts (for example, trialkyl amines, diazabicyclooctane, tin dioctoate, dibutyltin dilaurate, N-all<yl morpholine, lead octoate, zinc octoate, tin octoate, calcium octoate, magnesium octoate, the corresponding naphthenates and p-nitrophenolate and/or also mercuryphenyl neodecanoate) and fillers (for example, chalk), optionally dyestuffs that are incorporable into the polyurethane/polyurea to be formed later (which are accordingly provided with Tserevitinov-active hydrogen atoms) and/or coloured pigments.

Especially, NCO-reactive compounds, especially polyols, are compounds that exhibit an average OH functionality or NH functionality of at least 1.5. Such compounds are known to a person skilled in the art.

These may be, for example, low-molecular diols, for example, 1,2-ethanediol, 1,3- and 1,2-propanediol, 1,4-butanediol; triols, for example, glycerin, trimethylolpropane; and tetraols, for example, pentaerythritol; short-chain polyamines, but also higher-molecular polyhydroxy compounds such as polyether polyols, polyester polyols, polycarbonate polyols, polysiloxane polyols, polyamines and polyether polyamines and also polybutadiene polyols.

Polyether polyols are available, in a manner known as such, by alkoxylation of suitable starter molecules subject to base catalysis or use of double-metal-cyanide compounds (DMC compounds). Suitable starter molecules for the preparation of polyether polyols are, for example, simple, low-molecular polyols, water, organic polyamines with at least two N-H bonds or arbitrary mixtures of starter molecules of such a type. Preferred starter molecules for the preparation of polyether polyols by all<oxylation, in particular in accordance with the DMC process, are, in particular, simple polyols, such as ethylene glycol, propylene glycol-1,3 and butanediol-1,4, hexanediol-1,6, neopentyl glycol, 2-ethylhexanediol-1,3, glycerin, trimethylolpropane, pentaerythritol, and also low-molecular esters, exhibiting hydroxyl groups, of polyols of such a type with dicarboxylic acids of the type stated below in exemplary manner, or low-molecular ethoxylation products or propoxylation products of simple polyols of such a type, or arbitrary mixtures of modified or unmodified alcohols of such a type. Alkylene oxides suitable for the alkoxylation are, in particular, ethylene oxide and/or propylene oxide, which can be employed in arbitrary sequence or even in a mixture in the course of the alkoxylation.

Polyester polyols can be prepared in known manner by polycondensation of low-molecular polycarboxylic-acid derivatives, such as, for example, succinic acid, adipic acid, suberic acid, azelaic acid, sebacic acid, dodecanedioic acid, tetrahydrophthalic acid anhydride, hexahydrophthalic acid anhydride, tetrachlorophthalic acid anhydride, endomethylenetetrahydrophthalic acid anhydride, glutaric acid anhydride, maleic acid, maleic acid anhydride, fumaric acid, dimer fatty acid, trimer fatty acid, phthalic acid, phthalic acid anhydride, isophthalic acid, terephthalic acid, citric acid or trimellitic acid, with low-molecular polyols, such as, for example, ethylene glycol, diethylene glycol, neopentyl glycol, hexanediol, butanediol, propylene glycol, glycerin, trimethylolpropane, 1,4-hydroxymethylcyclohexane, 2-methyl-1,3-propanediol, butanetriol-1,2,4, triethylene glycol, tetraethylene glycol, polyethylene glycol, dipropylene glycol, polypropylene glycol, dibutylene glycol and polybutylene glycol, or by ring-opening polymerisation of cyclic carboxylic acid esters such as ε-caprolactone. Furthermore, hydroxycarboxylic-acid derivatives, such as, for example, lactic acid, cinnamic acid or ω-hydroxycaproic acid, can also be polycondensed to yield polyester polyols. But polyester polyols of oleochemical origin may also be used. Polyester polyols of such a type may, for example, be prepared by complete ring opening of epoxidised triglycerides of an at least partially olefinically unsaturated fatty-acid-containing fat mixture with one or more alcohols with 1 to 12 C atoms and by subsequent partial transesterification of the triglyceride derivatives to yield alkyl ester polyols with 1 to 12 C atoms in the alkyl residue.

The preparation of suitable polyacrylate polyols is known as such to a person skilled in the art. They are obtained by radical polymerisation of olefinically unsaturated monomers exhibiting hydroxyl groups or by radical copolymerisation of olefinically unsaturated monomers exhibiting hydroxyl groups with, optionally, other olefinically unsaturated monomers such as, for example, ethyl acrylate, butyl acrylate, 2-ethylhexyl acrylate, isobornyl acrylate, methyl methacrylate, ethyl ethacrylate, butyl methacrylate, cyclohexyl methacrylate, isobornyl methacrylate, styrene, acrylic acid, acrylonitrile and/or methacrylonitrile. Suitable olefinically unsaturated monomers exhibiting hydroxyl groups are, in particular, 2-hydroxyethyl acrylate, 2-hydroxyethyl methacrylate, the hydroxypropylacrylate isomer mixture that is obtainable by addition of propylene oxide onto acrylic acid and also the hydroxypropyl-methacrylate isomer mixture that is obtainable by addition of propylene oxide onto methacrylic acid. Suitable radical initiators are those from the group of the azo compounds, such as, for example, azoisobutyronitrile (AIBN), or from the group of the peroxides, such as, for example, di-tert-butyl peroxide.

The at least one NCO-reactive compound may be provided in a suitable solvent, especially the second component may comprise the at least one NCO-reactive compound and a suitable solvent. Suitable solvents are those which exhibit a sufficient solubility of the at least one NCO-reactive compound. Examples of such solvents are acetone, methyl ethyl ketone, cyclohexanone, methyl isobutyl ketone, methyl isoamyl ketone, diisobutyl ketone, ethyl acetate, n-butyl acetate, ethylene glycol diacetate, butyrolactone, diethyl carbonate, propylene carbonate, ethylene carbonate, N,N-dimethyl formamide, N,N-dimethyl acetamide, N-methyl pyrrolidone, N-ethyl pyrrolidone, methylal, ethylal, butylal, 1,3-dioxolane, glycerol formal, benzene, toluene, n-hexane, cyclohexane, solvent naphtha, 2-methoxypropyl acetate (MPA). Furthermore, the solvents may also carry groups that are reactive towards isocyanates. Examples of such reactive solvents are those which exhibit an average functionality of groups that are reactive towards isocyanates of at least 1.8. These may be, for example, low-molecular diols (for example 1,2-ethanediol, 1,3- and 1,2-propanediol, 1,4-butanediol), triols (for example, glycerin, trimethylolpropane), but also low-molecular diamines such as, for example, polyaspartic acid esters.

The polyether amines capable of being employed as NCO-reactive compound are, in particular, diamines or triamines. Compounds of such a type are, for example, marketed by Huntsman under the name Jeffamine^{®} and by BASF as polyether amines.

Especially, a crosslinker component and/or chain-extender may be used in the polyaddition reaction. Thereby, for example, short-chain polyols or polyamines usually find application. Typical chain-extenders are diethyltoluene diamine (DETDA), 4,4'-methylene-bis(2,6-diethyl)aniline (MDEA), 4,4'-methylene-bis(2,6-diisopropyl)aniline (MDIPA), 4,4'-methylene-bis(3-chloro-2,6-diethyl)aniline (MCDEA), dimethylthiotoluene diamine (DMTDA, Ethacure^{®} 300), N,N'-di(sec-butyl)aminobiphenylmethane (DBMDA, Unilinl< 4200) or N,N'-di-sec-butyl-p-phenylenediamine (Unilink^{®} 4100), 3,3'-dichloro-4,4'-diaminodiphenylmethane (MBOCA), trimethyleneglycol-di-p-aminobenzoate (Polacure 740M). Aliphatic aminic chain-extenders may likewise be employed or used concomitantly. 1,3-propanediol, 1,4-butanediol, 2,3-butanediol, 1,5-pentanediol, 1,6-hexanediol and HQEE (hydroquinone-di(β-hydroxyethyl)ether) may likewise be employed.

The process for preparing the polyisocyanate polyaddition products, i.e. the synthesis of polyurethanes, can be carried out in the presence of conventional flow-improving agents, stabilisers, UV-screening agents, catalysts, anti-hydrolysis agents, emulsifiers, fillers, optionally incorporable dyestuffs (which are accordingly provided with Tserevitinov-active hydrogen atoms) and/or coloured pigments. Also preferred is an addition of zeolites.

Thus, the at least one polyisocyanate and/or the at least one NCO-reactive compound may be provided in combination with such substances, e.g. comprised in the first and/or the second component.

Furthermore, the process for preparing the polyisocyanate polyaddition products can be carried out in the presence of auxiliary agents and/or additives selected from blowing agents, fillers, chalk, carbon black or zeolites, flameproofing agents, colouring pastes, water, antimicrobial agents, fluidity-improvers, thixotroping agents, surface-modification agents and retarders in connection with the preparation of the polyisocyanate polyaddition products. Further auxiliary substances and additives include defoamers, emulsifiers, foam stabilisers and cell regulators.

Typical foaming agents are fluorohydrocarbons, pentane, cyclopentane, water and/or carbon dioxide.

In particular, the tin catalysts according to the invention may be combined with further catalysts/activators known from the state of the art; for example, titanium, zirconium, bismuth, tin(II) and/or ferriferous catalysts.

Likewise, the at least one polyisocyanate and/or the at least one NCO-reactive compound may be provided in combination with such substances, e.g. comprised in the first and/or the second component.

A further aspect of the present invention is directed to a method for producing a polyurethane whereby at least one polyisocyanate and at least NCO-reactive compound, especially at least one polyol, is reacted in the presence of a tin catalyst as described above. Thereby, the polyisocyanates, NCO-reactive compound and/or polyols are defined as described above. Furthermore, one or more of the above described optional components may be used additionally.

The reaction to obtain the polyurethane may be carried out in accordance with common polyurethane synthesis well-known to the skilled person.

For example, the reaction may be carried out e.g. at a temperature in the range of 60 to 120°C, preferably 80 to 100°C. The progress of the reaction can be controlled by determining the NCO content in the mixture. If the desired or theoretical NCO content is reached, the reaction is complete and the mixture can optionally be cooled down to a lower temperature. A still further aspect of the present invention is directed to the use of a tin catalyst as described above as a catalyst in the synthesis of polyurethanes, especially for the catalyzing the polyaddition reaction of polyisocyanates and NCO-reactive compound, especially polyols. Thereby, the polyisocyanates, NCO-reactive compound and/or polyols are defined as described above. Furthermore, the catalyst may be used in combination with any of the above described optional components. Especially, the tin catalyst is used as a thermo-latent catalyst, especially in a temperature range of 60 to 120°C, preferably 80 to 100°C.

The tin catalyst, with respect to the total molar amount of the at least one polyisocyanate, in particular is used with a proportion in the range of 0.001 - 3 mol.%, especially 0.01 - 2 mol.%, preferably 0.05 - 1 mol.%, particularly 0.05 - 0.5 mol.% or 0.05 - 0.2 mol.%. However, other proportions can be used as well for special applications.

Specifically, the catalysts can e.g. be used in the production of flexible and rigid foams, semi-rigid foams, integral foams, coatings, adhesives, sealants, spray elastomers and casting elastomers, reaction injection moldings, resins and binding agents in polyurethane chemistry, and also thermoplastic polyurethanes.

Likewise, the catalysts according to the invention may be used in the synthesis or production of silicones and polyesters.

Other advantageous embodiments and combinations of features result from the detailed description below and the entirety of the claims.

### Exemplary embodiments

### 1. Synthesis methods

Depending on type and structure of the compound, the following synthetic procedures A) to I) have been applied. All manipulations were carried out under argon or nitrogen atmosphere using standard Schlenl< technique.
A) A mixture of 1 mmol of Sn(OtBu)₄ or Sn(OiPr)₄ and appropriate quantity of ligand was stirred at 120°C for 3 h. Then all volatiles were removed in vacuum. The residual substance was recrystallized from hexane in refrigerator as a powder, and then filtered, washed with cold solvent and dried in vacuo.
B) A solution of 1 mmol of Sn(OtBu)₄ in 5 ml of hexane was added dropwise during 30 min to a solution of appropriate amount of ligand in 10 ml of hexane. The resulting solution was refluxed for 48 h and cooled to room temperature. Formed precipitate was filtered, washed with cold hexane and dried in vacuo.
C) A solution of 1 mmol of Sn(OtBu)₄ in 10 ml of benzene was added dropwise during 30 min to a solution of appropriate amount of ligand in 10 ml of benzene. The resulting solution was refluxed for 48 h in a Dean-Stark apparatus with periodically removing of the condensate and adding benzene to the mixture. The resulting solution was cooled to the room temperature; formed precipitate was filtered, washed with cold benzene and dried in vacuo.
D) A solution of 1 mmol of Sn(OtBu)₄ in 10 ml of tert-butanol was added dropwise during 30 min to a solution of appropriate amount of ligand in 30 ml of tert-butanol and the resulting mixture was refluxed for 12 h. Subsequently, the mixture was cooled to room temperature, formed precipitate was filtered, washed with tert-butanole and dried in vacuo.
E) A solution of 1 mmol of Sn(OtBu)₄ or Sn(OiPr)₄ in 10 ml of acetonitrile was added dropwise during 10 min to a solution of appropriate amount of ligand in 20 ml of acetonitrile and the resulting mixture was stirred for 3 days. The mixture then was cooled to -10°C for 6 h, formed precipitate was filtered, washed with cold acetonitrile and dried in vacuo.
F) A solution of 1 mmol of Sn(OtBu)₄ in 5 ml of toluene was added dropwise during 30 min to a solution of appropriate quantity of ligand in 10 ml of toluene, resulted mixture was refluxed for 3 h. The mixture then was cooled, all volatiles were removed in vacuum. The residual substance was recrystallized from hexane hexamethylene disiloxane in refrigerator as a powder, filtered, washed with cold hexane and dried in vacuo.
G) A solution of 1 mmol of SnCl₄ in 5 ml of dichloromethane was added dropwise to a precooled to 0°C solution of 4 mmol NaOR (R=Me, Et, iPr) in 10 ml of dichloromethane. The resulting mixture was stirred for 1 h and warmed to room temperature. Appropriate amount of ligand in 5 ml of dichloromethane was added dropwise for 20 min and then resulted mixture was refluxed for 12 h. All volatiles were removed in vacuo, residue was recrystallized from hexane as a powder, and precipitate was filtered, washed with cold hexane and dried in vacuo.
H) A solution of 1 mmol of SnCl₄ in 5 ml of THF was added dropwise to a precooled to 0°C solution of 8 mmol diethylamine in 10 ml of THF. The resulting mixture was stirred for 1 h and warmed to room temperature. A mixture of appropriate quantity of ligand and 8 mmol of ROH (R=Me, Et, iPr) in 5 ml of THF was added dropwise for 10 min and then the resulting mixture was stirred for 12 h at room temperature. The mixture then was filtered, filtrate was dried in vacuo, residue was recrystallized from hexane as a powder, and precipitate was filtered, washed with cold hexane and dried in vacuo.
I) A solution of 1 mmol of SnCl₄ in 5 ml of toluene was added dropwise to a precooled to 10°C 4 mmol KOMe in 10 ml of benzene. The resulting mixture was stirred at the same temperature for 1 h and warmed to room temperature. Appropriate amount of ligand in 5 ml of benzene was added dropwise for 20 min and then the resulting mixture was refluxed for 12 h. The resulting mixture was filtered, filtrate was dried in vacuo. The residue was recrystallized from hexane as a powder, and precipitate was filtered, washed with cold hexane and dried in vacuo.

### 2. Preparation of tin catalysts

In the catalyst structures shown below, the following abbreviations are used:
tBu = tert-butyl
Me = methyl
iPr = isopropyl
Et = ethyl
Ph = phenyl
Pz = Piperazine
NTP = 2,2', 2"-Nitrilotris[phenol]
NTMTP = 2,2',2"-[Nitrilotris(methylene)]tris[phenol]
BPBA = bisphenolbisamine, 2,2'-[[[2-(Dimethylamino)ethyl]imino]bis(methylene)]bis[phenol]
BPAP = bisphenolaminopyridine, 2,2'-[[(2-Pyridinylmethyl)imino]bis(methylene)]bis[phenol]
BPMA = bisphenolmethoxyamine, 2,2'-[[(2-Methoxyethyl)imino]bis(methylene)]bis[phenol]
BPA = bisphenolamine, 2,2'-(methylazanediyl)bis(methylene)diphenol
HEAP = hydroxyethylaminophenol, 2-[[(2-Hydroxyethyl)methylamino]methyl]phenol
HEIP = hydroxyethyliminophenol, 2-((2-hydroxyethylimino)methyl)phenol
IDP = iminodiphenol, 2-[[(2-Hydroxyphenyl)imino]methyl]-phenol
AP = aminophenol, 2-[(Diethylamino)methyl]-phenol
IP = iminophenol, 2-[(imino)methyl]-phenol
Salen = N,ND-Ethylenebis(salicylimine)
Salan = N,ND-Ethylenebis(salicylamine)

### Most of these compounds are commercially available.

### Complexes with 3+1 ligands

The following ligands were provided:

| | |
|---|---|
| (NTP)H₃ | J. Am. Chem. Soc. 1966, 88, 12, 2727-2730 |
| (^{tBu,tBu}NTMTP)H₃ | Inorg. Chem. Commun., 2001, 4, 177-179 |
| (^{Me,tBu}NTMTP)H₃ | Organometallics 2001 20 (11), 2331-2337 |
| (^{Me,Me}NTMTP)H₃ | J. Am. Chem. Soc. 2000, 122, 6, 1066-1072 |

Thereupon, the following complexes with 3+1 ligands were produced according to the synthesis method indicated:
*(NTP)Sn(OtBu)*

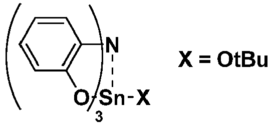

Synthesized by method A. From 0.896 g Sn(OtBu)₄ (2.18 mmol) and 0.639 g (NTP)H₃ (2.18 mmol) was obtained 0.647 g of product as a white powder (yield 62%). Tₘₑₗₜ. = 283-288ºC. Found (%): C, 54.80; H, 4.40; N, 2.88. C₂₂H₂₁NO₄Sn. Calc. (%): C, 54.81; H, 4.39; N, 2.91. ¹H NMR (CDCl₃, *δ*, ppm): 1.43 (s, 9 H), 6.68 - 6.73 (m, 3 H), 6.75 - 6.78 (m, 3 H), 6.94 - 6.97 (m, 3 H), 7.16 - 7.20 (m, 3 H). ¹³C NMR (CDCl₃, *δ*, ppm): 32.28, 74.56, 120.13, 122.59, 125.07, 126.15, 128.60, 156.33. ¹¹⁹Sn NMR (CDCl₃, *δ*, ppm): -413.

### (^{tBu,tBu}NTMTP)Sn(OtBu)

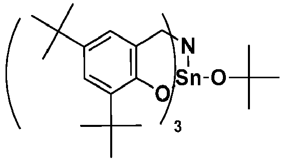

Synthesized by method F. From 0.890 g Sn(OtBu)₄ (2.17 mmol) and 1.455 g (^{tBu,tBu}NTMTP)H₃ (2.17 mmol) was obtained 0.397 g of product as a white powder (yield 21%). Tₘₑₗₜ. = 245-249ºC. Found (%): C, 68.32; H, 8.80; N, 1.68. C₄₉H₇₅NO₄Sn. Calc. (%): C, 68.37; H, 8.78; N, 1.63. ¹H NMR (CDCl₃, *δ*, ppm): 1.18 (s, 27 H), 1.30 (s, 9 H), 1.34 (s, 27 H), 3.61 - 3.63 (m, 6 H), 6.99 (s, 3 H), 7.12 (s, 3 H). ¹³C NMR (CDCl₃, *δ*, ppm): 28.61, 30.12, 32.01, 34.19, 35.57, 60.16, 71.38, 120.11, 122.04, 128.93, 141.99, 143.60, 159.41. ¹¹⁹Sn NMR (CDCl₃, *δ*, ppm): -437.

### (^{Me,tBu}NTMTP)Sn(OtBu)

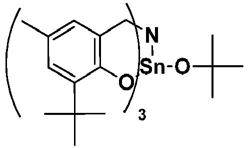

Synthesized by method F. From 0.853 g Sn(OtBu)₄ (2.08 mmol) and 1.133 g (^{Me,tBu}NTMTP)H₃ (2.08 mmol) was obtained 0.502 g of product as a white powder (yield 33%). Tₘₑₗₜ. = 199-205ºC. Found (%): C, 65.42; H, 7.89; N, 1.88. C₄₀H₅₇NO₄Sn. Calc. (%): C, 65.40; H, 7.82; N, 1.91. ¹H NMR (CDCl₃, *δ*, ppm): 1.23 (s, 27 H), 1.30 (s, 9 H), 2.30 (s, 9 H), 3.69-3.75 (br. s, 6 H), 6.92 (s, 3 H), 7.19 (s, 3 H). ¹³C NMR (CDCl₃, *δ*, ppm): 19.48, 32.51, 34.01, 35.99, 57.20, 71.19, 121.57, 125.03, 127.64, 133.76, 140.52, 148.49. ¹¹⁹Sn NMR (CDCl₃, *δ*, ppm): -422.

### (^{Me,Me}NTMTP)Sn(OtBu)

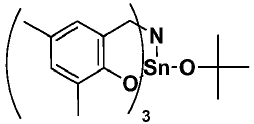

Synthesized by method F. From 0.945 g Sn(OtBu)₄ (2.30 mmol) and 0.965 g (^{Me,Me}NTMTP)H₃ (2.30 mmol) was obtained 0.459 g of product as a white powder (yield 75%). Tₘₑₗₜ. = 211-213ºC. Found (%): C, 61.13; H, 6.50; N, 2.23. C₃₁H₃₉NO₄Sn. Calc. (%): C, 61.20; H, 6.46; N, 2.30. ¹H NMR (CDCl₃, *δ*, ppm): 1.22 (s, 9 H), 1.98 (s, 9 H), 2.14 (s, 9 H), 3.70 (br. s, 6 H), 6.71 (s, 3 H), 7.06 (s, 3 H). ¹³C NMR (CDCl₃, *δ*, ppm): 19.03, 21.18, 31.94, 55.46, 74.73, 127.25, 128.81, 130.43, 132.00, 132.31, 151.57. ¹¹⁹Sn NMR (CDCl₃, *δ*, ppm): -401.

### (^{tBu,tBu}NTMTP)Sn(OiPr)

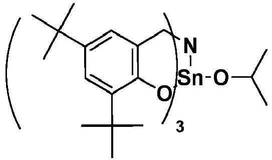

Synthesized by method G. From 0.849 g SnCl₄ (3.26 mmol) and 2.188 g (^{tBu,tBu}NTMTP)H₃ (3.26 mmol) was obtained 0.573 g of product as a white powder (yield 20%). Tₘₑₗₜ. = 213-216ºC. Found (Y): C, 68.12; H, 8.74; N, 1.63. C₄₈H₇₃NO₄Sn. Calc. (%): C, 68.08; H, 8.69; N, 1.65. ¹H NMR (CDCl₃, *δ*, ppm): 1.19 - 1.24 (m, 33 H), 1.32 (s, 27 H), 3.40 (br. s, 6 H), 4.27 (spt, *J*=6.92 Hz, 1 H), 7.00 (s, 3 H), 7.28 (s, 3 H). ¹³C NMR (CDCl₃, *δ*, ppm): 25.12, 31.01, 31.65, 31.93, 32.17, 60.88, 63.30, 121.17, 123.22, 124.89, 141.54, 141.82, 153.56. ¹¹⁹Sn NMR (CDCl₃, *δ*, ppm): -429.

### (^{tBu,tBu}NTMTP)Sn(OEt)

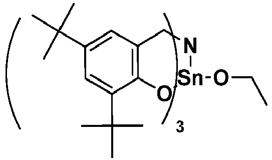

Synthesized by method H. From 0.635 g SnCl₄ (2.44 mmol) and 1.638 g (^{tBu,tBu}NTMTP)H₃ (2.44 mmol) was obtained 0.483 g of product as a white powder (yield 24%). Tₘₑₗₜ. = 233-238ºC. Found (%): C, 67.80; H, 8.55; N, 1.70. C₄₇H₇₁NO₄Sn. Calc. (%): C, 67.79; H, 8.59; N, 1.68. ¹H NMR (CDCl₃, *δ*, ppm): 1.28 (s, 25 H), 1.30 (t, *J*=6.12 Hz, 3 H), 1.38 (s, 27 H), 3.59 (m, 8 H), 7.03 (s, 3 H), 7.36 (s, 3 H). ¹³C NMR (CDCl₃, *δ*, ppm): 20.81, 29.83, 32.17, 31.50, 32.06, 59.18, 60.55, 122.04, 123.19, 125.50, 139.92, 140.29, 151.68. ¹¹⁹Sn NMR (CDCl₃, *δ*, ppm): -411.

### (^{tBu,tBu}NTMTP)Sn(OMe)

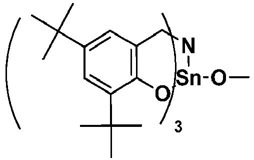

Synthesized by method I. From 0.570 g SnCl₄ (2.19 mmol) and 1.471 g (^{tBu,tBu}NTMTP)H₃ (2.19 mmol) was obtained 0.313 g of product as a white powder (yield 17%). Tₘₑₗₜ. = 173-176ºC. Found (%): C, 67.27; H, 8.41; N, 1.69. C₄₆H₆₉NO₄Sn. Calc. (%): C, 67.48; H, 8.49; N, 1.71. ¹H NMR (CDCl₃, *δ*, ppm): 1.22 (s, 27 H), 1.26 (s, 27 H), 3.20 (s, 3 H), 3.42 (br. s, 6 H), 6.99 (s, 3 H), 7.22 (s, 3 H). ¹³C NMR (CDCl₃, *δ*, ppm): 31.17, 31.80, 31.97, 32.54, 44.09, 62.93, 125.57, 126.41, 126.82, 141.38, 142.00, 159.87. ¹¹⁹Sn NMR (CDCl₃, *δ*, ppm): -402.

### Complexes with 2+2 salen ligands

The following ligands were provided:
(^{3,tBu,tBu}Salen)□₂, (^{3,Me,tBu}Salen)□₂; Inorganic Chemistry (1997), 36(18), 4060-4065
(^{2,tBu,tBu}Salen)□₂, (^{2,Me,tBu}Salen)□₂; (^{2,Me,Me}Salen)□₂; Dalton Transactions (2012), 41(5), 1444-1447
(^{Hex,tBu,tBu}Salen)□₂, (^{Hex,Me,tBu}Salen)□₂; Journal of the American Chemical Society (1991), 113(18), 7063-4
(^{2Ph,tBu,tBu}Salen)□₂₎, (^{2Ph,Me,tBu}Salen)□₂, (^{2Ph,Me,Me}Salen)□₂; Organic Letters (2002), 4(9), 1607-1610
(^{Ph,tBu,tBu}Salen)H₂, (^{Ph,Me,tBu}Salen)H₂, (^{Ph,Me,Me}Salen)H₂; Inorganic Chemistry (2002), 41(14), 3728-3739

Thereupon, the following complexes with 2+2 salen ligands were produced according to the synthesis method indicated:
*(^{3,tBu,tBu}Salen)Sn(OtBu)₂*

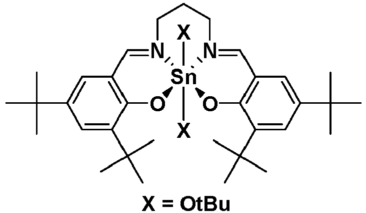

Synthesized by method A. From 1.077 g Sn(OtBu)₄ (2.62 mmol) and 1.323 g (^{3,tBu,tBu}Salen)H₂ (2.62 mmol) was obtained 0.854 g of product as a yellow powder (yield 42%). Tₘₑₗₜ. = 243-245ºC. Found (Y):C, 64.06; H, 8.79; N, 3.61. C₄₁H₆₆N₂O₄Sn. Calc. (%): C, 63.98; H, 8.64; N, 3.64. NMR ¹H (CDCl₃, *δ*, ppm): 1.25 (s, 18H), 1.30 (c, 18H), 1.36 (s, 18H), 2.11 (t, 2H, J = 10.8 Hz), 4.01 (t, 4H, J = 10.8 Hz), 6.85 (br. s, 2H), 6.88 (br. s, 2H), 7.40 (s, 2H). NMR ¹³C (CDCl₃, *δ*, ppm): 30.2, 31.4, 33.7, 35.1, 35.8, 60.0, 71.2, 127.8, 128.0, 129.5,, 137.8, 141.3, 168.7. NMR ¹¹⁹Sn (CDCl₃, *δ*, ppm): -697.

### (^{3,Me,tBu}Sa/en)Sn(OtBu)₂

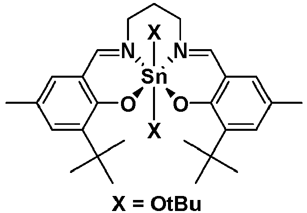

Synthesized by method A. From 1.091 g Sn(OtBu)₄ (2.65 mmol) and 1.136 g (^{3,Me,tBu}Salen)H₂ (2.67 mmol) was obtained 0.728 g of product as a yellow powder (yield 40%). Tₘₑₗₜ. = 246-248ºC. Found (%):C, 61.26; H, 7.89; N, 4.05. C₃₅H₅₄N₂O₄Sn. Calc. (%): C, 61.32; H, 7.94; N, 4.09. NMR ¹H (CDCl₃, *δ*, ppm): 1.30 (s, 18H), 1.83 (c, 18H), 1.93 (br. s, 2H), 2.16 (s, 6H), 3.36 (t, 4H, J = 6.6 Hz), 6.53 (br. s, 2H), 7.23 (br. s, 2H), 7.40 (s, 2H). NMR ¹³C (CDCl₃, *δ*, ppm): 20.8, 28.4, 31.2, 34.2, 36.0, 61.0,134.4, 134.5, 168.5. NMR ¹¹⁹Sn (CDCl₃, *δ*, ppm): - 701.

### (^{2,tBu,tBu}Sa/en)Sn(OtBu)₂

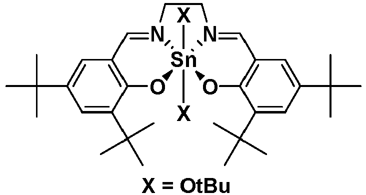

Synthesized by method B. From 0.466 g Sn(OtBu)₄ (1.13 mmol) and 0.55 g (^{2,tBu,tBu}Salen)H₂ (1.13 mmol) was obtained 0.325 g of product as a yellow powder (yield 38%). Tₘₑₗₜ. = 114-115ºC. Found (Y):C, 63.65; H, 8.48; N, 3.76. C₄₀H₆₄N₂O₄Sn. Calc. (%): C, 63.58; H, 8.54; N, 3.71. NMR ¹H (CDCl₃, *δ*, ppm): 0.92 (s, 18H), 1.33 (s, 18H), 1.51 (s, 18H, OtBu), 4.05 (s, 4H), 7.05 (d, 2H, J = 2.9 Hz), 7.55 (d, 2H, J = 2.9 Hz), 8.13 (s, 2H). NMR ¹³C (CDCl₃, *δ*, ppm): 30.2, 31.2, 33.2, 33.9, 35.5, 54.3, 74.8, 128.7, 129.7, 130.2, 131.7, 133.0, 138.0, 164.1. NMR ¹¹⁹Sn (CDCl₃, *δ*, ppm): -680.

### (^{2,Me,tBu}Sa/en)Sn(OtBu)₂

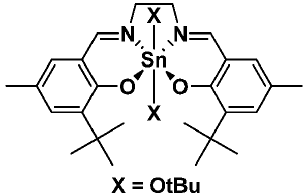

Synthesized by method B. From 1.821 g Sn(OtBu)₄ (4.43 mmol) and 1.813 g (^{2,tBu,tBu}Salen)H₂ (4.44 mmol) was obtained 1.904 g of product as a yellow powder (yield 64%). Tₘₑₗₜ. = 210-212ºC. Found (%):C, 60.67; H, 7.77; N, 4.18. C₂₄H₅₂N₂O₄Sn. Calc. (Y): C, 60.81; H, 7.81; N, 4.17. NMR ¹H (CDCl₃, *δ*, ppm): 0.92 (s, 18H), 1.50 (s, 18H), 2.28 (s, 6H), 4.04 (br. s, 4H), 6.90 (d, 2H, J = 2.2 Hz), 7.31 (br. s, 2H), 8.07 (s, 2H). NMR ¹³C (CDCl₃, *δ*, ppm): 20.22, 30.2, 33.2, 35.2, 54.2, 74.8, 133.3, 133.8, 167.9. NMR ¹¹⁹Sn (CDCl₃, *δ*, ppm): -677.

### (^{2,Me,Me}Salen)Sn(OtBu)₂

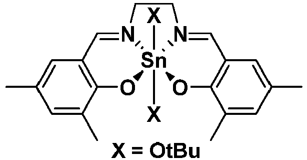

Synthesized by method F. From 0.764 g Sn(OtBu)₄ (1.86 mmol) and 0.603 g (^{2,Me,Me}Salen)H₂ (1.86 mmol) was obtained 0.725 g of product as a yellow powder (yield 67%). ¹H NMR (CDCl₃, *δ*, ppm): 0.96 (s, 18 H), 2.25 (s, 6 H), 2.30 (s, 6 H), 3.97 (s, 4 H), 6.82 (d, *J*= 1.81 Hz, 2 H), 7.17 (d, *J*= 1.97 Hz, 2 H), 8.03 (s, 2 H). ¹³C NMR (CDCl₃, *δ*, ppm): 17.39, 20.37, 31.41, 33.28, 54.87, 69.77, 117.65, 124.71, 131.52, 132.58, 137.09, 163.18, 167.24. ¹¹⁹Sn (CDCl₃, *δ*, ppm): -671.

### (^{2,tBu,tBu}Salen)Sn(OiPr)₂

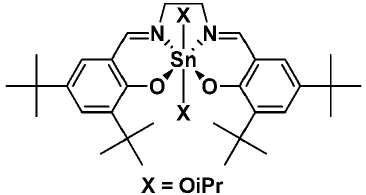

Synthesized by method G. From 0.464 g Sn(OtBu)₄ (1.13 mmol) and 0.55 g (^{2,tBu,tBu}Salen)H₂ (1.13 mmol) was obtained 0.32 g of product as a yellow powder (yield 38%). Tₘₑₗₜ. = 114-115ºC. Found (Y):C, 63.65; H, 8.48; N, 3.76. C₄₀H₆₄N₂O₄Sn. Calc. (%): C, 63.58; H, 8.54; N, 3.71. NMR ¹H (CDCl₃, *δ*, ppm): 0.92 (s, 18H), 1.33 (s, 18H), 1.51 (s, 18H, OtBu), 4.05 (s, 4H), 7.05 (d, 2H, J = 2.9 Hz), 7.55 (d, 2H, J = 2.9 Hz), 8.13 (s, 2H). NMR ¹³C (CDCl₃, *δ*, ppm): 30.2, 31.2, 33.2, 33.9, 35.5, 54.3, 74.8, 128.7, 129.7, 130.2, 131.7, 133.0, 138.0, 164.1. NMR ¹¹⁹Sn (CDCl₃, *δ*, ppm): -680.

### (^{2,Me,tBu}Salen)Sn(OiPr)₂

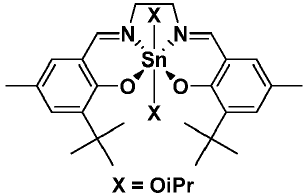

Synthesized by method G. From 1.822 g Sn(OtBu)₄ (4.43 mmol) and 1.816 g (^{2,tBu,tBu}Salen)H₂ (4.43 mmol) was obtained 1.90 g of product as a yellow powder (yield 64%). Tₘₑₗₜ. = 210-212ºC. Found (%):C, 60.67; H, 7.77; N, 4.18. C₂₄H₅₂N₂O₄Sn. Calc. (%): C, 60.81; H, 7.81; N, 4.17. NMR ¹H (CDCl₃, *δ*, ppm): 0.92 (s, 18H), 1.50 (s, 18H), 2.28 (s, 6H), 4.04 (br. s, 4H), 6.90 (d, 2H, J = 2.2 Hz), 7.31 (br. s, 2H), 8.07 (s, 2H). NMR ¹³C (CDCl₃, *δ*, ppm): 20.22, 30.2, 33.2, 35.2, 54.2, 74.8, 133.3, 133.8, 167.9. NMR ¹¹⁹Sn (CDCl₃, *δ*, ppm): -677.

### (^{2,Me,Me}Salen)Sn(OiPr)₂

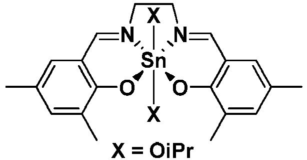

Synthesized by method F. From 0.764 g Sn(OtBu)₄ (1.86 mmol) and 0.603 g (^{2, Me, Me}Salen)H₂ (1.86 mmol) was obtained 0.725 g of product as a yellow powder (yield 67%). Found (%): C, 57.32; H, 6.80; N, 4.71. C₂₈H₄₀N₂O₄Sn. Calc. (%): C, 57.26; H, 6.86; N, 4.77. ¹H NMR (CDCl₃, *δ*, ppm): 0.96 (s, 18 H), 2.25 (s, 6 H), 2.30 (s, 6 H), 3.97 (s, 4 H), 6.82 (d, *J*= 1.81 Hz, 2 H), 7.17 (d, *J*= 1.97 Hz, 2 H), 8.03 (s, 2 H). ¹³C NMR (CDCl₃, *δ*, ppm): 17.39, 20.37, 31.41, 33.28, 54.87, 69.77, 117.65, 124.71, 131.52, 132.58, 137.09, 163.18, 167.24. ¹¹⁹Sn (CDCl₃, *δ*, ppm): -671.

### (^{Hex,tBu,tBu}Salen)Sn(OtBu)₂

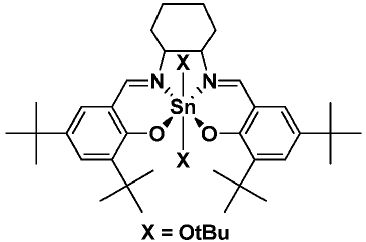

Synthesized by method H. From 1.669 g Sn(OtBu)₄ (4.06 mmol) and 2.35 g (*^{Hex,tBu,tBu}Salen*)H₂ (4.06 mmol) was obtained 2.154 g of product as a white powder (yield 68%). Tₘₑₗₜ. = 248-255ºC. Found (%): C, 65.30; H, 8.63; N, 3.49. C₄₄H₇₀N₂O₄Sn. Calc. (%): C, 65.26; H, 8.71; N, 3.46. NMR ¹H (CDCl₃, *δ*, ppm): 1.18-3.88 (m, 10H), 0.92 (s, 18H), 1.36 (s, 18H), 1.56 (s, 18H), 7.03 (d, 2H, J = 2.57 Hz), 7.55 (d, 2H, J = 2.57 Hz), 8.04 (s, 4H). NMR ¹³C (CDCl₃, *δ*, ppm): 24.4, 27.4, 30.5, 31.8, 33.7, 35.8, 63.4, 70.1, 119.6, 130.0, 137.9, 141.6, 164.5, 167.3. NMR ¹¹⁹Sn (CDCl₃, *δ*, ppm): -709.

### (^{Hex,Me,tBu}Salen)Sn(OtBu)₂

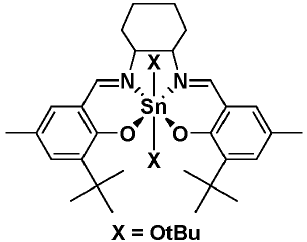

Synthesized by method H. From 1.667 g Sn(OtBu)₄ (4.06 mmol) and 2.00 g (*^{Hex,Me,tBu}Salen*)H₂ (4.06 mmol) was obtained 2.11 g of product as a white powder (yield 70%). Tₘₑₗₜ. = 241-247ºC. Found (%): C, 62.88; H, 8.12; N, 3.82. C₃₈H₅₈N₂O₄Sn. Calc. (%): C, 62.90; H, 8.06; N, 3.86. NMR ¹H (CDCl₃, *δ*, ppm): 1.15-3.75 (m, 10H), 1.41 (s, 18H), 1.58 (s, 18H), 2.41 (s, 6H), 7.03 (d, 2H, J = 2.32 Hz), 7.55 (d, 2H, J = 2.32 Hz), 8.15 (s, 4H). NMR ¹³C (CDCl₃, *δ*, ppm): 20.6, 22.5, 24.9, 32.1, 35.0, 63.4, 70.1, 119.6, 130.0, 137.9, 141.6, 164.5, 167.3. NMR ¹¹⁹Sn (CDCl₃, *δ*, ppm): -678.

### (^{2Ph,tBu,tBu}Salen)Sn(OtBu)₂

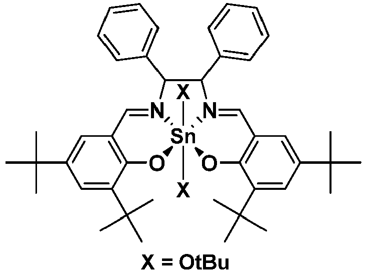

Synthesized by method C. From 0.970 g Sn(OtBu)₄ (2.36 mmol) and 1.523 g (^{2Ph,tBu,tBu}Salen)H₂ (2.36 mmol) was obtained 1.328 g of product as a yellow powder (yield 62%). Tₘₑₗₜ. = 248-250ºC. Found (%): C, 68.63; H, 8.00; N, 3.10. C₅₂H₇₂N₂O₄Sn. Calc. (%): C, 68.80; H, 7.99; N, 3.09. ¹H NMR (CDCl₃, *δ*, ppm): 1.29 (s, 18 H), 1.38 (s, 18 H), 1.55 (s, 18 H), 4.51 - 4.57 (m, 2 H), 7.07 - 7.16 (m, 4 H), 7.23 - 7.29 (m, 2 H), 7.31 - 7.36 (m, 4 H), 7.47 (s, 2 H), 7.55 (s, 2 H), 8.02 (s, 2 H). ¹³C NMR (CDCl₃, *δ*, ppm): 28.57, 29.80, 32.16, 33.07, 35.12, 79.64, 79.13, 125.37, 126.34, 127.73, 127.80, 127.93, 128.05, 138.22, 139.17, 142.09, 163.68, 173.86. ¹¹⁹Sn NMR (CDCl₃, *δ*, ppm): -656.

### (^{2Ph,Me,tBu}Sa/en)Sn(OtBu)₂

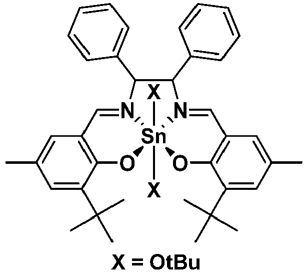

Synthesized by method C. From 1.113 g Sn(OtBu)₄ (2.71 mmol) and 1.520 g (^{2Ph,Me,tBu}Salen)H₂ (2.71 mmol) was obtained 1.494 g of product as a yellow powder (yield 67%). Tₘₑₗₜ. = 263-266ºC. Found (%): C, 67.01; H, 7.32; N, 3.38. C₄₆H₆₀N₂O₄Sn. Calc. (%): C, 67.08; H, 7.34; N, 3.40. ¹H NMR (CDCl₃, *δ*, ppm): 1.37 (s, 18 H), 1.52 (s, 18 H), 2.33 (s, 6 H), 5.00 - 5.09 (m, 2 H), 7.10 - 7.13 (m, 2 H), 7.14 - 7.18 (m, 4 H), 7.24 - 7.29 (m, 4 H), 7.36 - 7.40 (m, 2 H), 8.09 - 8.15 (m, 2 H). ¹³C NMR (CDCl₃, *δ*, ppm): 20.90, 30.32, 33.25, 35.88, 80.56, 81.13, 128.15, 129.43, 130.07, 130.86, 132.19, 133.21, 133.76, 140.37, 141.99, 163.28, 170.57. ¹¹⁹Sn NMR (CDCl₃, *δ*, ppm): -658.

### (^{2Ph,Me,Me}Salen)Sn(OtBu)₂

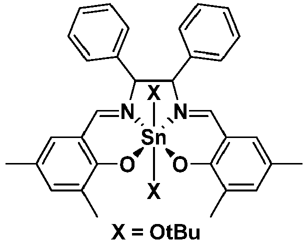

Synthesized by method C. From 0.658 g Sn(OtBu)₄ (1.60 mmol) and 0.763 g (^{2Ph,Me,Me}Salen)H₂ (1.60 mmol) was obtained 0.853 g of product as a yellow powder (yield 72%). Tₘₑₗₜ. = 266-270ºC. Found (%): C, 65.01; H, 6.48; N, 3.78. C₄₀H₄₈N₂O₄Sn. Calc. (%): C, 64.96; H, 6.54; N, 3.79. ¹H NMR (CDCl₃, *δ*, ppm): 1.49 (s, 18 H), 2.37 (s, 6 H), 2.55 (s, 6 H), 5.14 (m, 2 H), 7.19 - 7.24 (m, 4 H), 7.28 - 7.35 (m, 2 H), 7.40 - 7.46 (m, 2 H), 7.59 - 7.64 (m, 4 H), 7.72 - 7.76 (m, 2 H), 8.12 - 8.18 (m, 2 H). ¹³C NMR (CDCl₃, δ, ppm): 15.97, 21.53, 33.04, 78.86, 79.39, 125.88, 126.13, 126.85, 127.48, 128.04, 128.57, 131.44, 134.96, 141.32, 159.71, 172.39. ¹¹⁹Sn NMR (CDCl₃, *δ*, ppm): -653.

### (^{2Ph,Me,Me}Salen)Sn(OiPr)₂

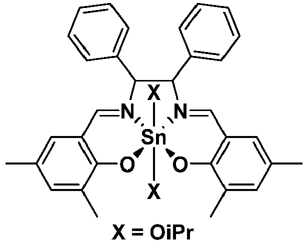

Synthesized by method G. From 0.705 g SnCl₄ (2.71 mmol) and 1.293 g (^{2Ph,Me,Me}Salen)H₂ (2.71 mmol) was obtained 0.732 g of product as a yellow powder (yield 38%). Tₘₑₗₜ. = 231-235ºC. Found (%): C, 64.21; H, 6.18; N, 3.88. C₃₈H₄₄N₂O₄Sn. Calc. (%): C, 64.15; H, 6.23; N, 3.94. ¹H NMR (CDCl₃, *δ*, ppm): 1.49 (s, 18 H), 2.37 (s, 6 H), 2.55 (s, 6 H), 5.14 (m, 2 H), 7.19 - 7.24 (m, 4 H), 7.28 - 7.35 (m, 2 H), 7.40 - 7.46 (m, 2 H), 7.59 - 7.64 (m, 4 H), 7.72 - 7.76 (m, 2 H), 8.12 - 8.18 (m, 2 H). ¹³C NMR (CDCl₃, *δ*, ppm): 17.35, 20.52, 27.13, 63.55, 78.46, 125.29, 126.33, 127.78, 127.99, 128.56, 129.04, 130.39, 134.78, 140.94, 159.76, 171.68. ¹¹⁹Sn NMR (CDCl₃, *δ*, ppm): -648.

### (^{2Ph,Me,Me}Salen)Sn(OMe)₂

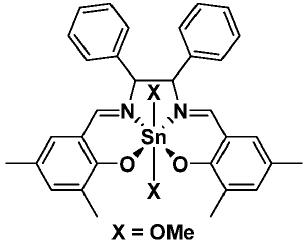

Synthesized by method G. From 0.582 g SnCl₄ (2.23 mmol) and 1.063 g (^{2Ph,Me,Me}Salen)H₂ (2.23 mmol) was obtained 0.498 g of product as a yellow powder (yield 34%). Tₘₑₗₜ. = 211-216ºC. Found (%): C, 62.39; H, 5.58; N, 4.30. C₃₄H₃₆N₂O₄Sn. Calc. (%): C, 62.31; H, 5.54; N, 4.27. ¹H NMR (CDCl₃, *δ*, ppm): 2.17 (s, 6 H), 2.20 (s, 6 H), 3.53 (s, 6 H), 5.29 - 5.33 (m, 2 H), 7.10 - 7.15 (m, 4 H), 7.19 - 7.22 (m, 2 H), 7.26 - 7.28 (m, 2 H), 7.33 - 7.36 (m, 4 H), 7.48 - 7.51 (m, 2 H), 8.11 - 8.17 (m, 2 H). ¹³C NMR (CDCl₃, *δ*, ppm): 16.35, 21.01, 46.97, 79.16, 126.25, 127.32, 127.52, 127.90, 128.22, 128.70, 129.81, 133.07, 140.98, 161.66, 168.40. ¹¹⁹Sn NMR (CDCl₃, *δ*, ppm): -639.

### (^{Ph,tBu,tBu}Salen)Sn(OtBu)₂

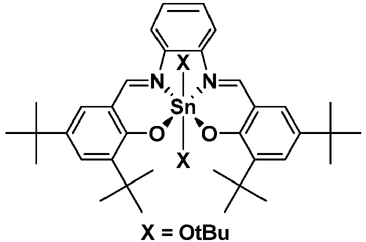

Synthesized by method B. From 0.875 g Sn(OtBu)₄ (2.13 mmol) and 1.150 g (^{Ph,tBu,tBu}Salen)H₂ (2.13 mmol) was obtained 1.008 g of product as a yellow powder (yield 59%). Tₘₑₗₜ. = 271-277ºC. Found (%): C, 65.71; H, 7.98; N, 3.46. C₄₄H₆₄N₂O₄Sn. Calc. (%): C, 65.75; H, 8.03; N, 3.49. ¹H NMR (CDCl₃, *δ*, ppm): 1.29 (s, 18 H), 1.40 (s, 18 H), 1.53 (s, 18 H), 7.27 - 7.30 (m, 2 H), 7.38 (s, 2 H), 7.43 - 7.47 (m, 2 H), 7.69 (s, 2 H), 9.43 (s, 2 H). ¹³C NMR (CDCl₃, *δ*, ppm): 30.47, 31.02, 31.55, 32.99, 35.64, 81.21, 124.05, 126.88, 127.64, 128.68, 130.50, 138.77, 140.46, 141.39, 161.74, 172.21. ¹¹⁹Sn NMR (CDCl₃, *δ*, ppm):-652.

### (^{Ph,Me,tBu}Sa/en)Sn(OtBu)₂

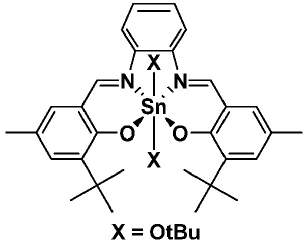

Synthesized by method B. From 1.249 g Sn(OtBu)₄ (3.04 mmol) and 1.387 g (^{Ph,Me,tBu}Salen)H₂ (3.04 mmol) was obtained 1.153 g of product as a yellow powder (yield 53%). Tₘₑₗₜ. = 239-247ºC. Found (%): C, 63.41; H, 7.20; N, 3.86. C₃₈H₅₂N₂O₄Sn. Calc. (%): C, 63.43; H, 7.28; N, 3.89. ¹H NMR (CDCl₃, *δ*, ppm): 1.39 (s, 18 H), 1.49 (s, 18 H), 2.33 (s, 6 H), 7.30 (s, 2 H), 7.35 - 7.37 (m, 2 H), 7.45 - 7.47 (m, 2 H), 7.66 (s, 2 H), 9.48 (s, 2 H). ¹³C NMR (CDCl₃, *δ*, ppm): 20.80, 30.56, 33.09, 34.70, 81.24, 126.33, 127.89, 128.17, 128.75, 131.08, 131.98, 142.46, 142.77, 162.52, 173.01. ¹¹⁹Sn NMR (CDCl₃, *δ*, ppm): -645.

### (^{Ph,Me,Me}Salen)Sn(OtBu)₂

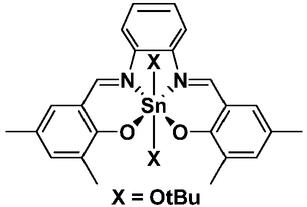

Synthesized by method B. From 1.097 g Sn(OtBu)₄ (2.70 mmol) and 1.007 g (^{Ph,Me,Me}Salen)H₂ (2.70 mmol) was obtained 0.858 g of product as a yellow powder (yield 50%). Tₘₑₗₜ. = 266-270ºC. Found (Y): C, 60.52; H, 6.25; N, 4.47. C₃₂H₄₀N₂O₄Sn. Calc. (%): C, 60.49; H, 6.35; N, 4.41. ¹H NMR (CDCl₃, *δ*, ppm): 1.31 (s, 18 H), 2.11 (s, 6 H), 2.17 (s, 6 H), 7.20 (s, 2 H), 7.29 - 7.34 (m, 2 H), 7.40 - 7.44 (m, 2 H), 7.71 (s, 2 H), 9.38 (s, 2 H). ¹³C NMR (CDCl₃, *δ*, ppm): 16.09, 20.91, 31.50, 74.16, 125.68, 126.13, 127.33, 127.97, 128.54, 130.03, 133.39, 141.17, 160.87, 171.22. ¹¹⁹Sn NMR (CDCl₃, *δ*, ppm): -629.

### (^{Ph,NO2,NO2}Sa/en)Sn(OtBu)₂

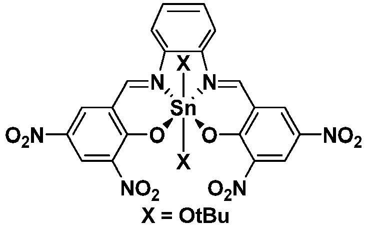

Synthesized by method A. From 1.537 g Sn(OtBu)₄ (3.77 mmol) and 1.857 g (^{Ph,NO2,NO2}Salen)H₂ (2.70 mmol) was obtained 1.932 g of product as a yellow powder (yield 67%). Tₘₑₗₜ.= 279-287ºC. Found (%): C, 44.33; H, 3.75; N, 11.19. C₂₈H₂₈N₆O₁₂Sn. Calc. (%): C, 44.29; H, 3.72; N, 11.07. ¹H NMR (CDCl₃, *δ*, ppm): 1.79 (s, 18 H), 7.30 - 7.33 (m, 2 H), 7.47 (s, 2 H), 9.01 (s, 2 H), 9.19 (s, 2 H), 9.89 (s, 2 H). ¹³C NMR (CDCl₃, *δ*, ppm): 36.52, 78.82, 129.33, 129.86, 130.75, 131.08, 131.35, 137.82, 139.19, 142.66, 169.47, 169.93. ¹¹⁹Sn NMR (CDCl₃, *δ*, ppm): -580.

### Complexes with 2+2 salan ligands

The following ligands were provided:
(^{2,Me,tBu}H-Salan)Sn(OtBu)₂; Inorganic Chemistry (2001), 40(22), 5568-5574
(^{Hex,tBu,tBu}Salan)Sn(OtBu)₂, (^{Hex,Me,tBu}Salan)Sn(OtBu)₂; Journal of the American Chemical Society (2006), 128(40), 13062-13063
(^{Ph,Me,tBu}Salan)Sn(OtBu)₂, (^{Ph,Me,Me}Salan)Sn(OtBu)₂, (^{Ph,tBu,tBu}Salan)Sn(OtBu)₂; Journal of the American Chemical Society (2008), 130(7), 2144-2145
(^{Pz,tBu,tBu}Salan)Sn(OtBu)₂, (^{Pz,Me,tBu}Salan)Sn(OtBu)₂, (^{Pz,Me,Me}Salan)Sn(OtBu)₂, (^{Pz,tBu,tBu}Salan)Sn(OEt)₂, (^{Pz,Me,tBu}Salan)Sn(OEt)₂, (^{Pz,Me,tBu}Salan)Sn(OiPr)₂, (^{Pz,Me,Me}Salan)Sn(OiPr)₂; Tetrahedron (2008), 64(1), 240-247

Thereupon, the following complexes with 2+2 salan ligands were produced according to the synthesis method indicated:
*(^{2,tBu,tBu}Sa*/*an)Sn(OtBu)₂*

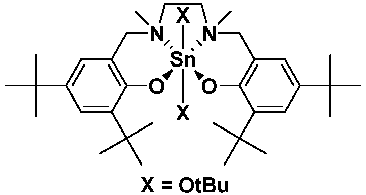

Synthesized by method C. From 1.615 g Sn(OtBu)₄ (3.93 mmol) and 2.05 g (^{2,tBu,tBu}Salan)H₂ (3.93 mmol) was obtained 1.921 g of product as a white powder (yield 62%). Found (%): C, 64.07; H, 9.31; N, 3.60. C₄₂H₇₂N₂O₄Sn. Calc. (%): C, 64.04; H, 9.21; N, 3.56. NMR ¹H (CDCl₃, *δ*, ppm): 1.23 (s, 18H), 1.26 (s, 18H), 1.44 (s, 18H), 2.48 (s, 6H), 2.94 (m, 4H), 2.97 (s, 4H) 7.25 (d, 2H, J = 2.57 Hz), 7.28 (d, 2H, J = 2.57 Hz), 8.13 (s, 2H). NMR ¹³C (CDCl₃, *δ*, ppm): 31.1, 31.3, 32.0, 33.6, 35.9, 47.9, 51.3, 57.3, 65.4, 124.3, 125.0, 125.5, 138.0, 138.6, 160.5. NMR ¹¹⁹Sn (CDCl₃, *δ*, ppm): -688.

### (^{2,Me,tBu}Salan)Sn(OtBu)₂

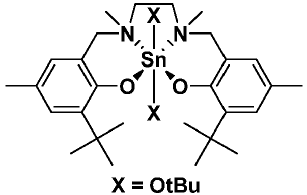

Synthesized by method C. From 1.674 g Sn(OtBu)₄ (4.11 mmol) and 1.795 g (^{2,Me,tBu}Salan)H₂ (4.11 mmol) was obtained 1.531 g of product as a white powder (yield 51%). Found (%): C, 61.46; H, 8.53; N, 3.96. C₃₆H₆₀N₂O₄Sn. Calc. (%): C, 61.45; H, 8.60; N, 3.98. NMR ¹H (CDCl₃, *δ*, ppm): 1.26 (s, 18H), 1.44 (s, 18H), 2.36 (s, 6H), 2.53 (s, 6H), 2.94 (m, 4H), 3.01 (s, 4H), 7.19 (d, 2H, J = 2.57 Hz), 7.25 (d, 2H, J = 2.57 Hz), 8.18 (s, 2H). NMR ¹³C (CDCl₃, *δ*, ppm): 32.2, 32.4, 47.9, 52.5, 57.8, 66.1, 124.5, 125.3, 125.8, 138.9, 139.5, 161.2. NMR ¹¹⁹Sn (CDCl₃, *δ*, ppm): -691.

### (^{2,tBu,tBu}H-Sa/an)Sn(OtBu)₂

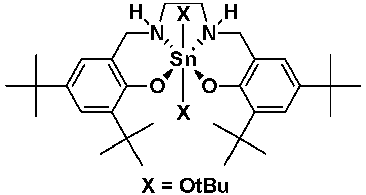

Synthesized by method D. From 0.851 g Sn(OtBu)₄ (2.07 mmol) and 1.79 g (^{2,tBu,tBu}H-Salan)H₂ (2.07 mmol) was obtained 1.114 g of product as a white powder (yield 73%). Found (%): C, 63.22; H, 8.99; N, 3.70. C₄₀H₆₈N₂O₄Sn. Calc. (%): C, 63.24; H, 9.02; N, 3.69. NMR ¹H (CDCl₃, *δ*, ppm): 1.25 (s, 18 H), 1.32 (s, 18 H), 1.35 (s, 18 H), 2.51 (br. s, 4 H), 3.86 (br. s, 4 H), 6.85 (s, 2 H), 7.13 (s, 2 H). NMR ¹³C (CDCl₃, *δ*, ppm): 28.73, 31.08, 31.51, 32.57, 33.25, 45.01, 51.32, 74.19, 120.84, 121.64, 122.20, 140.91, 140.99, 157.16. NMR ¹¹⁹Sn (CDCl₃, *δ*, ppm): -659.

### (^{2,Me,tBu}H-Salan)Sn(OtBu)₂

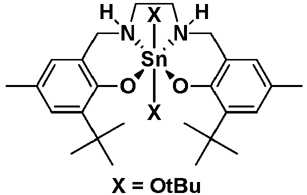

Synthesized by method D. From 1.076 g Sn(OtBu)₄ (2.62 mmol) and 1.081 g (^{2,Me,tBu}H-Salan)H₂ (2.62 mmol) was obtained 1.205 g of product as a white powder (yield 68%). Found (%): C, 60.56; H, 8.40; N, 4.18. C₃₄H₅₆N₂O₄Sn. Calc. (%): C, 60.45; H, 8.36; N, 4.15. NMR ¹H (CDCl₃, *δ*, ppm): 1.35 (s, 18 H), 1.37 (s, 18 H), 2.29 (s, 6 H), 2.58 (br. s, 4 H), 3.68 (br. s, 4 H), 6.88 (s, 2 H), 7.06 (s, 2 H). NMR ¹³C (CDCl₃, *δ*, ppm): 22.46, 30.12, 31.50, 34.79, 45.01, 48.67, 71.65, 124.59, 127.60, 128.39, 128.84, 140.05, 155.73. NMR ¹¹⁹Sn (CDCl₃, *δ*, ppm): -653.

### (^{Hex,tBu,tBu}Sa/an)Sn(OtBu)₂

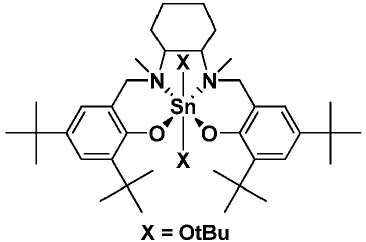

Synthesized by method H. From 1.668 g Sn(OtBu)₄ (4.06 mmol) and 2.35 g *(^{Hex,tBu,tBu}Sa*/*an*)H₂ (4.06 mmol) was obtained 2.158 g of product as a white powder (yield 68%). Tₘₑₗₜ. = 256-263ºC. Found (%): C, 65.59; H, 9.38; N, 3.30. C₄₆H₇₈N₂O₄Sn. Calc. (%): C, 65.63; H, 9.34; N, 3.33. NMR ¹H (CDCl₃, *δ*, ppm): 0.94-2.90 (m, 10H), 1.30 (s, 18H), 1.41 (s, 18H), 1.50 (s, 18H), 2.45 (s, 6H), 3.24 (s, 4H), 6.89 (d, 2H, J = 2.32 Hz), 7.29 (d, 2H, J = 2.32 Hz). NMR ¹³C (CDCl₃, *δ*, ppm): 22.0, 24.0, 30.5, 31.8, 34.0, 35.3, 54.6, 60.8, 72.6, 119.2, 123.9, 128.2, 137.4, 138.4, 158.8. NMR ¹¹⁹Sn (CDCl₃, *δ*, ppm): -688.

### (^{Hex,Me,tBu}Salan)Sn(OtBu)₂

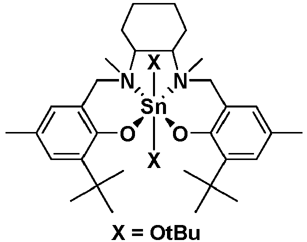

Synthesized by method H. From 1.668 g Sn(OtBu)₄ (4.06 mmol) and 2.016 g *(^{Hex,Me,tBu}Sa*/*an)*H₂ (4.06 mmol) was obtained 2.11 g of product as a white powder (yield 70%). Tₘₑₗₜ. = 270-277ºC. Found (%): C, 63.42; H, 8.74; N, 3.72. C₄₀H₆₆N₂O₄Sn. Calc. (%): C, 63.41; H, 8.78; N, 3.70. NMR ¹H (CDCl₃, *δ*, ppm): 1.08-2.92 (m, 10 H), 1.45 (s, 18H), 1.54 (s, 18H), 2.30 (s, 6H), 2.52 (s, 6H), 3.29 (m, 4H), 3.84 (s, 4H), 6.62 (d, 2H, J = 2.54 Hz), 7.15 (d, 2H, J = 2.54 Hz). NMR ¹³C (CDCl₃, *δ*, ppm): 20.6, 22.5, 24.9, 32.1, 35.0, 35.3, 56.9, 61.1, 74.6, 118.5, 123.3, 129.2, 138.1, 138.9, 157.4. NMR ¹¹⁹Sn (CDCl₃, *δ*, ppm): -692.

### (^{Ph,Me,tBu}Sa/an)Sn(OtBu)₂

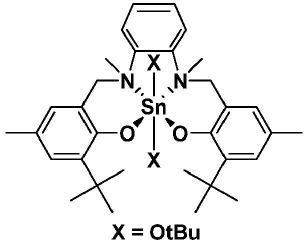

Synthesized by method A. From 1.348 g Sn(OtBu)₄ (3.28 mmol) and 1.606 g (^{Ph,Me,tBu}Salan)H₂ (3.28 mmol) was obtained 1.679 g of product as a white powder (yield 68%). Tₘₑₗₜ. = 246-250ºC. Found (%): C, 63.98; H, 8.00; N, 3.70. C₄₀H₆₀N₂O₄Sn. Calc. (%): C, 63.92; H, 8.05; N, 3.73. ¹H NMR (CDCl₃, *δ*, ppm): 1.11 (s, 18 H), 1.25 (s, 18 H), 2.12 (s, 6 H), 2.67 (s, 6 H), 3.73 (s, 4 H), 6.43 - 6.46 (m, 2 H), 6.80 (s, 2 H), 6.96 - 6.99 (m, 2 H), 7.22 (s, 2 H). ¹³C NMR (CDCl₃, *δ*, ppm): 17.83, 29.16, 30.65, 34.98, 36.77, 55.13, 71.24, 113.16, 115.67, 122.01, 125.49, 126.40, 127.73, 140.22, 139.45, 153.38. ¹¹⁹Sn NMR (CDCl₃, *δ*, ppm): -669.

### (^{Ph,Me,Me}Salan)Sn(OtBu)₂

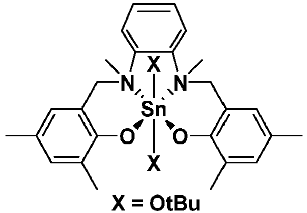

Synthesized by method A. From 1.308 g Sn(OtBu)₄ (3.18 mmol) and 1.286 g (^{Ph,Me,Me}Salan)H₂ (3.18 mmol) was obtained 1.593 g of product as a white powder (yield 75%). Tₘₑₗₜ. = 259-262ºC. Found (%): C, 61.20; H, 7.30; N, 4.21. C₃₄H₄₈N₂O₄Sn. Calc. (%): C, 61.18; H, 7.25; N, 4.20. ¹H NMR (CDCl₃, *δ*, ppm): 1.15 (s, 18 H), 1.97 (s, 6 H), 2.07 (s, 6 H), 2.91 (s, 6 H), 3.63 - 3.78 (m, 4 H), 6.50 - 6.53 (m, 2 H), 6.70 (s, 2 H), 6.94 - 6.95 (m, 2 H), 7.00 (s, 2 H). ¹³C NMR (CDCl₃, *δ*, ppm): 12.39, 16.36, 27.48, 35.01, 53.13, 63.20, 116.34, 118.97, 125.60, 126.65, 127.02, 128.41, 130.84, 138.18, 151.98. ¹¹⁹Sn NMR(CDCl₃, *δ*, ppm): -664.

### (^{Ph,tBu,tBu}Salan)Sn(OtBu)₂

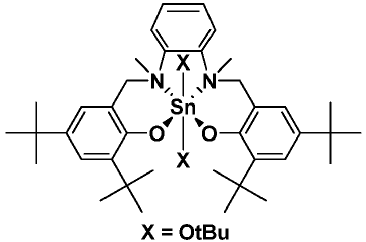

Synthesized by method A. From 1.276 g Sn(OtBu)₄ (3.10 mmol) and 1.776 g (^{Ph,tBu,tBu}Salan)H₂ (3.10 mmol) was obtained 1.312 g of product as a white powder (yield 51%). Tₘₑₗₜ. = 232-235ºC. Found (%): C, 66.11; H, 8.71; N, 3.40. C₄₆H₇₂N₂O₄Sn. Calc. (%): C, 66.10; H, 8.68; N, 3.35. ¹H NMR (CDCl₃, *δ*, ppm): 1.08 (s, 18 H), 1.22 (s, 18 H), 1.62 (s, 18 H), 3.09 (s, 6 H), 3.96 (s, 4 H), 6.53 (s, 2 H), 6.79 - 6.82 (m, 2 H), 7.05 (s, 2 H), 7.30 - 7.32 (m, 2 H). ¹³C NMR (CDCl₃, *δ*, ppm): 27.16, 28.87, 30.04, 31.54, 32.61, 35.38, 55.17, 72.85, 114.12, 117.01, 123.27, 123.95, 124.22, 138.38, 138.70, 141.34, 157.28. ¹¹⁹Sn NMR (CDCl₃, *δ*, ppm): -673.

### (^{Pz,tBu,tBu}Sa/an)Sn(OtBu)₂

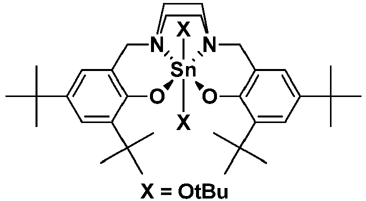

Synthesized by method C. From 1.139 g Sn(OtBu)₄ (2.77 mmol) and 1.450 g (^{Pz,tBu,tBu}Salan)H₂ (2.77 mmol) was obtained 0.529 g of product as a white powder (yield 27%). Tₘₑₗₜ. = 199-204ºC. Found (%): C, 64.25; H, 9.01; N, 3.50. C₄₂H₇₀N₂O₄Sn. Calc. (%): C, 64.20; H, 8.98; N, 3.57. ¹H NMR (CDCl₃, *δ*, ppm): 1.41 (s, 18 H), 1.48 (s, 18 H), 1.68 (s, 18 H), 3.35 - 3.46 (m, 4 H), 4.22 - 4.34 (m, 8 H), 6.98 (s, 2 H), 7.22 (s, 2 H). ¹³C NMR (CDCl₃, *δ*, ppm): 30.80, 32.90, 33.76, 35.88, 36.51, 52.03, 62.13, 74.97, 125.14, 127.37, 128.63, 140.33, 151.07, 154.18. ¹¹⁹Sn NMR (CDCl₃, *δ*, ppm): -648.

### (^{Pz,Me,tBu}Sa/an)Sn(OtBU)₂

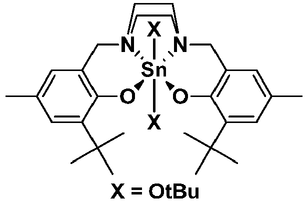

Synthesized by method C. From 1.341 g Sn(OtBu)₄ (3.26 mmol) and 1.431 g (^{Pz,Me,tBu}Salan)H₂ (3.26 mmol) was obtained 0.866 g of product as a white powder (yield 38%). Tₘₑₗₜ. = 216-221ºC. Found (%): C, 61.70; H, 8.39; N, 4.00. C₃₈H₅₈N₂O₄Sn. Calc. (%): C, 61.63; H, 8.33; N, 3.99. ¹H NMR (CDCl₃, *δ*, ppm): 1.20 (s, 18 H), 1.39 (s, 18 H), 2.53 (s, 6 H), 3.57 (s, 4 H), 4.42 - 4.53 (m, 8 H), 6.76 (s, 2 H), 7.15 (s, 2 H). ¹³C NMR (CDCl₃, *δ*, ppm): 20.02, 30.55, 32.17, 36.40, 54.11, 62.98, 74.12, 127.86, 128.73, 129.05, 129.81, 142.09, 150.34. ¹¹⁹Sn NMR (CDCl₃, *δ*, ppm): -622.

### (^{Pz,Me,Me}Salan)Sn(OtBu)₂

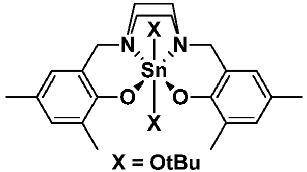

Synthesized by method C. From 1.199 g Sn(OtBu)₄ (2.92 mmol) and 1.038 g (^{Pz,Me,Me}Salan)H₂ (2.92 mmol) was obtained 0.783 g of product as a white powder (yield 43%). Tₘₑₗₜ. = 199-204ºC. Found (%): C, 58.21; H, 7.57; N, 4.56. C₃₀H₄₆N₂O₄Sn. Calc. (%): C, 58.36; H, 7.51; N, 4.54. ¹H NMR (CDCl₃, *δ*, ppm): 1.17 (s, 18 H), 2.19 (s, 6 H), 2.72 (s, 6 H), 3.60 (s, 4 H), 4.19 - 4.29 (m, 8 H), 6.66 (s, 2 H), 6.98 (s, 2 H). ¹³C NMR (CDCl₃, *δ*, ppm): 15.16, 20.28, 34.13, 51.87, 60.61, 75.39, 124.56, 128.04, 129.23, 130.07, 133.56, 149.14. ¹¹⁹Sn NMR (CDCl₃, *δ*, ppm): -608.

### (^{Pz,tBu,tBu}Sa/an)Sn(OEt)₂

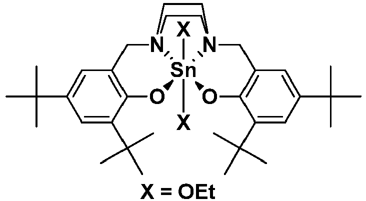

Synthesized by method G. From 0.687 g SnCl₄ (2.64 mmol) and 1.385 g (^{Pz,tBu,tBu}Salan)H₂ (2.64 mmol) was obtained 0.634 g of product as a white powder (yield 33%). Tₘₑₗₜ. = 201-206ºC. Found (%): C, 62.50; H, 8.61; N, 3.86. C₃₈H₆₂N₂O₄Sn. Calc. (%): C, 62.55; H, 8.57; N, 3.84. ¹H NMR (CDCl₃, *δ*, ppm): 1.21 (t, *J*=7.26 Hz, 6 H), 1.34 (s, 18 H), 1.43 (s, 18 H), 3.43 - 3.58 (m, 8 H), 4.50 - 4.59 (m, 8 H), 7.04 (s, 2 H), 7.29 (s, 2 H). ¹³C NMR (CDCl₃, *δ*, ppm): 19.82, 30.32, 32.05, 32.53, 34.29, 51.25, 60.57, 63.34, 124.39, 125.20, 126.77, 139.03, 140.36, 157.69. ¹¹⁹Sn NMR (CDCl₃, *δ*, ppm): -587.

### (^{Pz,Me,tBu}Sa/an)Sn(OEt)₂

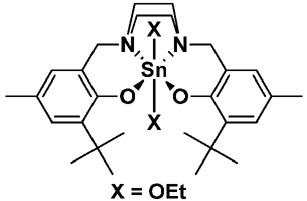

Synthesized by method G. From 0.895 g SnCl₄ (3.43 mmol) and 1.509 g (^{Pz,Me,tBu}Salan)H₂ (3.43 mmol) was obtained 0.967 g of product as a white powder (yield 44%). Tₘₑₗₜ. = 219-227ºC. Found (Y):C, 59.63; H, 7.87; N, 4.36. C₃₂H₄₀N₂O₄Sn. Calc. (%): C, 59.55; H, 7.81; N, 4.34. ¹H NMR (CDCl₃, *δ*, ppm): 1.34 (t, *J*=7.67 Hz, 6 H), 1.45 (s, 18 H), 2.24 (s, 6 H), 3.52 - 3.67 (m, 8 H), 4.29 - 4.35 (m, 8 H), 6.86 (s, 2 H), 7.08 (s, 2 H). ¹³C NMR (CDCl₃, *δ*, ppm): 18.37, 21.07, 30.75, 36.04, 53.22, 60.47, 61.50, 125.06, 128.02, 129.78, 130.36, 140.54, 152.10. ¹¹⁹Sn NMR (CDCl₃, *δ*, ppm): -562.

### (^{Pz,Me,tBu}Salan)Sn(OiPr)₂

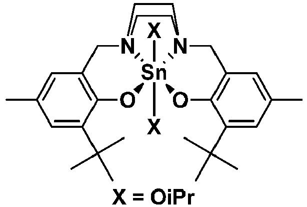

Synthesized by method E. From 1.184 g Sn(OiPr)₄ (3.33 mmol) and 1.462 g (^{Pz,Me,tBu}Salan)H₂ (3.33 mmol) was obtained 0.865 g of product as a white powder (yield 39%). Tₘₑₗₜ. = 189-195ºC. Found (%):C, 60.70; H, 8.03; N, 4.19. C₃₄H₅₄N₂O₄Sn. Calc. (%): C, 60.63; H, 8.08; N, 4.16. ¹H NMR (CDCl₃, *δ*, ppm): 1.25 (d, *J*=6.32 Hz, 12 H), 1.38 (s, 18 H), 2.37 (s, 6 H), 3.52 (s, 4H), 4.20 (spt, *J*=6.38 Hz, 2 H), 4.42 - 4.51 (m, 8 H), 6.77 (s, 2 H), 7.02 (s, 2 H). ¹³C NMR (CDCl₃, *δ*, ppm): 20.07, 26.43, 31.51, 34.84, 53.24, 60.35, 66.01, 127.60, 128.12, 127.37, 128.89, 140.05, 152.01. ¹¹⁹Sn NMR (CDCl₃, *δ*, ppm): -630.

### (^{Pz,Me,Me}Salan)Sn(OiPr)₂

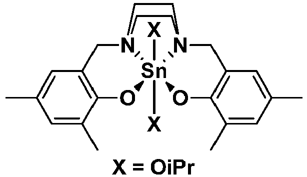

Synthesized by method E. From 1.283 g Sn(OiPr)₄ (3.62 mmol) and 1.284 g (^{Pz,Me,Me}Salan)H₂ (3.62 mmol) was obtained 1.134 g of product as a white powder (yield 53%). T_{melt.} = 246-250ºC. Found (Y):C, 57.03; H, 7.17; N, 4.77. C₂₈H₄₂N₂O₄Sn. Calc. (%): C, 57.06; H, 7.18; N, 4.75. ¹H NMR (CDCl₃, *δ*, ppm): 1.22 (d, *J*=5.95 Hz, 12 H), 2.15 (s, 6 H), 2.27 (s, 6 H), 3.53 (s, 4 H), 4.19 (spt, *J*=6.06 Hz, 2 H), 4.30 - 4.37 (m, 8 H), 6.73 (s, 2 H), 6.95 (s, 2 H). ¹³C NMR (CDCl₃, *δ*, ppm): 14.38, 18.80, 24.17, 52.01, 61.15, 66.97, 125.11, 127.32, 128.39, 130.48, 133.09, 151.69. ¹¹⁹Sn NMR (CDCl₃, *δ*, ppm): -612.

### Complexes with 2+1+1 ligands

The following ligands were provided:
(^{Me,Me}BPBA)H₂, (^{tBu,tBu}BPBA)H₂; Inorganic Chemistry (2001), 40(17), 4263-4270
(^{Me,tBu}BPBA)H₂, (^{tBu,tBu}BPAP)H₂, (^{Me,Me}BPAP)H₂, (^{Me,tBu}BPAP)H₂, (^{tBu,tBu}BPMA)H₂, (^{Me,tBu}BPMA)H₂, (^{Me,Me}BPMA)□₂, (^{NO2,NO2}BPMA)□₂; Canadian Journal of Chemistry (2008), 86(5), 435-443

Thereupon, the following complexes with 2+1+1 ligands were produced according to the synthesis method indicated:

### (^{Me,Me}BPBA)Sn(OtBu)₂

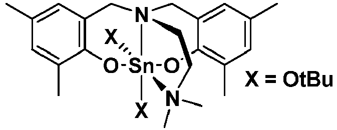

Synthesized by method D. From 1.607 g Sn(OtBu)₄ (3.91 mmol) and 1.448 g (^{Me,Me}BPBA)H₂ (3.91 mmol) was obtained 2.048 g of product as a white powder (yield 82%). Found (%): C, 68.22; H, 7.76; N, 4.55. C₃₀H₄₈N₂O₄Sn. Calc. (%): C, 58.17; H, 7.81; N, 4.52. NMR ¹H (CD₂Cl₂, *δ*, ppm): 1.51 (s, 9H), 1.69 (s, 9H), 2,41 (s, 6H), 2.70 (s, 6H), 2.79 (s, 6H), 2.84 (t, 2H, J = 3.9 Hz), 2.97 (t, 2H, J = 5.9 Hz), 3.23 (s, 2H), 3.27 (s, 2H), 6.80 (s, 2H), 7.22 (s, 2H). NMR ¹³C (CDCl₃, *δ*, ppm): 23.6, 31.6, 32,5, 33.2, 35.5, 38.9, 48.3, 53.2, 56.3, 63.9, 120.1, 125.1, 125.3, 139.0, 161.0. NMR ¹¹⁹Sn (CDCl₃, *δ*, ppm): -690.

### (^{Me,tBu}BPBA)Sn(OtBu)₂

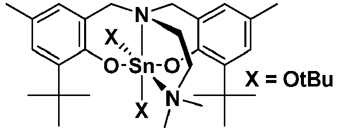

Synthesized by method D. From 1.608 g Sn(OtBu)₄ (3.91 mmol) and 1.73 g (^{Me,tBu}BPBA)H₂ (3.91 mmol) was obtained 2.203 g of product as a white powder (yield 80%). T_{melt.} = 218-223ºC. Found (%): C, 61.48; H, 8.66; N, 4.01. C₃₆H₆₀N₂O₄Sn. Calc. (%): C, 61.45; H, 8.60; N, 3.98. NMR ¹H (CDCl₃, *δ*, ppm): 1.45, (s, 9H), 1.58 (s, 9H), 1.50 (s, 18H), 2,25 (s, 4H), 2.38 (s, 6H), 2.40 (t, 2H, J = 4.4 Hz), 2.93 (d, 2H, J = 4.4 Hz), 3.18 (s, 2H), 3.15 (s, 2H), 6.69 (s, 2H), 7.11 (s, 2H). NMR ¹³C (CDCl₃, *δ*, ppm): 20.3, 31.1, 33,7, 34.5, 35.9, 39.4, 49.4, 54.3, 57.8, 65.1, 121.0, 125.1, 129.3, 129.8, 138.9, 160.3. NMR ¹¹⁹Sn (CDCl₃, *δ*, ppm): -683.

### (^{tBu,tBu}BPBA)Sn(OtBu)₂

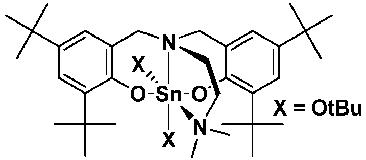

Synthesized by method E. From 1.607 g Sn(OtBu)₄ (3.91 mmol) and 2.06 g (^{tBu tBu}BPBA)H₂ (3.91 mmol) was obtained 2.411 g of product as a white powder (yield 78%). T_{melt.} = 205-209ºC. Found (%): C, 63.99; H, 9.29; N, 3.55. C₄₂H₇₄N₂O₄Sn. Calc. (%): C, 64.04; H, 9.21; N, 3.56. NMR ¹H (CDCl₃, *δ*, ppm): 1.32 (s, 18H), 1.45 (s, 9H), 1.56 (s, 9H), 1.51 (s, 18H), 2.21 (t, 2H, J = 6.11 Hz), 2.37 (s, 6H), 2.94 (t, 2H, J = 6.24 Hz), 3.23 (s, 2H), 3.19 (s, 2H), 6.85 (s, 2H), 7.33 (s, 2H). NMR ¹³C (CDCl₃, *δ*, ppm): 30.3, 31.4, 33.7, 34.3, 35.3, 49.0, 53.62, 56.8, 64.6, 72.7, 119.6, 124.6, 125.2, 137.4, 137.8, 160.2. NMR ¹¹⁹Sn (CDCl₃, *δ*, ppm): -687.

### (^{tBu,tBu}BPBA)Sn(OMe)₂

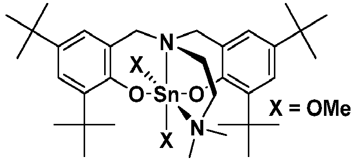

Synthesized by method I. From 0.756 g SnCl₄ (2.9 mmol) and 1.55 g (^{tBu tBu}BPBA)H₂ (2.9 mmol) was obtained 1.08 g of product as a white powder (yield 47%). T_{melt.} = 150-152ºC. Found (%): C, 60,67; H, 8,99; N, 4,30. C₃₆H₆₀N₂O₄Sn. Calc. (%): C, 61,45; H, 8,60; N, 3,98. NMR ¹H (CDCl₃, *δ*, ppm): 1,28 (s, 18H), 1,44 (s, 18H), 2,42 (s, 6H), 2,74 (t, 2H, J = 5,9 Hz), 2,97 (t, 2H, J = 5,9 Hz), 3,40 (s, 6H), 3,73 (s, 2H), 3,96 (s, 2H), 6,82 (s, 2H), 7,29 (s, 2H). NMR ¹³C (CDCl₃, *δ*, ppm): 30,1, 31,5, 33,9, 35,3, 48,0, 48,6, 54,0, 57,0, 64,4, 119,2, 125,0, 125,2, 138,5, 160,1. NMR ¹¹⁹Sn (CDCl₃, *δ*, ppm): -641.

### (^{Me,tBu} BPBA)Sn(OMe)₂

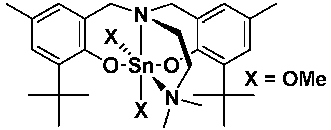

Synthesized by method I. From 0.461 g SnCl₄ (1.77 mmol) and 0.780 g (^{Me,tBu}BPBA)H₂ (1.77 mmol) was obtained 0.631 g of product as a white powder (yield 67%). T_{melt.} = 225-226ºC. Found (Y):C, 57,52; H, 8,20; N, 4,54. C₃₀H₄₈N₂O₄Sn. Calc. (%):C, 58,17; H, 7,81; N, 4,52. NMR ¹H (CDCl₃, *δ*, ppm): 1,43 (s, 18H), 2,41 (s, 6H), 2,95 (t, 2H, J = 5,9 Hz), 3,31 (d, 2H, J = 5,9 Hz), 3,40 (s, 6H), 3,72 (s, 2H), 3,96 (s, 2H), 6,66 (s, 2H), 7,07 (s, 2H). NMR ¹³C (CDCl₃, *δ*, ppm): 20,3, 30,1, 35,0, 47,9, 48,5, 54,0, 57,2, 63,9, 119,8, 124,9, 128,8, 129,0, 138,5, 160,1. NMR ¹¹⁹Sn (CDCl₃, *δ*, ppm): -634.

### ^{(Me,Me} BPBA)Sn(OMe)₂

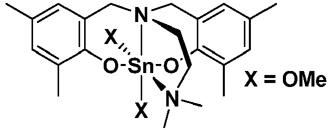

Synthesized by method I. From 1.015 g SnCl₄ (3.90 mmol) and 1.440 g (^{Me,Me}BPBA)H₂ (3.90 mmol) was obtained 1.629 g of product as a white powder (yield 78%). T_{melt.} = 245-247ºC. Found (Y):C, 53.71; H, 6.74; N, 5.19. C₂₄H₃₆N₂O₄Sn. Calc. (%):C, 53.85; H, 6.78; N, 5.23. NMR ¹H (CDCl₃, *δ*, ppm): 2.12 (s, 6 H), 2.21 (s, 6 H), 2.26 (t, 6 H, *J*= 1.56 Hz), 2.53 - 2.56 (m, 2 H), 2.57 - 2.61 (m, 2 H), 3.56 - 3.58 (m, 4 H), 3.64 (s, 6 H), 6.73 - 6.76 (m, 2 H), 6.92 - 6.95 (m, 2 H). NMR ¹³C (CDCl₃, *δ*, ppm): 16.35, 21.34, 45.56, 47.52, 53.22, 54.76, 59.32, 126.15, 128.33, 128.51, 130.84, 134.05, 157.88. NMR ¹¹⁹Sn (CDCl₃, *δ*, ppm): -662.

### (^{NO2,NO2}BPBA)Sn(OtBu)₂

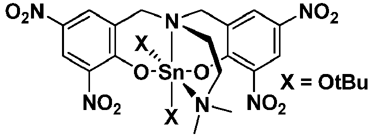

Synthesized by method D. From 1.342 g Sn(OtBu)₄ (3.26 mmol) and 1.566 g (*^{NO2,NO2} BPBA*)H₂ (3.26 mmol) was obtained 2.110 g of product as a yellow powder (yield 87%). T_{melt.} = 283-286ºC. Found (%): C, 41.96; H, 4.90; N, 11.35. C₂₆H₃₆N₆O₁₂Sn. Calc. (%): C, 42.01; H, 4.88; N, 11.31. NMR ¹H (CDCl₃, *δ*, ppm): 1.36 (s, 18 H), 2.22 (t, 6 H, *J*= 1.59), 2.56 - 2.63 (m, 2 H), 2.79 - 2.90 (m, 2 H), 4.31 (s, 6 H), 8.64 - 8.67 (m, 2 H), 8.99 - 9.01 (m, 2 H). NMR ¹³C (CDCl₃, *δ*, ppm): 33.46, 46.32, 49.61, 53.68, 56.87, 71.82, 123.28, 126.45, 130.69, 140.02, 140.58, 164.56. NMR ¹¹⁹Sn (CDCl₃, *δ*, ppm): -613.

### (^{tBu,tBU} BPMA)Sn(OtBu)₂

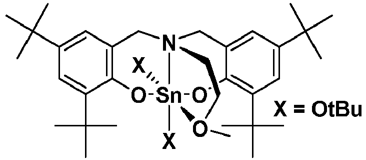

Synthesized by method C. From 1.345 g Sn(OtBu)₄ (3.27 mmol) and 1.673 g (*^{tBu,tBu}BPMA*)H₂ (3.27 mmol) was obtained 1.293 g of product as a white powder (yield 51%). T_{melt.} = 203-207ºC. Found (%): C, 63.50; H, 9.05; N, 1.75. C₄₁H₆₉NO₅Sn. Calc. (%): C, 63.57; H, 8.98; N, 1.81. NMR ¹H (CDCl₃, *δ*, ppm): 1.30 (s, 18 H), 1.45 (s, 9 H), 1.52 (s, 18 H), 1.55 (s, 9 H), 2.94 (t, *J=*5.75 Hz, 2 H), 3.00 (t, *J*=5.64 Hz, 2 H), 3.59 (s, 3 H), 6.80 (s, 2 H), 7.30 (s, 2 H). NMR ¹³C (CDCl₃, *δ*, ppm): 1.95, 29.91, 31.75, 33.64, 34.24, 35.29, 51.01, 62.07, 64.38, 68.51, 73.14, 119.49, 124.35, 124.83, 138.20, 138.50, 159.02. NMR ¹¹⁹Sn (CDCl₃, *δ*, ppm): -688.

### (^{Me,tBu} BPMA)Sn(OtBu)₂

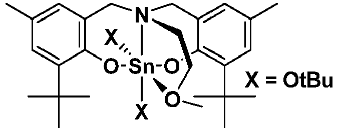

Synthesized by method C. From 1.089 g Sn(OtBu)₄ (2.65 mmol) and 1.133 g (*^{Me,tBu}BPMA*)H₂ (2.65 mmol) was obtained 0.933 g of product as a white powder (yield 51%). T_{melt.} = 197-200ºC. Found (%): C, 60.99; H, 8.21; N, 2.00. C₃₅H₅₇NO₅Sn. Calc. (%): C, 60.88; H, 8.32; N, 2.03. NMR ¹H (CDCl₃, *δ*, ppm): 1.24 (s, 18 H), 1.39 (s, 18 H), 2.63 (s, 6 H), 2.82 - 2.85 (m, 2 H), 3.21 (s, 3 H), 3.37-3.39 (m, 2 H), 3.70 - 3.75 (m, 4 H), 6.78 (s, 2 H), 7.38 (s, 2 H). NMR ¹³C (CDCl₃, *δ*, ppm): 22.36, 34.29, 37.56, 39.01, 59.68, 63.20, 63.56, 70.97, 77.50, 122.01, 125.43, 129.62, 131.34, 142.77, 153.30. NMR ¹¹⁹Sn (CDCl₃, *δ*, ppm):-678.

### (^{Me,Me}BPMA)Sn(OtBu)₂

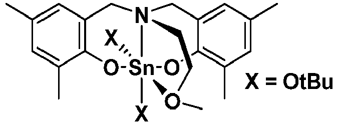

Synthesized by method C. From 1.006 g Sn(OtBu)₄ (2.45 mmol) and 0.842 g *(^{Me,Me}BPMA)*H₂ (2.45 mmol) was obtained 1.083 g of product as a white powder (yield 73%). T_{melt.} = 227-230ºC. Found (%): C, 57.45; H, 7.50; N, 2.25. C₂₉H₄₅NO₅Sn. Calc. (%): C, 57.44; H, 7.48; N, 2.31. NMR ¹H (CDCl₃, *δ*, ppm): 1.25 (s, 18 H), 2.14 (s, 6 H), 2.29 (s, 6 H), 2.99 (m, 2 H), 3.40 (s, 3 H), 3.59 (m, 2 H), 3.80 - 3.82 (m, 4 H), 6.89 (s, 2 H), 7.25 (s, 2 H). NMR ¹³C (CDCl₃, *δ*, ppm): 19.33, 21.50, 32.87, 53.99, 57.41, 63.13, 72.90, 75.11, 127.67, 129.92, 130.01, 131.18, 131.76, 156.25. NMR ¹¹⁹Sn (CDCl₃, *δ*, ppm): -669.

### (^{NO2,}^{NO2}BPMA)Sn(OiPr)₂

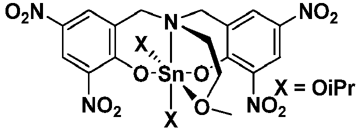

Synthesized by method E. From 0.550 g Sn(OiPr)₄ (1.55 mmol) and 0.724 g *(^{NO2,NO2} BPMA)*H₂ (1.55 mmol) was obtained 0.957 g of product as a yellow powder (yield 88%). T_{melt.} = 270-278ºC. Found (%): C, 39.17; H, 4.25; N, 10.02. C₂₃H₂₉N₅O₁₃Sn. Calc. (%): C, 39.34; H, 4.16; N, 9.97. NMR ¹H (CDCl₃, *δ*, ppm): 1.38 (d, *J*=6.57 Hz, 12 H), 3.50 (s, 3 H), 3.29 - 3.35 (m, 2 H), 3.43 - 3.48 (m, 2 H), 4.28 (spt, *J*=6.17 Hz, 2 H), 4.50 - 4.58 (m, 4 H), 8.49 (s, 2 H), 8.99 (s, 2 H). NMR ¹³C (CDCl₃, *δ*, ppm): 26.50, 55.90, 58.60, 60.03, 67.22, 72.38, 124.17, 128.19, 137.07, 140.13, 141.07, 167.14. NMR ¹¹⁹Sn (CDCl₃, *δ*, ppm): -631.

### (^{tBu,tBu}BPAP)Sn(OtBu)₂

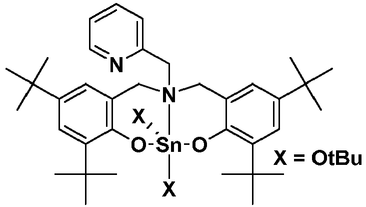

Synthesized by method E. From 1.651 g Sn(OtBu)₄ (4.0 mmol) and 2.102 g (^{tBu,tBu}BPAP)H₂ (4.0 mmol) was obtained 1.766 g of product as a white powder (yield 56%). T_{melt.} = 228-233ºC. Found (%): C, 65.28; H, 8.52; N, 3.42. C₄₄H₆₈N₂O₄Sn. Calc. (%): C, 65.43; H, 8.49; N, 3.47. ¹H NMR (CDCl₃, *δ*, ppm): 1.23 (s, 18 H) 1.26 (s, 18 H) 1.52 (s, 9 H) 1.62 (s, 9 H) 3.32 (d, *J*= 12.41 Hz, 2 H) 3.83 (s, 2 H) 5.65 (d, *J*= 12.25 Hz, 2 H) 6.46 (d, *J*=7.81 Hz, 1 H) 6.78 (d, *J*=2.55 Hz, 2 H) 7.04 (d, *J*=2.55 Hz, 2 H) 7.06 - 7.11 (m, 1 H) 7.41 (td,*J*=7.65, 1.56 Hz, 1 H) 9.31 (d, *J*=4.93 Hz, 1 H). ¹³C NMR (CDCl₃, *δ*, ppm): 29.86, 31.75, 33.65, 34.36, 35.04, 54.48, 63.04, 120.08, 120.59, 122.55, 124.08, 124.67, 128.39, 137.82, 138.70, 139.05, 149.11, 158.56. ¹¹⁹Sn NMR (CDCl₃, *δ*, ppm): -624.

### (^{Me,tBu}BPAP)Sn(OtBu)₂

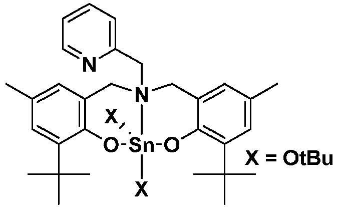

Synthesized by method E. From 1.269 g Sn(OtBu)₄ (3.09 mmol) and 1.422 g (^{Me,tBu}BPAP)H₂ (3.09 mmol) was obtained 1.095 g of product as a white powder (yield 49%). T_{melt.} = 228-233ºC. Found (%): C, 62.97; H, 7.71; N, 3.82. C₃₈H₅₆N₂O₄Sn. Calc. (%): C, 63.08; H, 7.80; N, 3.87. ¹H NMR (CDCl₃, *δ*, ppm): 1.19 (s, 18 H), 1.38 (s, 18 H), 2.44 (s, 6 H), 3.93 - 4.06 (m, 6 H), 6.92 (s, 2 H), 7.10 - 7.21 (m, 4 H), 7.39 - 7.42 (m, 1 H), 7.58 - 7.60 (m, 1 H), 8.54 - 8.56 (m, 1 H). ¹³C NMR (CDCl₃, *δ*, ppm): ¹³C NMR (151 MHz, Solvent) d ppm 20.57, 32.01, 33.61, 35.17, 57.87, 62.56, 73.09, 125.14, 125.42, 125.98, 126.87, 127.15, 129.04, 136.96, 143.73, 150.74, 155.02, 161.09. ¹¹⁹Sn NMR (CDCl₃, *δ*, ppm): -621.

### (^{Me,Me}BPAP)Sn(OtBu)₂

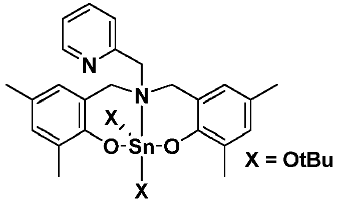

Synthesized by method E. From 1.650 g Sn(OtBu)₄ (4.0 mmol) and 2.103 g (^{Me,Me}BPAP)H₂ (4.0 mmol) was obtained 1.76 g of product as a white powder (yield 56%). T_{melt.} = 239-242ºC. Found (%): C, 65.28; H, 8.52; N, 3.42. C₄₄H₆₈N₂O₄Sn. Calc. (%): C, 65.43; H, 8.49; N, 3.47. ¹H NMR (CDCl₃, *δ*, ppm): 1.23 (s, 18 H) 1.26 (s, 18 H) 1.52 (s, 9 H) 1.62 (s, 9 H) 3.32 (d, *J*=12.41 Hz, 2 H) 3.83 (s, 2 H) 5.65 (d, *J*=12.25 Hz, 2 H) 6.46 (d, *J*=7.81 Hz, 1 H) 6.78 (d, *J*=2.55 Hz, 2 H) 7.04 (d, *J*=2.55 Hz, 2 H) 7.06 - 7.11 (m, 1 H) 7.41 (td, *J*=7.65, 1.56 Hz, 1 H) 9.31 (d, *J*=4.93 Hz, 1 H). ¹³C NMR (CDCl₃, *δ*, ppm): 29.86, 31.75, 33.65, 34.36, 35.04, 54.48, 63.04, 120.08, 120.59, 122.55, 124.08, 124.67, 128.39, 137.82, 138.70, 139.05, 149.11, 158.56. ¹¹⁹Sn NMR (CDCl₃, *δ*, ppm): -624.

### Complexes with 2+1 ligands

The following ligands were provided:
(^{Me,Me}HEAP)H₂; Tetrahedron Letters (1989), 30(11), 1433-6
(^{Me,tBu}HEAP)H₂, (^{tBu,tBu}HEAP)H₂; Dalton Transactions (2009), (15), 2777-2787
(^{tBu,tBu}HEIP)H₂, (^{Me,tBu}HEIP)H₂, (^{Me,Me}HEIP)H₂; Organometallics (2010), 29(21), 5627-5634
(^{tBu,tBu}IDP)H₂, (^{Me,tBu}IDP)H₂, (^{Me,Me}IDP)H₂; Organometallics (2007), 26(16), 4042-4047
(^{tBu,tBu}BPA)₂Sn, (^{Me,tBu}BPA)₂Sn; Inorganic Chemistry (1998), 37(19), 4945-4952

Thereupon, the following complexes with 2+1 ligands were produced according to the synthesis method indicated:
*(^{tBu,tBu}HEAP)₂Sn*

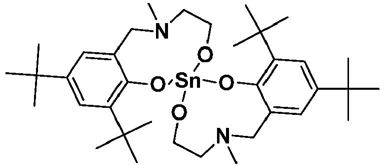

Synthesized by method E. From 0.794 g Sn(OtBu)₄ (1.93 mmol) and 1.134 g (^{tBu,tBu}HEAP)H₂ (3.86 mmol) was obtained 1.060 g of product as a white powder (yield 78%). T_{melt.} = 251-224ºC. Found (%): C, 61.69; H, 8.29; N, 3.95. C₃₆H₅₈N₂O₄Sn. Calc. (%): C, 61.63; H, 8.33; N, 3.99. ¹H NMR (CDCl₃, *δ*, ppm): 1.28 (s, 9 H), 1.30 (s, 9 H), 1.36 (s, 9 H), 1.40 (s, 9 H), 2.50 (s, 3 H), 2.57 (s, 3 H), 2.67 (dd, *J*=11.51, 3.35 Hz, 2 H), 3.93 - 4.05 (m, 4 H), 4.09 (dt, *J*=10.55, 6.42 Hz, 2 H), 5.18 (d, *J*=12.38 Hz, 1 H), 5.28 (d, *J*=12.75 Hz, 1 H), 6.78 - 6.84 (m, 2 H), 7.24 (d, *J*=2.29 Hz, 1 H), 7.28 (d, *J*=2.29 Hz, 1 H). ¹³C NMR (CDCl₃, *δ*, ppm): 29.36, 29.54, 29.88, 31.48, 34.68, 34.80, 39.29, 39.38, 56.97, 57.32, 59.48, 59.67, 62.98, 64.12, 119.15, 119.44, 124.08, 124.18, 124.76, 124.88, 137.77, 137.83, 137.94, 138.13, 138.26, 157.94. ¹¹⁹Sn NMR (CDCl₃, *δ*, ppm): -592.

### (^{Me,}^{tBu}HEAP)₂Sn

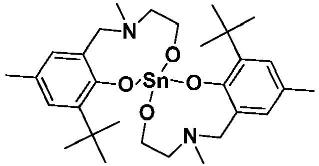

Synthesized by method E. From 1.089 g Sn(OtBu)₄ (2.65 mmol) and 1.334 g (^{Me,tBu}HEAP)H₂ (5.30 mmol) was obtained 1.046 g of product as a white powder (yield 64%). T_{melt.} = 273-277ºC. Found (%): C, 58.42; H, 7.50; N, 4.50. C₃₀H₄₆N₂O₄Sn. Calc. (%): C, 58.36; H, 7.51; N, 4.54. ¹H NMR (CDCl₃, *δ*, ppm): 1.34 (s, 9 H), 1.37 (s, 9 H), 2.24 (s, 3 H), 2.25 (s, 3 H), 2.47 - 2.53 (m, 3 H), 2.54 - 2.59 (m, 3 H), 2.64 - 2.72 (m, 2 H), 3.40 - 3.55 (m, 4 H), 3.94 - 4.06 (m, 2 H), 4.11 (dt, *J*=10.61, 5.39 Hz, 2 H), 5.21 (dd, *J*=18.62, 12.62 Hz, 2 H), 6.66 (s, 2 H), 7.05 (d, *J*=16.44 Hz, 2 H). ¹³C NMR (CDCl₃, *δ*, ppm): 20.55, 20.58, 29.43, 29.60, 29.94, 34.57, 34.64, 39.67, 57.14, 57.52, 59.67, 60.15, 62.96, 63.74, 120.05, 124.67, 124.91, 128.01, 128.10, 128.89, 138.71, 158.27. ¹¹⁹Sn NMR (CDCl₃, *δ*, ppm): -580.

### (^{Me,Me}HEAP)₂Sn

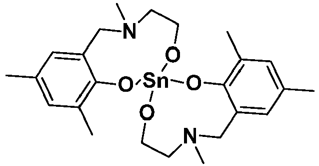

Synthesized by method E. From 1.168 g Sn(OtBu)₄ (2.84 mmol) and 1.190 g (^{Me,Me}HEAP)H₂ (5.68 mmol) was obtained 0.952 g of product as a white powder (yield 63%). T_{melt.} = 268-270ºC. Found (%): C, 54.01; H, 6.40; N, 5.31. C₂₄H₃₄N₂O₄Sn. Calc. (%): C, 54.06; H, 6.43; N, 5.25. ¹H NMR (CDCl₃, *δ*, ppm): 2.16 (s, 3 H), 1.19 (s, 3 H), 2.26 (s, 3 H), 2.28 (s, 3 H), 2.51 - 2.53 (m, 3 H), 2.55 - 2.58 (m, 3 H), 2.66 - 2.73 (m, 2 H), 3.45 - 3.56 (m, 4 H), 3.98 - 4.07 (m, 2 H), 4.19 (dt, *J*=11.51, 5.65 Hz, 2 H), 5.35 (dd, *J*=17.50, 11.60 Hz, 2 H), 6.89 (s, 2 H), 7.09 (d, *J*=14.08 Hz, 2 H). ¹³C NMR (CDCl₃, *δ*, ppm): 30.88, 31.06, 31.51, 34.83, 35.57, 40.54, 58.41, 58.75, 60.00, 60.63, 63.28, 63.85, 121.13, 125.99, 126.55, 128.07, 128.33, 128.87, 139.20, 159.78. ¹¹⁹Sn NMR (CDCl₃, *δ*, ppm):-571.

### (^{tBu,tBu}HEIP)₂Sn

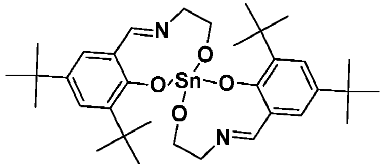

Synthesized by method E. From 1.482 g Sn(OtBu)₄ (3.61 mmol) and 2.001 g (^{tBu,tBu}HEIP)H₂ (7.21 mmol) was obtained 2.138 g of product as a yellow powder (yield 88%). T_{melt.} = 252-254ºC. Found (%): C, 61.03; H, 7.51; N, 4.15. C₃₄H₅₀N₂O₄Sn. Calc. (%): C, 61.00; H, 7.53; N, 4.18. ¹H NMR (CDCl₃, *δ*, ppm): 1.09 (s, 18 H)6 1.24 (s, 18 H), 3.71 (dt, *J*=12.41, 3.54 Hz, 2 H), 3.98 - 4.07 (m, 2 H), 4.13 (td, *J*=9.74, 4.03 Hz, 2 H), 4.25 (ddd, *J*=9.95, 5.47, 3.08 Hz, 2 H), 6.94 (d, *J*=2.47 Hz, 2 H), 7.36 (d, *J*=2.55 Hz, 2 H), 8.48 (s, 2 H). ¹³C NMR (CDCl₃, *δ*, ppm): 29.00, 30.98, 33.64, 34.80, 57.54, 60.84, 117.15, 128.61, 130.72, 138.15, 140.86, 165.43, 171.93. ¹¹⁹Sn NMR (CDCl₃, *δ*, ppm):-588.

### (^{Me,tB} HEIP)₂Sn

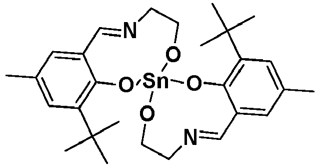

Synthesized by method E. From 1.411 g Sn(OtBu)₄ (3.43 mmol) and 1.615 g (^{Me,tBu}HEIP)H₂ (6.87 mmol) was obtained 1.780 g of product as a yellow powder (yield 89%). T_{melt.} = 233-238ºC. Found (%): C, 57.50; H, 6.52; N, 4.85. C₂₈H₃₈N₂O₄Sn. Calc. (%): C, 57.46; H, 6.54; N, 4.79. ¹H NMR (CDCl₃, *δ*, ppm): 1.08 (s, 18 H), 2.20 (s, 6 H), 3.65 - 3.77 (m, 2 H), 3.98-4.10 (m, 2 H), 4.14 (td, *J*=9.72, 3.91 Hz, 2 H), 4.26 (ddd, *J*=9.90, 5.44, 2.87 Hz, 2 H), 6.80 (d, *J*=1.47 Hz, 2 H), 7.11 (d, *J*=2.32 Hz, 2 H), 8.41 (s, 2 H). ¹³C NMR (CDCl₃, *δ*, ppm): 20.39, 29.20, 34.76, 57.81, 60.99, 117.77, 124.96, 132.44, 134.53, 141.51, 165.71, 171.74. ¹¹⁹Sn NMR (CDCl₃, *δ*, ppm): -570.

### (^{Me,Me}HEIP)₂Sn

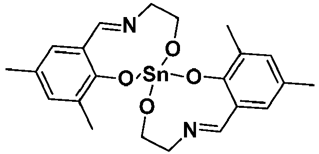

Synthesized by method E. From 1.397 g Sn(OtBu)₄ (3.40 mmol) and 1.314 g (^{Me,Me}HEIP)H₂ (6.80 mmol) was obtained 1.469 g of product as a yellow powder (yield 86%). T_{melt.} = 220-228ºC. Found (%): C, 52.70; H, 5.25; N, 5.62. C₂₂H₂₆N₂O₄Sn. Calc. (%): C, 52.72; H, 5.23; N, 5.59. ¹H NMR (CDCl₃, *δ*, ppm): 1.81 (s, 6 H), 2.15 (s, 6 H), 3.63 - 3.80 (m, 2 H), 3.89 - 3.99 (m, 2 H), 4.07 (ddd, *J*=9.99, 8.67, 4.19 Hz, 2 H), 4.18 (ddd, *J*=9.80, 5.45, 3.90 Hz, 2 H), 6.77 (d, *J*=1.56 Hz, 2 H), 6.97 (d, *J*=1.89 Hz, 2 H), 8.38 (s, 2 H). ¹³C NMR (CDCl₃, *δ*, ppm): 15.76, 19.95, 57.79, 61.22, 116.55, 125.22, 130.78, 131.46, 137.56, 164.28, 171.16. ¹¹⁹Sn NMR (CDCl₃, *δ*, ppm): -550.

### (^{tBu,tBu}BPA)₂Sn

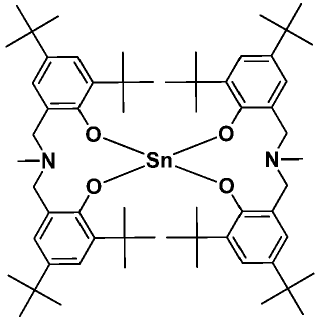

Synthesized by method D. From 1.248 g Sn(OtBu)₄ (3.04 mmol) and 2.844 g (^{tBu,tBu}BPA)H₂ (6.07 mmol) was obtained 2.190 g of product as a white powder (yield 69%). T_{melt.} = 269-274ºC. Found (%): C, 70.84; H, 8.99; N, 2.70. C₆₂H₉₄N₂O₄Sn. Calc. (%): C, 70.91; H, 9.02; N, 2.67. ¹H NMR (CDCl₃, *δ*, ppm): 0.87 (s, 18 H), 1.27 (s, 18 H), 1.30 (s, 18 H), 1.46 (s, 18 H), 2.63 (s, 6 H), 3.15 - 3.34 (m, 4 H), 5.57 - 5.65 (m, 2 H), 6.08 - 6.16 (m, 2 H), 6.79 (d, *J*=2.47 Hz, 2 H), 6.83 (d, *J*=2.47 Hz, 2 H), 7.11 (d, *J*=2.55 Hz, 2 H), 7.29 (d, *J*=2.63 Hz, 2 H). ¹³C NMR (CDCl₃, *δ*, ppm): 29.25, 30.16, 31.64, 31.67, 33.89, 33.96, 34.47, 34.88, 43.55, 64.42, 64.95, 119.10, 120.03, 124.30, 124.79, 125.45, 137.56, 137.97, 138.62, 138.89, 157.69, 158.87. ¹¹⁹Sn NMR (CDCl₃, *δ*, ppm):-680.

### (^{Me,tBu}BPA)₂Sn

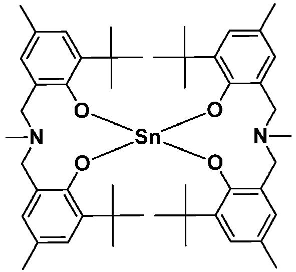

Synthesized by method D. From 1.193 g Sn(OtBu)₄ (2.90 mmol) and 2.227 g (^{Me,tBu}BPA)H₂ (5.81 mmol) was obtained 1.975 g of product as a white powder (yield 77%). T_{melt.} = 282-290ºC. Found (%): C, 68.17; H, 8.10; N, 3.14. C₅₀H₇₀N₂O₄Sn. Calc. (%): C, 68.10; H, 8.00; N, 3.18. ¹H NMR (CDCl₃, *δ*, ppm): 0.93 (s, 18 H), 1.36 (s, 18 H), 2.07 (s, 6 H), 2.16 (s, 6 H), 2.81 (s, 6 H), 3.19 - 3.32 (m, 4 H), 5.59 - 5.66 (m, 2 H), 6.15-6.19 (m, 2 H), 6.93 (d, *J*=2.47 Hz, 2 H), 7.02 (d, *J*=2.30 Hz, 2 H), 7.19 (d, *J*=2.36 Hz, 2 H), 7.41 (d, *J*=2.63 Hz, 2 H). ¹³C NMR (CDCl₃, *δ*, ppm): 28.15, 30.22, 32.09, 34.88, 35.17, 35.11, 45.67, 65.20, 65.99, 120.13, 121.47, 124.19, 125.95, 126.82, 135.16, 137.54, 138.60, 138.73, 156.23, 157.76. ¹¹⁹Sn NMR (CDCl₃, *δ*, ppm):-630.

### (^{tBu,tBU}IDP)₂Sn

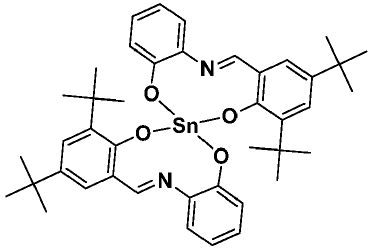

Synthesized by method B. From 1.492 g Sn(OtBu)₄ (3.63 mmol) and 2.322 g (^{tBu,tBu}IDP)H₂ (7.26 mmol) was obtained 2.361 g of product as an orange powder (yield 85%). T_{melt.} = 280-291ºC. Found (%): C, 65.81; H, 6.61; N, 3.70. C₄₂H₅₀N₂O₄Sn. Calc. (%): C, 65.89; H, 6.58; N, 3.66. ¹H NMR (CDCl₃, *δ*, ppm): 1.04 (s, 18 H), 1.30 (s, 18 H), 6.75 - 6.82 (m, 2 H), 6.89 (dd, *J*=8.18, 1.27 Hz, 2 H), 7.10 - 7.16 (m, 2 H), 7.17 (d, *J*=2.47 Hz, 2 H), 7.46 (d, *J*=2.47 Hz, 2 H), 7.54 (dd, *J*=8.22, 1.40 Hz, 2 H), 8.92 (s, 2 H). ¹³C NMR (CDCl₃, *δ*, ppm): 29.09, 31.21, 34.08, 35.07, 113.79, 117.29, 117.59, 118.71, 129.29, 129.76, 129.83, 132.08, 139.79, 141.58, 155.13, 162.00, 165.29. ¹¹⁹Sn NMR (CDCl₃, *δ*, ppm):-659.

### (^{Me,tBu}IDP)₂Sn

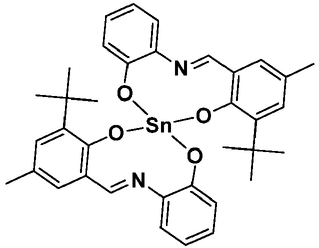

Synthesized by method B. From 1.223 g Sn(OtBu)₄ (2.98 mmol) and 1.684 g (^{Me,tBu}IDP)H₂ (5.95 mmol) was obtained 1.819 g of product as an orange powder (yield 90%). T_{melt.} = 273-280ºC. Found (%): C, 65.81; H, 6.61; N, 4.17. C₃₆H₃₈N₂O₄Sn. Calc. (%): C, 63.50; H, 5.60; N, 4.11. ¹H NMR (CDCl₃, *δ*, ppm): 1.06 (s, 18 H), 2.29 (s, 6 H), 6.82 (ddd, *J*=8.24, 7.26, 1.19 Hz, 2 H), 6.92 (dd, >8.22, 1.23 Hz, 2 H), 7.07 (d, *J*=1.23 Hz, 2 H), 7.15 - 7.21 (m, 2 H), 7.23 (d, *J*=2.14 Hz, 2 H), 7.53 (dd, >8.22, 1.40 Hz, 2 H), 8.90 (s, 2 H). ¹³C NMR (CDCl₃, *δ*, ppm): 29.05, 34.79, 113.72, 117.64, 117.72, 118.74, 126.46, 129.65, 129.94, 132.85, 135.52, 141.94, 155.15, 161.48, 165.29. ¹¹⁹Sn NMR (CDCl₃, *δ*, ppm): -668.

### (^{Me,Me} IDP)₂Sn

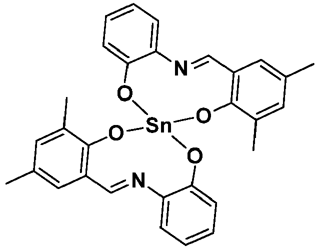

Synthesized by method B. From 0.957 g Sn(OtBu)₄ (2.33 mmol) and 1.123 g (^{Me,Me}IDP)H₂ (4.66 mmol) was obtained 1.205 g of product as an orange powder (yield 87%). T_{melt.} = 254-262ºC. Found (%): C, 60.26; H, 4.35; N, 4.70. C₃₀H₂₆N₂O₄Sn. Calc. (%): C, 60.33; H, 4.39; N, 4.69. ¹H NMR (CDCl₃, *δ*, ppm): 2.13 (s, 6 H), 2.34 (s, 6 H), 6.90 (ddd, *J*=8.17, 7.10, 1.12 Hz, 2 H), 6.94 (dd, *J*=8.19, 1.18 Hz, 2 H), 7.12 (d, *J*=1.20 Hz, 2 H), 7.18 -7.22 (m, 2 H), 7.25 (d, *J*=2.19 Hz, 2 H), 7.61 (dd, *J*=8.15, 1.25 Hz, 2 H), 8.92 (s, 2 H). ¹³C NMR (CDCl₃, *δ*, ppm): 33.50, 35.07, 114.02, 116.89, 117.53, 118.80, 126.54, 130.01, 130.85, 131.93, 136.41, 142.63, 156.70, 162.89, 166.53. ¹¹⁹Sn NMR (CDCl₃, *δ*, ppm): -654.

### Complexes with 1 + 1 ligands

The following ligands were provided:
(^{tBu,tBu}AP)□, (^{Me,Me}AP)□; Dalton Transactions (2011), 40(37), 9601-9607
(^{Me,tBu,tBu}IP)H, (^{Me,Me,tBu}IP)H, (^{Me,Me,Me}IP)H, (^{Ph,tBu,tBu}IP)H, (^{Ph,Me,tBu}IP)H, (^{Ph,Me,Me}IP)H, (^{Cy,tBu,tBu}IP)H, (^{Cy,Me,tB}IP)H, (^{Cy,Me,Me}IP)H, (^{Me,NO2,NO2}IP)H; Macromolecules (2010), 43(10), 4562-4572

Thereupon, the following complexes with 1+1 ligands were produced according to the synthesis method indicated:
*(^{tBu,tBu}AP)₂Sn(OtBu)₂*

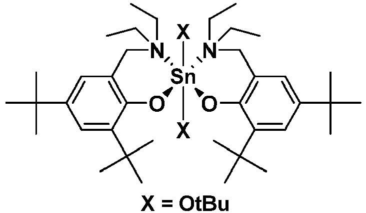

Synthesized by method E. From 1.608 g Sn(OtBu)₄ (3.91 mmol) and 1.685 g ^{tBu,tBu}APH (7.82 mmol) was obtained 1.164 g of product as a white powder (yield 44%). T_{melt.} = 201-209ºC. Found (%): C, 65.28; H, 9.84; N, 3.34. C₄₆H₈₂N₂O₄Sn. Calc. (%): C, 65.32; H, 9.77; N, 3.31. NMR¹H (CDCl₃, *δ*, ppm): 1.04 (t, 12H, J = 9.2 Hz), 1.29 (s, 18H), 1.45 (s, 18H), 1.53 (s, 18H), 2.64 (q, 8H, J = 9.2 Hz), 4.02 (br. s, 4H), 6.80 (d, 2H, J = 2.57 Hz), 7.31 (d, 2H, J = 2.57 Hz). NMR¹³C (CDCl₃, *δ*, ppm): 10.9, 30.1, 31.3, 33.0, 34.9, 44.7, 59.1, 73.3, 120.9, 123.6, 125.3, 130.9, 139.4, 156.4. NMR ¹¹⁹Sn (CDCl₃, *δ*, ppm): -576.

### (^{Me,Me}AP)₂Sn(OtBu)₂

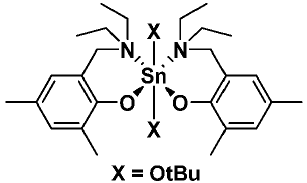

Synthesized by method E. From 1.669 g Sn(OtBu)₄ (4.06 mmol) and 1.68 g ^{Me,Me}APH (8.12 mmol) was obtained 1.312 g of product as a white powder (yield 40%). T_{melt.} = 216-221ºC. Found (%): C, 60.31; H, 8.70; N, 4.10. C₃₄H₅₈N₂O₄Sn. Calc. (%): C, 60.27; H, 8.63; N, 4.13. NMR ¹H (CDCl₃, *δ*, ppm): 1.27 (t, 12H, J = 13 Hz), 1.50 (s, 18H), 2.21 (s, 12H), 2.24 (s, 6H), 2.27 (q, 8H,J = 13 Hz), 3.47 (s, 4H), 6.63 (d, 2H, J = 1.71 Hz), 6.80 (d, 2H, J = 1.71 Hz). NMR ¹³C (CDCl₃, *δ*, ppm): 16.4, 14.5, 20.6, 49.6, 64.5, 65.6, 119.8, 127.2, 129.3, 132.4. NMR ¹¹⁹Sn (CDCl₃, *δ*, ppm): -608.

### (^{Me,tBu,tBu}IP)Sn(OtBu)₂

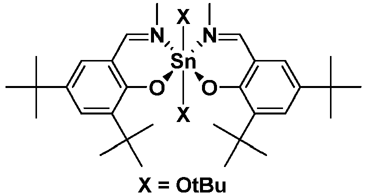

Synthesized by method F. From 1.388 g Sn(OtBu)₄ (3.38 mmol) and 1.671 g (^{Me,tBu,tBu}IP)H (6.75 mmol) was obtained 1.405 g of product as a yellow powder (yield 55%). T_{melt.} = 239-246ºC. Found (%): C, 63.38; H, 8.80; N, 3.72. C₄₀H₆₆N₂O₄Sn. Calc. (%): C, 63.41; H, 8.78; N, 3.70. ¹H NMR (CDCl₃, *δ*, ppm): 0.98 (s, 18 H), 1.26 (s, 18 H), 1.31 (s, 18 H), 3.22 (s, 6 H), 7.21 (s, 2 H), 7.34 (s, 2 H), 8.86 (s, 2 H). ¹³C NMR (CDCl₃, *δ*, ppm): 26.14, 27.35, 30.10, 31.47, 32.96, 44.23, 78.48, 117.17, 125.05, 125.99, 134.18, 138.30, 160.77, 173.94. ¹¹⁹Sn NMR (CDCl₃, *δ*, ppm): -657.

### (^{Me,Me,tBu}IP)Sn(OtBu)₂

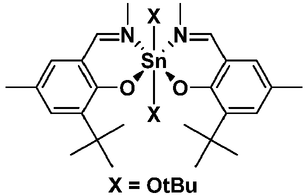

Synthesized by method F. From 1.647 g Sn(OtBu)₄ (4.01 mmol) and 1.649 g (^{Me,Me,tBu}IP)H (8.02 mmol) was obtained 1.903 g of product as a yellow powder (yield 70%). T_{melt.} = 215-218ºC. Found (Y): C, 60.61; H, 8.14; N, 4.13. C₃₄H₅₄N₂O₄Sn. Calc. (%): C, 60.63; H, 8.08; N, 4.16. ¹H NMR (CDCl₃, *δ*, ppm): 1.16 (s, 18 H), 1.22 (s, 18 H), 2.27 (s, 6 H), 3.55 (s, 6 H), 7.17 (s, 2 H), 7.33 (s, 2 H), 8.59 (s, 2 H). ¹³C NMR (CDCl₃, *δ*, ppm): 18.50, 29.16, 30.29, 33.97, 46.25, 79.88, 120.42, 125.73, 130.09, 130.86, 143.30, 156.85, 170.02. ¹¹⁹Sn NMR (CDCl₃, *δ*, ppm): -652.

### (^{Me,Me,Me}IP)Sn(OtBu)₂

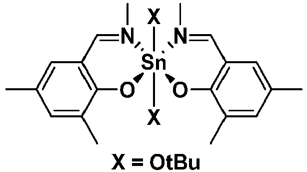

Synthesized by method F. From 1.397 g Sn(OtBu)₄ (3.40 mmol) and 1.110 g (^{Me,Me,Me}IP)H (6.80 mmol) was obtained 1.913 g of product as a yellow powder (yield 95%). T_{melt.} = 221-225ºC. Found (%): C, 56.98; H, 7.20; N, 4.73. C₂₈H₄₂N₂O₄Sn. Calc. (%): C, 57.06; H, 7.18; N, 4.75. ¹H NMR (CDCl₃, *δ*, ppm): 1.07 (s, 18 H), 1.63 (s, 6 H), 1.88 (s, 6 H), 3.20 (s, 6 H), 7.21 (s, 2 H), 7.31 (s, 2 H), 8.52. ¹³C NMR (CDCl₃, *δ*, ppm): 16.34, 19.50, 31.94, 46.07, 78.61, 121.67, 124.51, 125.06, 128.31, 130.44, 155.67, 169.93. ¹¹⁹Sn NMR(CDCl₃, *δ*, ppm):-643.

### (^{Ph,tBu,tBu}IP)Sn(OtBu)₂

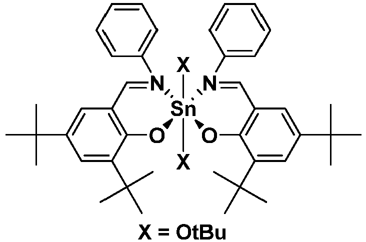

Synthesized by method E. From 1.157 g Sn(OtBu)₄ (2.82 mmol) and 1.742 g (^{Ph,tBu,tBu}IP)H (5.63 mmol) was obtained 0.983 g of product as a yellow powder (yield 40%). T_{melt.} = 221-225ºC. Found (%): C, 68.07; H, 7.99; N, 3.17. C₅₀H₇₀N₂O₄Sn. Calc. (%): C, 68.10; H, 8.00; N, 3.18. ¹H NMR (CDCl₃, *δ*, ppm): 1.06 (s, 18 H), 1.23 (s, 18 H), 1.33 (s, 18 H), 7.10 - 7.15 (m, 4 H), 7.19 - 7.21 (m, 2 H), 7.43 (s, 2 H), 7.38 - 7.43 (m, 4 H), 7.61 (s, 2 H), 8.83 (s, 2 H). ¹³C NMR (CDCl₃, *δ*, ppm): 20.74, 25.08, 28.46, 30.09, 31.57, 79.34, 120.04, 121.76, 124.30, 126.22, 128.16, 128.88, 139.00, 139.41, 148.17, 160.97, 170.54. ¹¹⁹Sn NMR (CDCl₃, *δ*, ppm): -658.

### (^{Ph,Me,tBu}IP)Sn(OtBu)₂

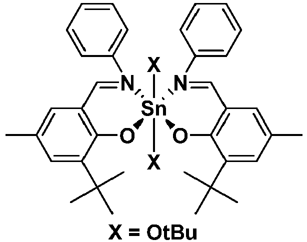

Synthesized by method E. From 1.264 g Sn(OtBu)₄ (3.08 mmol) and 1.645 g (^{Ph,Me,tBu}IP)H (6.15 mmol) was obtained 1.174 g of product as a yellow powder (yield 48%). T_{melt.} = 236-240ºC. Found (%): C, 66.30; H, 7.39; N, 3.48. C₄₄H₅₈N₂O₄Sn. Calc. (%): C, 66.25; H, 7.33; N, 3.51. ¹H NMR (CDCl₃, *δ*, ppm): 1.13 (s, 18 H), 1.25 (s, 18 H), 2.09 (s, 6 H), 7.10 - 7.14 (m, 4 H), 7.18 - 7.20 (m, 2 H), 7.31 (s, 2 H), 7.46 - 7.49 (m, 4 H), 7.51 (s, 2 H), 8.93 (s, 2 H). ¹³C NMR (CDCl₃, *δ*, ppm): 17.36, 29.14, 32.88, 33.50, 78.44, 116.35, 120.76, 124.90, 125.91, 128.38, 130.87, 131.06, 141.54, 148.27, 157.65, 166.22. ¹¹⁹Sn NMR (CDCl₃, *δ*, ppm):-639.

### (^{Ph,Me,Me}IP)Sn(OtBu)₂

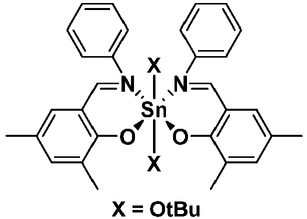

Synthesized by method E. From 1.341 g Sn(OtBu)₄ (3.26 mmol) and 1.470 g (^{Ph,Me,Me}IP)H (6.53 mmol) was obtained 1.419 g of product as a yellow powder (yield 61%). T_{melt.} = 264-269ºC. Found (%): C, 64.02; H, 6.46; N, 4.00. C₃₈H₄₆N₂O₄Sn. Calc. (%): C, 63.97; H, 6.50; N, 3.93. ¹H NMR (CDCl₃, *δ*, ppm): 1.04 (s, 18 H), 2.13 (s, 6 H), 2.19 (s, 6 H), 7.09 - 7.13 (m, 4 H), 7.19 - 7.20 (m, 2 H), 7.23 (s, 2 H), 7.47 - 7.49 (m, 4 H), 7.61 (s, 2 H), 9.01 (s, 2 H). ¹³C NMR (CDCl₃, *δ*, ppm): 13.50, 18.64, 30.12, 80.94, 121.00, 123.27, 124.98, 127.43, 128.05, 128.37, 131.70, 134.16, 148.57, 156.01, 169.40. ¹¹⁹Sn NMR (CDCl₃, *δ*, ppm): -615.

### (^{Cy,}^{tBu,tBu}IP)Sn(OtBu)₂

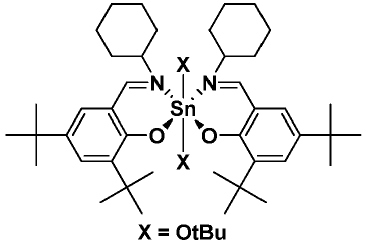

Synthesized by method B. From 1.467 g Sn(OtBu)₄ (3.57 mmol) and 2.252 g (^{Cy,tBu,tBu}IP)H (7.14 mmol) was obtained 1.074 g of product as a yellow powder (yield 34%). T_{melt.} = 203-209ºC. Found (%): C, 67.14; H, 9.28; N, 3.15. C₅₀H₈₂N₂O₄Sn. Calc. (%): C, 67.18; H, 9.25; N, 3.13. ¹H NMR (CDCl₃, *δ*, ppm): 1.09 (s, 18 H), 1.12-1.43 (m, 48 H), 1.49 - 1.52 (m, 4 H), 1.63 - 1.66 (m, 4 H), 3.65 - 3.70 (m, 2 H), 7.32 (s, 2 H), 7.49 (s, 2 H), 8.73 (s, 2 H). ¹³C NMR (CDCl₃, *δ*, ppm): 21.64, 22.10, 27.16, 29.68, 30.12, 31.75, 31.96, 33.24, 54.08, 77.98, 123.50, 125.54, 127.44, 133.80, 138.37, 158.51, 162.61. ¹¹⁹Sn NMR (CDCl₃, *δ*, ppm):-689.

### (^{Cy,Me,tBu}IP)Sn(OtBu)₂

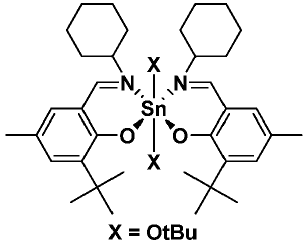

Synthesized by method B. From 1.084 g Sn(OtBu)₄ (2.64 mmol) and 1.441 g (^{Cy,Me,tBu}IP)H (5.27 mmol) was obtained 0.807 g of product as a yellow powder (yield 38%). T_{melt.} = 190-198ºC. Found (%): C, 65.32; H, 8.63; N, 3.45. C₄₄H₇₀N₂O₄Sn. Calc. (%): C, 65.26; H, 8.71; N, 3.46. ¹H NMR(CDCl₃, *δ*, ppm): 1.13 - 1.34 (m, 46 H), 1.50 - 1.59 (m, 8 H), 1.60 - 1.66 (m, 4 H), 2.17 (s, 6 H), 3.52 - 3.56 (m, 2 H), 7.30 (s, 2 H), 7.38 (s, 2 H), 8.82 (s, 2 H). ¹³C NMR (CDCl₃, *δ*, ppm): 19.13, 20.36, 25.85, 28.90, 32.75, 32.96, 35.27, 58.66, 78.83, 122.17, 125.74, 130.08, 131.73, 140.11, 155.88, 160.67. ¹¹⁹Sn NMR (CDCl₃, *δ*, ppm): -670.

### (^{Cy,Me,Me}IP)Sn(OtBu)₂

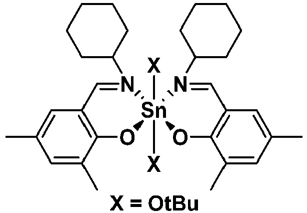

Synthesized by method B. From 1.058 g Sn(OtBu)₄ (2.57 mmol) and 1.190 g (^{Cy,Me,Me}IP)H (5.15 mmol) was obtained 1.194 g of product as a yellow powder (yield 64%). T_{melt.} = 235-239ºC. Found (%): C, 62.99; H, 7.99; N, 3.85. C₃₈H₅₈N₂O₄Sn. Calc. (%): C, 62.90; H, 8.06; N, 3.86. ¹H NMR (CDCl₃, *δ*, ppm): 1.19 - 1.29 (m, 26 H), 1.59 - 1.64 (m, 8 H), 1.63 - 1.68 (m, 4 H), 2.13 (s, 6 H), 2.26 (s, 6 H), 3.59 - 3.62 (m, 2 H), 7.29 (s, 2 H), 7.47 (s, 2 H), 8.79 (s, 2 H). ¹³C NMR (CDCl₃, *δ*, ppm): 15.24, 18.60, 20.02, 24.17, 31.94, 32.75, 57.30, 80.37, 124.64, 126.45, 127.39, 128.82, 130.18, 155.61, 165.20. ¹¹⁹Sn NMR(CDCl₃, *δ*, ppm): -676.

### (^{Me,}^{NO2,NO2}IP)Sn(OtBu)₂

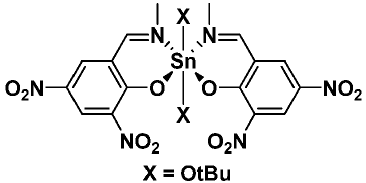

Synthesized by method F. From 0.712 g Sn(OtBu)₄ (1.73 mmol) and 0.781 g (^{Me,NO2,NO2}IP)H (3.46 mmol) was obtained 0.964 g of product as a yellow powder (yield 78%). T_{melt.} = 239-245ºC. Found (%): C, 40.40; H, 4.25; N, 11.80. C₂₄H₃₀N₆O₁₂Sn. Calc. (%): C, 40.42; H, 4.24; N, 11.78. ¹H NMR (CDCl₃, *δ*, ppm): 1.93 (s, 18 H), 3.82 (s, 6 H), 8.80 (d, *J*=1.97, 2 H), 9.05 (d, J = 2.01 Hz, 2 H), 9.17 (s, 2 H). ¹³C NMR (CDCl₃, *δ*, ppm): 36.72, 49.35, 78.93, 124.70, 128.39, 128.87, 139.44, 140.20, 169.53, 173.15. ¹¹⁹Sn NMR (CDCl₃, *δ*, ppm):-560.

### 3. Use of catalysts in polyurethanes synthesis

A method for using the above-mentioned tin(IV) complexes to produce polyurethane is described in the following. The method consists of adding a solution of the above-mentioned catalyst in an organic solvent (THF) to a two-component mixture at a given temperature. The method is explained by examples of its implementation:
Specifically, to a vigorously stirred solution of 4.5 ml (5.1 g, 8.4 mmol) polyethyleneglycol-600 1.35 ml (1.40 g, 8.3 mmol), hexamethylene diisocyanate was added (temperature control was performed by thermostating the reaction mixture at room temperature, 65°C, 90°C before adding the catalyst), and then the solution of the catalyst to be tested in 0.25 ml in THF was added as fast as possible. The flask with the reactants then was put into an oil bath at room temperature, 65°C or 90°C (depending on the experiment), and then time count was started. The end of reaction was defined as the stop of the magnetic stirrer. The time from start to stop is taken as the gelation time. Experiments conducted in air and in an inert gas atmosphere at different temperatures were compared.

Table 1 gives an overview of the tests and results obtained. The tests conducted demonstrate the thermo-latent characteristics of the disclosed tin (IV) complexes in the process of producing polyurethane. The molar concentration of the catalyst is given with respect to the molar amount of the polyisocyanate. Table 2 gives an overview of the characteristics of selected catalysts.

**Table 1: Gelation time with selected tin catalysts. No gelation was observed at 25°C for all complexes within at least 1 hour.**

| Catalyst | c, % mol. | Gelation time | | | |
|---|---|---|---|---|---|
| | | In argon | | On air | |
| | | t, s (65ºC) | t, s (90ºC) | t, s (65ºC) | t, s (90ºC) |
| | | | | | |
| no catalyst | - | 2580 | 750 | 2580 | 750 |
| | | | | | |
| (^{Me,Me}BPBA)Sn(OtBu)₂ | 1 | 380 | 150 | 390 | 200 |
| | 0.5 | 465 | 220 | 460 | 210 |
| | 0.2 | 490 | 250 | 520 | 255 |
| | 0.1 | 570 | 320 | 610 | 330 |
| (^{Me,tBu}BPBA)Sn(OtBu)₂ | 1 | 435 | 230 | 460 | 240 |
| | 0.5 | 485 | 265 | 645 | 275 |
| | 0.2 | 860 | 260 | 970 | 285 |
| | 0.1 | 1065 | 365 | 1090 | 390 |
| (^{tBu tBu}BPBA)Sn(OtBu)₂ | 1 | 375 | 150 | 410 | 130 |
| | 0.5 | 350 | 130 | 340 | 165 |
| | 0.2 | 360 | 155 | 380 | 150 |
| | 0.1 | 390 | 190 | 390 | 180 |
| (^{Me,tBu}BPMA)Sn(OtBu)₂ | 1 | 410 | 230 | 470 | 245 |
| | 0.5 | 445 | 275 | 560 | 280 |
| | 0.2 | 585 | 285 | 630 | 295 |
| | 0.1 | 725 | 415 | 690 | 420 |
| (^{tBu,tBu}BPMA)Sn(OtBu)₂ | 1 | 525 | 265 | 680 | 245 |
| | 0.5 | 600 | 380 | 810 | 350 |
| | 0.2 | 810 | 630 | 1000 | 575 |
| | 0.1 | 1020 | 660 | 1080 | 645 |
| (^{NO2,NO2}BPBA)Sn(OtBu)₂ | 1 | 510 | 165 | 575 | 180 |
| | 0.5 | 890 | 215 | 1115 | 325 |
| | 0.2 | 1080 | 345 | 1210 | 350 |
| | 0.1 | 1210 | 370 | 1275 | 365 |
| (^{2Ph,Me,Me}Salen)Sn(OtBu)₂ | 1 | 470 | 195 | 505 | 250 |
| | 0.5 | 605 | 200 | 640 | 245 |
| | 0.2 | 905 | 150 | 940 | 250 |
| | 0.1 | 1245 | 145 | 1210 | 175 |
| (^{2Ph,Me,tBu}Salen)Sn(OtBu)₂ | 1 | 765 | 175 | 605 | 250 |
| | 0.5 | 925 | 290 | 890 | 240 |
| | 0.2 | 1020 | 320 | 1145 | 270 |
| | 0.1 | 1305 | 365 | 1335 | 370 |
| (^{2Ph,tBu,tBu}Salen)Sn(OtBu)₂ | 1 | 380 | 140 | 315 | 150 |
| | 0.5 | 450 | 155 | 410 | 200 |
| | 0.2 | 575 | 240 | 605 | 225 |
| | 0.1 | 745 | 245 | 775 | 335 |
| (^{3,tBu,tBu}Salen)Sn(OtBu)₂ | 1 | 620 | 325 | 590 | 335 |
| | 0.5 | 790 | 340 | 765 | 350 |
| | 0.2 | 990 | 375 | 975 | 370 |
| | 0.1 | 1080 | 425 | 1110 | 455 |
| (1) (^{3,Me,tBu}Salen)Sn(OtBu)₂ | 1 | 325 | 215 | 360 | 230 |
| | 0.5 | 395 | 200 | 435 | 210 |
| | 0.2 | 650 | 270 | 755 | 245 |
| | 0.1 | 1045 | 335 | 1155 | 340 |
| (^{2,Me,Me}Salen)Sn(OtBu)₂ | 1 | 200 | 130 | 210 | 130 |
| | 0.5 | 320 | 180 | 385 | 170 |
| | 0.2 | 385 | 200 | 470 | 250 |
| | 0.1 | 600 | 250 | 600 | 255 |
| (^{2,tBu,tBu}Salen)Sn(OtBu)₂ | 1 | 765 | 245 | 850 | 255 |
| | 0.5 | 1020 | 355 | 1105 | 360 |
| | 0.2 | 1235 | 445 | 1275 | 455 |
| | 0.1 | 1620 | 530 | 1660 | 530 |
| (^{2,Me,tBu}Salen)Sn(OtBu)₂ | 1 | 525 | 195 | 530 | 200 |
| | 0.5 | 740 | 205 | 790 | 215 |
| | 0.2 | 860 | 250 | 885 | 245 |
| | 0.1 | 1100 | 240 | 1050 | 260 |
| (^{2,tBu,tBu}Salan)Sn(OtBu)₂ | 1 | 250 | 130 | 245 | 170 |
| | 0.5 | 405 | 165 | 440 | 205 |
| | 0.2 | 590 | 215 | 620 | 220 |
| | 0.1 | 855 | 220 | 930 | 265 |
| (^{2,Me,tBu}Salan)Sn(OtBu)₂ | 1 | 155 | 100 | 220 | 110 |
| | 0.5 | 175 | 115 | 240 | 125 |
| | 0.2 | 295 | 155 | 340 | 175 |
| | 0.1 | 490 | 255 | 580 | 310 |
| (^{tBu,tBu}NTMTP)Sn(OiPr) | 1 | 525 | 310 | 570 | 325 |
| | 0.5 | 615 | 345 | 690 | 420 |
| | 0.2 | 735 | 335 | 780 | 385 |
| | 0.1 | 895 | 315 | 945 | 340 |
| (^{Me,Me,tBu}IP)Sn(OtBu)₂ | 1 | 315 | 240 | 510 | 260 |
| | 0.5 | 370 | 255 | 600 | 285 |
| | 0.2 | 465 | 450 | 735 | 480 |
| | 0.1 | 520 | 530 | 800 | 550 |
| (^{Me,tBu,tBu}IP)Sn(OtBu)₂ | 1 | 670 | 310 | 735 | 345 |
| | 0.5 | 800 | 340 | 880 | 415 |
| | 0.2 | 1100 | 390 | 1135 | 420 |
| | 0.1 | 1220 | 480 | 1280 | 485 |
| (^{Me,Me,Me}IP)Sn(OtBu)₂ | 1 | 420 | 255 | 410 | 250 |
| | 0.5 | 455 | 270 | 440 | 280 |
| | 0.2 | 630 | 320 | 850 | 355 |
| | 0.1 | 765 | 375 | 990 | 385 |
| (^{Ph,Me,Me}IP)Sn(OtBu)₂ | 1 | 495 | 220 | 435 | 225 |
| | 0.5 | 575 | 285 | 500 | 240 |
| | 0.2 | 735 | 415 | 610 | 390 |
| | 0.1 | 830 | 515 | 765 | 470 |
| (^{Ph,tBu,tB}IP)Sn(OtBu)₂ | 1 | 660 | 300 | 710 | 310 |
| | 0.5 | 775 | 340 | 860 | 410 |
| | 0.2 | 1160 | 420 | 1200 | 500 |
| | 0.1 | 1260 | 415 | 1320 | 525 |
| (^{Ph,Me,tBu}IP)Sn(OtBu)₂ | 1 | 355 | 215 | 360 | 240 |
| | 0.5 | 380 | 230 | 390 | 250 |
| | 0.2 | 810 | 265 | 780 | 270 |
| | 0.1 | 975 | 350 | 1020 | 345 |
| (^{tBu,tBu}HEAP)₂Sn | 1 | 860 | 390 | 800 | 385 |
| | 0.5 | 1980 | 395 | 1860 | 400 |
| | 0.2 | 2100 | 380 | 2100 | 430 |
| | 0.1 | 2400 | 350 | 2340 | 430 |
| (^{Me,tBu}HEAP)₂Sn | 1 | 420 | 230 | 410 | 255 |
| | 0.5 | 500 | 255 | 450 | 320 |
| | 0.2 | 680 | 270 | 760 | 350 |
| | 0.1 | 1020 | 425 | 1180 | 610 |
| (^{tBu,tBu}HEIP)₂Sn | 1 | 760 | 355 | 810 | 430 |
| | 0.5 | 840 | 400 | 885 | 390 |
| | 0.2 | 1380 | 495 | 1320 | 540 |
| | 0.1 | 1740 | 545 | 1860 | 615 |
| (^{tBu,tBu}HEIP)₂Sn | 1 | 930 | 180 | 1020 | 185 |
| | 0.5 | 1065 | 195 | 1380 | 205 |
| | 0.2 | 1440 | 175 | 1620 | 200 |
| | 0.1 | 1680 | 240 | 1920 | 295 |
| (^{Me,Me}HEIP)₂Sn | 1 | 190 | 100 | 200 | 110 |
| | 0.5 | 210 | 120 | 300 | 175 |
| | 0.2 | 315 | 155 | 390 | 195 |
| | 0.1 | 505 | 210 | 560 | 235 |
| (^{tBu,tBu}BPMA)₂Sn | 1 | 280 | 165 | 305 | 175 |
| | 0.5 | 315 | 195 | 345 | 185 |
| | 0.2 | 465 | 210 | 440 | 205 |
| | 0.1 | 540 | 270 | 665 | 245 |
| (^{Me,tBu}BPMA)₂Sn | 1 | 240 | 125 | 260 | 145 |
| | 0.5 | 580 | 250 | 1200 | 250 |
| | 0.2 | 1140 | 730 | 1320 | 705 |
| | 0.1 | 1560 | 740 | 1740 | 720 |

**Table 2: Characterization of selected catalysts¹⁾**

| Catalyst | Solubility ²⁾ | | | | Catalyst effect ³⁾ | | Air stability ⁴⁾ | Latency |
|---|---|---|---|---|---|---|---|---|
| | Alkanes | THF | PhMe | CH₂Cl₂/CHCl₃ | 65°C | 90C | | |
| 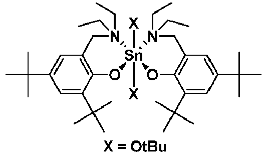 | ++ | +++ | +++ | +++ | 5.8 | 2.7 | good | yes |
| 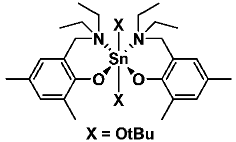 | + | +++ | +++ | +++ | 10.3 | 4.5 | good | yes |
| 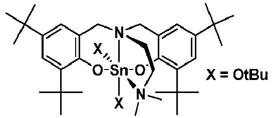 | +++ | +++ | +++ | +++ | 4.3 | 2.0 | good | yes |
| 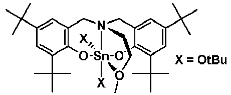 | ++ | +++ | +++ | +++ | 3 | 3.5 | good | yes |
| 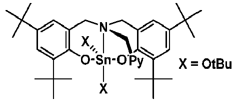 | ++ | ++ | +++ | +++ | 4.3 | 2.6 | good | yes |
| | | | | | | | | |
| 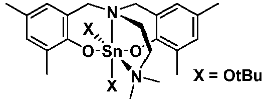 | ++ | +++ | +++ | +++ | 6.5 | 3.8 | good | yes |
| 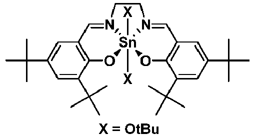 | + | +++ | +++ | +++ | 8.1 | 4.2 | excellent | yes |
| 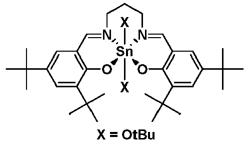 | + | +++ | +++ | +++ | 2.5 | 2.1 | excellent | yes |
| 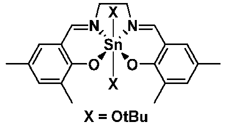 | + | +++ | +++ | +++ | 14.7 | 6.5 | good | yes |
| 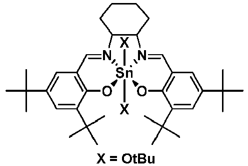 | +- | + | ++ | +++ | 3.5 | 3.7 | good | yes |
| 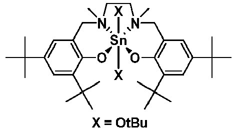 | + | +++ | +++ | +++ | 7 | 3.0 | good | yes |
| 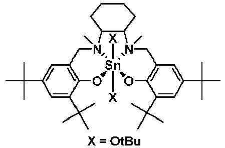 | +- | ++ | +++ | +++ | 3.2 | 2.2 | good | yes |
| 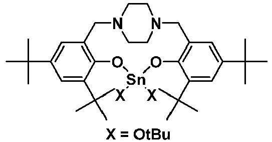 | +- | ++ | +++ | +++ | 5.7 | 2.8 | excellent | yes |
| 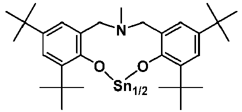 | ++ | +++ | +++ | +++ | 2.4 | 3.8 | good | yes |
| 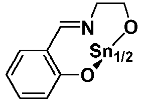 | +- | + | + | +- | 12.3 | 6.3 | good | yes |

| | | | | | | | | |
|---|---|---|---|---|---|---|---|---|
| ¹⁾ Model reaction for polyurethane synthesis is the interaction of equimolar amounts of polyethylene glycol (PEG) - 600 and hexamethylene diisocyanate. Catalysts were used as a concentrated THF solutions. Test temperatures were room temperature, 65°C and 90°C. Reactions were carried under argon and aerobic conditions. Activity measure is based on the gelation time of the mixture. If gelation did not occur at room temperature for two hours at a catalyst concentration of 1 mol%, the catalyst was considered as latent. ²⁾ Solubility: "+++" - higher than 1.0 mol/L, "++" - between 0.1 and 1.0, "+" between 0.01 and 0.1 mol/L, "+-" - less than 0.01 mol/L. ³⁾ At 65°C gelation time with no catalyst is 2580 seconds and at 90°C - 750 seconds. Catalyst effect shows how many times faster the reaction is when catalyst is used. It equals gel time with no catalyst devided by gel time with the 0.5 mol % of the catalyst. ⁴⁾ Stability in air was determined as follows: a portion of the compound was poured onto a dry surface and left in ambient air. If there was no visible change within an hour, such as discoloration or melting into droplets due to hygroscopicity, then the stability of the compound was considered good. Excellent stability was attributed to compounds for which no visible change was found within 24 hours. | | | | | | | | |

### 4. Comparative examples

To illustrate the advantages of the catalysts according to the invention, comparative experiments with alkoxy-based tin complexes, i.e. (DMAE)₂Sn(OtBu)₂ and (DMAEIDE)Sn(OtBu)₂, were performed.

| | |
|---|---|
| 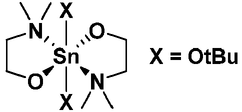 (DMAE)₂Sn(OtBu)₂ | 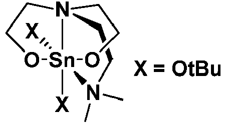 (DMAEIDE)Sn(OtBu)₂ |

The alkoxy-based tin complexes (DMAE)₂Sn(OtBu)₂ and (DMAEIDE)Sn(OtBu)₂ were obtained using procedures similar to the synthesis of the phenoxy-complexes. These complexes are stable under dry conditions. However, they are rather hygroscopic. Powders poured on a dry surface in moist air change their appearance within half an hour, which indicates decomposition. Dissolution in a wet organic solvent instantly leads to the decomposition of compounds.

Contrary, the analogous phenoxy-type compounds (^{Me,tBu,tBu}IP)Sn(OtBu)₂ and (^{Me,tBu}BPBA)Sn(OtBu)₂ exhibit low hygroscopicity. There are no visible changes after staying in moist air at least in an hour. Dissolution in moist organic solvents does not lead to significant decomposition. Of special stability are complexes based on tetradentate Salen and Salan type ligands such as:

| | |
|---|---|
| 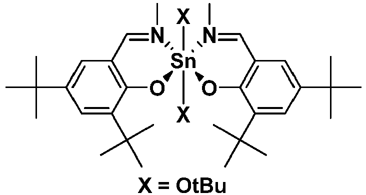 (^{Me,tBu,tBu}IP)Sn(OtBu)₂ | 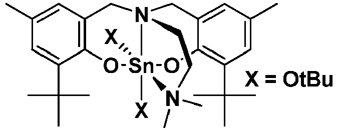 (^{Me,tBu}BPBA)Sn(OtBu)₂ |
| 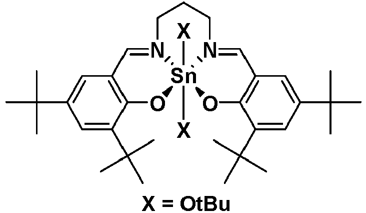 (^{3,tBu,tBu}Salen)Sn(OtBu)₂ | 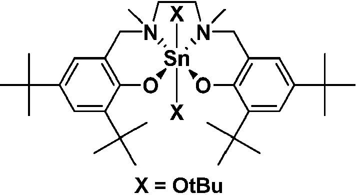 (^{2,tBu,tBu}Salan)Sn(OtBu)₂ |

As shown in Fig. 3, catalytic tests (out analogously to the above-mentioned experiments shown in table 1) reveal significant improvement of catalyst properties upon transition from alkoxy- to phenoxy-type complexes.

Specifically, (DMAE)₂Sn(OtBu)₂ exhibit high activity under dry argon leading to gel time of 230 s at 65ºC and 150 s at 90ºC at 1 mol % concentration (Table 3). However, under air the activity significantly reduces. At 1 mol% concentration the gel time increases from 230 s to 540 s at 65ºC, and from 150 s to 280 s at 90ºC. Moreover, at lower concentration of 0.1 mol%, which is especially relevant for industrial use, gel time for (DMAE)₂Sn(OtBu)₂ is the same as for no catalyst. The same situation is for (DMAEIDE)Sn(OtBu)₂.

Contrary, there is only minor changes in activity at high and low catalyst concentrations for phenoxy-complexes (^{Me,tBu,tBu}IP)Sn(OtBu)₂ and (^{Me,tBu}BPBA)Sn(OtBu)₂. Such results can be rationalized as follows: phenoxy-complexes are more stable, they provide catalytic effect at high and low concentrations both under dry argon and in air. Alkoxy-complexes exhibit higher activity under dry argon, but they tend to decompose under moist air. Due to decomposition, such complexes do not exhibit catalytic performance at low concentrations, relevant for industrial utilization.

**Table 3: Comparative catalytic tests**

| Catalyst | c, % mol. | Gelation time | | | |
|---|---|---|---|---|---|
| | | Under argon | | On air | |
| | | t, s (65ºC) | t, s (90ºC) | t, s (65ºC) | t, s (90ºC) |
| | | | | | |
| No catalyst | - | 2580 | 750 | 2580 | 750 |
| | | | | | |
| (DMAE)₂Sn(OtBu)₂ | 1 | 230 | 150 | 540 | 280 |
| | 0.1 | 410 | 185 | 2580 | 750 |
| | | | | | |
| (DMAEIDE)Sn(OtBu)₂ | 1 | 555 | 215 | 1120 | 410 |
| | 0.1 | 1130 | 435 | 2580 | 750 |
| | | | | | |
| (^{Me,tBu,tBu}IP)Sn(OtBu)₂ | 1 | 670 | 310 | 735 | 345 |
| | 0.1 | 1220 | 480 | 1280 | 485 |
| | | | | | |
| (^{Me,tBu}BPBA)Sn(OtBu)₂ | 1 | 435 | 230 | 460 | 240 |
| | 0.1 | 1065 | 365 | 1090 | 390 |
| | | | | | |

## Claims

1. Tin catalyst for polyurethane synthesis, the catalyst having a structure according to the following formula (I):
SnX¹ₙ₁X²ₙ₂(L¹)ₙ₃(L²)ₙ₄ (I)
whereby:
each X¹ and each X² independently of each other stands for an anionic ligand, in particular a monovalent anionic ligand, especially selected from halides, hydroxides, oxygen, sulfur, alcoholates, thiolates and/or carboxylates, optionally with a saturated or unsaturated, cyclic or acyclic, branched or unbranched, substituted or unsubstituted hydrocarbon residue, whereby the hydrocarbon residues may be interrupted by heteroatoms;
n 1 and n2 independently of each other is 0, 1 or 2; especially the sum of n 1 and n2 is 0, 1 or 2;
each L¹ and each L² independently of each other stand for a polydentate chelating ligand having form 6 - 50 carbon atoms, and
at least one phenoxy group forming a covalent Sn-O bond, especially 2, 3 or 4 phenoxy groups each forming a covalent Sn-O bond;
at least one amine and/or imine group, in particular forming a coordination bond with Sn, especially 2 amine and/or imine group each forming a coordination bond with Sn;
n3 is 1 or 2 and n4 is 0, 1 or 2;
and whereby X¹, X², L¹ and L² are chemically different from each other.

2. Tin catalyst according to claim 1, whereby the chelating ligand L¹ and/or L² comprises:
- 3 phenoxy groups each forming a covalent Sn-O bond and 1 amine or imine group forming a N → Sn coordination bond; or
- 2 phenoxy groups each forming a covalent Sn-O bond and 2 similar amine or imine groups each forming an N → Sn coordination bond; or
- 2 phenoxy groups each forming a covalent Sn-O bond, 1 amine or imine group forming a N → Sn coordination bond, and 1 alkoxy group or 1 different amine group forming an O → Sn or an additional N → Sn coordination bond; or
- 2 phenoxy groups each forming a covalent Sn-O bond and 1 amine or imine group forming an N → Sn coordination bond; or
- 1 phenoxy group forming a covalent Sn-O bond and 1 amine or imine group forming an N → Sn coordination bond.

3. Tin catalyst according to any of preceding claims, whereby n2 = n4 = 0.

4. Tin catalyst according to any of preceding claims, whereby the at least one amine group of the chelating ligand L¹ and/or L² is a secondary and/tertiary amine group.

5. Tin catalyst according to any of preceding claims, whereby the at least one imine group of the chelating ligand L¹ and/or L² is a secondary imine, especially a secondary aldimine and/or secondary ketamine.

6. Tin catalyst according to any of preceding claims whereby the chelating ligand L¹ and/or L² is a substituted or unsubstituted salen ligand; or a substituted or unsubstituted salalen ligand; or a substituted or unsubstituted salan ligand.

7. Tin catalyst according to any of preceding claims whereby the chelating L¹ and/or L² comprises a structure according to the formula O-Ph-Y whereby O-Ph or Ph-O stands for substructure with the following formula (II): 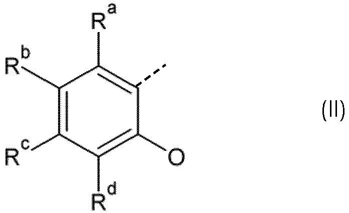 whereby
each R^{a}, R^{b}, R^{c} and R^{d} independently of each other stands for H, one or more heteroatoms, a C1 - C10 alkyl group, especially a C1 - C4 alkyl group, whereby the alkyl may optionally comprise one or more heteroatoms; the heteroatoms in particular are selected from nitrogen, oxygen, phosphor, sulfur, or a group of these heteroatoms, e.g. -NO₂;
Y stands for one of the following definitions:
-N(Ph-O)₂ or -R1-N(Ph-O)₂
-C(R2)=N-R3-N=C(R2)-Ph-O
-C(R2)(R4)-N(R2)-R3-N(R2)-C(R2)(R4)-Ph-O 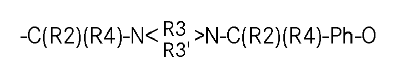
-C(R2)(R4)-N(R5)-C(R2)(R4)-Ph-O
-C(R2)(R4)-N(R2)-R1-O or -C(R2)=N-R1-O
-C(R2)(R4)-N(R2)-C(R2)(R4)-Ph-O
-N=C-Ph-O
-C(R2)(R4)-N(R2)(R4)
-C(R2)=N(R2) where
R1 = C1 - C4 alkylene group;
R2 independently of each other is H or C1 - C4 alkyl;
R3, R3' = C2-C20 alkylene group, cycloalkylene group, arylene group or aralkylene group;
R4 independently of each other is H or C1 - C4 alkyl;
R5 = -B-D or picolydene, where D = -N(R2)₂ or -OR2.

8. Tin catalyst according to any of preceding claims whereby the catalyst is a mononuclear tin complex.

9. Tin catalyst according to any of preceding claims, whereby two of R^{a}, R^{b}, R^{c} and R^{d} stand for H and the other two of R^{a}, R^{b}, R^{c} and R^{d} are not H, preferably methyl, t-butyl or NO₂.

10. Tin catalyst according to any of preceding claims, whereby the other two of R^{a}, R^{b}, R^{c} and R^{d} that are not H relative to each other form a meta-substitution pattern.

11. Tin catalyst according to any of preceding claims, whereby the anionic ligand X¹ and/or X² stands for O-R or OOC-R with R = C₁ - C₁₀ alkyl group, in particular a C₁ - C₄ alkyl group, especially a tert-butyl group or a methyl group.

12. Tin catalyst according any of preceding claims, whereby the catalyst has a structure according to the following formulas (III), (IV) (V), (VI), (VII), (VIII), (IX), (X), (XI), (XII), (XIII), and/or (XIV): 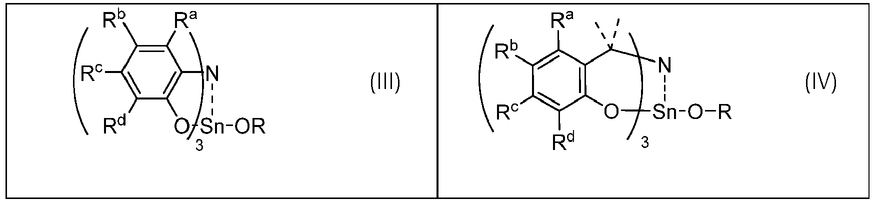 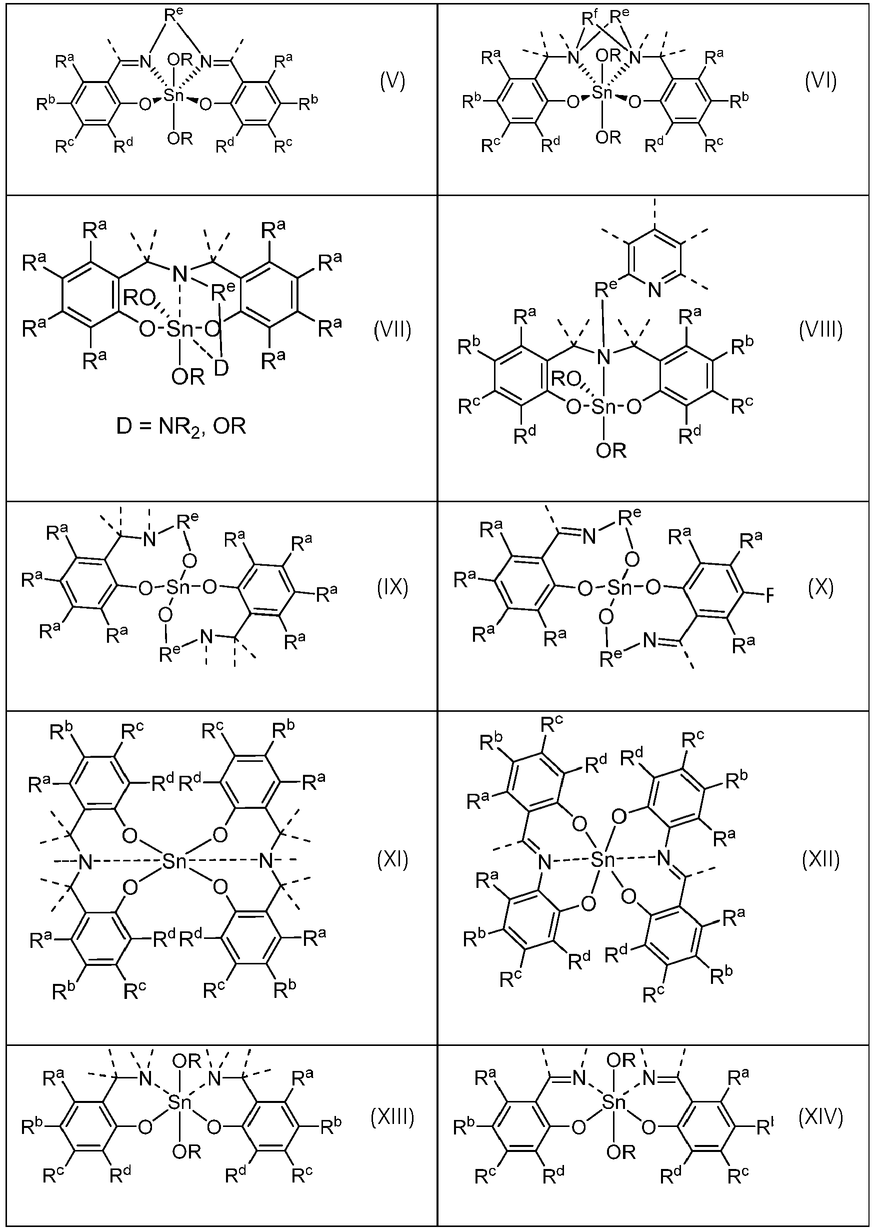 whereby
each R independently of each other is a C₁ - C₁₀ alkyl group, in particular a C₁ - C₄ alkyl group, especially a tert-butyl group or a methyl group;
each R^{a}, R^{b}, R^{c} and R^{d} independently of each other stands for H, one or more heteroatoms, a C1 - C10 alkyl group, especially a C1 - C4 alkyl group, whereby the alkyl may optionally comprise one or more heteroatoms; the heteroatoms in particular are selected from nitrogen, oxygen, phosphor, sulfur, or a group of these heteroatoms, e.g. -NO₂;
each R^{e} and R^{f} independently of each other stands for a C₁ - C₁₀ alkylene group, especially a C₁ - C₂ alkylene group;
and each of the dashed bonds with free ends independently of each other stands for H, one or more heteroatoms, a C₁ - C₂₀ alkyl group, a C₆ - C₂₀ cycloalkyl group, a C₆ - C₂₀ alkaryl or aryl group, whereby the alkyl group, cycloalkyl group, aryl group and aralkyl group may optionally comprise one or more heteroatoms; the heteroatoms in particular are selected from nitrogen, oxygen, phosphor, sulfur, or a group of these heteroatoms, e.g. -NO₂.

13. Method for producing a polyurethane product whereby at least one polyisocyanate and at least NCO-reactive compound, especially at least one polyol, is reacted in the presence of a tin catalyst according to any of preceding claims in a polyaddition reaction.

14. Composition comprising at least one polyisocyanate and at least NCO-reactive compound, especially at least one polyol, and a tin catalyst according to any of claims 1-12.

15. Use of a tin catalyst according to any of claims 1 - 12 as a catalyst in the production or synthesis of polyurethanes, especially for the catalyzing the polyaddition reaction of polyisocyanates and NCO-reactive compound, especially polyols.
